Europäisches Patentamt

European Patent Office

Office européen des brevets

(19)

(11) Publication number: **0 149 858 B1**

## (12) EUROPEAN PATENT SPECIFICATION

(45) Date of publication of patent specification: **06.03.91**

(21) Application number: **84201484.7**

(22) Date of filing: **27.04.81**

(51) Int. Cl.⁵: **G06F 9/30**

(60) Publication number of the earlier application in accordance with Art.76 EPC: **0 039 227**

(54) Data processing system.

(30) Priority: **25.04.80 US 143982**
**25.04.80 US 143651**
**25.04.80 US 143681**

(43) Date of publication of application:
**31.07.85 Bulletin 85/31**

(45) Publication of the grant of the patent:
**06.03.91 Bulletin 91/10**

(84) Designated Contracting States:
**CH DE FR GB IT LI NL SE**

(56) References cited
**GB-A- 2 024 475**
**GB-A- 2 025 097**
**US-A- 3 657 705**
**US-A- 3 938 096**
**US-A- 3 976 976**

**IBM TECHNICAL DISCLOSURE BULLETIN, vol. 21, no. 1, June 1978, pages 201,202, New York, US; J.C. DESAUTELS et al.: "New instruction and extended instruction handling"**

(73) Proprietor: **DATA GENERAL CORPORATION**
**Route 9**
**Westboro Massachusetts 01581(US)**

(72) Inventor: **Alsing, Carl J.**
**35 Front Street**
**Hopkington Massachusetts 01748(US)**
Inventor: **Henry, Carl**
**2316 Shakespeare Street**
**Houston Texas(US)**
Inventor: **Holberger, Kenneth D.**
**21 Institute Road**
**N Grafton Massachusetts 01536(US)**
Inventor **Holland, Charles J.**
**61 Maple Lane**
**Northboro Massachusetts 01531(US)**
Inventor **Staudaher, Steven M.**
**10 Monroe Street**
**Northboro Massachusetts 01532(US)**
Inventor **Veres, James E.**
**8 Greenview Street, 208**
**Framingham Massachusetts 01701(US)**

Note Within nine months from the publication of the mention of the grant of the European patent, any person may give notice to the European Patent Office of opposition to the European patent granted Notice of opposition shall be filed in a written reasoned statement It shall not be deemed to have been filed until the opposition fee has been paid (Art. 99(1) European patent convention)

ELECTRONICS, vol. 48, no. 3, 6th February 1975, pages 114,115, New York, US; C.W. MOSER Jr.: "Increasing an instruction set without increasing word length"

SIEMENS REVIEW, vol. 44, no. 1, 1977, pages 14-19, Munich, DE; H. DARILEK et al.: "Structure and properties of the central processing unit of the 340 process computer"

PROCEEDINGS OF THE SPRING JOINT COMPUTER CONFERENCE, Atlantic City, NJ, US, 18th-20th May 1971, pages 325-336, N.J. Afips Press, Montvale, US; H. KATZAN Jr.: "Storage hierarchy systems"

ELECTRONICS, vol. 53, no. 12, 22nd May 1980, pages 130-137, New York, US; C.J. ALSING et al.: "Minicomputer fills mainframe's shoes"

COMPUTER DESIGN, vol. 20, no. 1, January 1981, pages 111-120, Concord, US; S. WALLACH et al.: "32-Bit minicomputer achieves full 16-bit compatibility"

. STUHLMUELLER: "16 Bit Generation, Z 8000, Aufbau und Anwendung 1980, te-wi Verlag, München (DE), pp. 2-12 to 2-17.

Inventor: Wallach, Steven
5 Lomes Circle
Framingham Massachusetts 01730(US)
Inventor: Ziegler, Michael L.
166 Ivy Lane
Whitinsiville Massachusetts 01588(US)

(74) Representative: Pears, David Ashley et al
REDDIE & GROSE 16 Theobalds Road
London WC1X 8PL(GB)

## Description

This Invention relates generally to a data processing system of the kind defined in the introductory part of claim 1 and, more particularly, to such a system which can handle 32 bit logical addresses at a size and cost which is not significantly greater than that of systems which at present handle only 16 bit logical addresses.

This application is one of four divisional applications all divided out of our parent application 81301836.3 The numbers and publication numbers of the other three divisional applications are as follows:

84201482.1     Published as 0 150 522

84201483.9     Published as 0 150 523

84201481.3     Published as 0 150 521

The parent application was published under the number 0 039 227 and reference should be made to that publication for a complete description of the whole system.

Data processing systems available at present and which are often referred to as belonging to the "mini-computer" class normally handle logical addresses and data words which are 16 bits in length. As used herein, the tea "logical" address, sometimes referred to by those in the art as a "virtual" address, is used to denote an address that is programmer visible, an address which the programmer can manipulate. In contrast, a "physical" address is the address of a datum location in the main memory of a data processing system. operating data processing systems utilize appropriate translation tables for converting logical addresses to physical addresses.

16-bit mini-computers generally use only 16-bit physical memory addresses and so suffer a limitation in the size of memory they can address. One solution to the requirement for memory expansion is described by UK patent application GB-A-2025097 which describes an address generating device for extending the length of logic addresses, for a 16-bit computer, from 16 to 16 + M bits, where 16 + M is preferably between 20 and 28. The extension is achieved, with no necessity for program modification, by means of an index register of memory sub-addresses for translating logical addresses to physical memory addresses. Similar page table techniques for address translation are disclosed in the 'Proceedings of the Spring Joint Computer Conference'; Atlantic City, NJ, US, 18-20 May 1971, pp. 325-336. AFIPS Press, Montvale, US. KATZAN: "Storage Heirarchy Systems" and patent application US-A-3 938 096.

Another approach to the problem of making a computer system operate flexibly with more than one type of address space is exemplified by Z8000 processors as described by P. Stuhlmuller, in "16 bit Generation Z8000: Aufbau und Anwendung". ed.te-wi Verlag GmbH, Munchen, DE, 1980 at pages 2-12 to 2-17 This document describes specifically the Z8001 processor which can operate in two address spaces. i.e. a segmented 8 Mb address space and a non-segmented 64 kb address space. The address space to be used is selected by the SEG bit 15 in the flag and control word register. A complete segment address requires 4 bytes. 2 for the segment and 2 for the offset whereas only 2 byte adresses are required in non-segmented mode

16-bit mini-computers have been successfully used in many applications and provide a high degree of data processing capability at reasonable cost. Examples of such systems which have found favour in the marketplace are those known as the "Nova" and "Eclipse" systems designed and developed by Data General Corporation of Westboro Massachusetts The Nova and Eclipse family of mini-computers are described in the publications available from Data General Corporation which are listed as the first four items in Appendix A incorporated as part of this specification.

The Nova system provides a logical address space of 64 kilobytes (the prefix "kilo" more accurately represents 1024. or $2^{10}$) and the Eclipse system also provides a logical address space of 64 kilobytes. both being proven systems for handling many applications at reasonable cost

Improved mini-computer systems are currently being developed some of which use for example a 32-bit data path and can therefore fully employ 32-bit addressing. The logical address space is thus greatly increased. permitting much more memory to be addressed and a larger set of instructions to be used by the system The larger instruction set may include for example substantially all of the basic instructions presently available on the prior Nova and Eclipse systems as well as a large number of additional instructions The additional instructions may of course be longer than or extended from the prior instructions so as to take advantage of the increased logical address space. and may of course use or generate 32-bit operands or addresses

The invention provides a data processing system of the type defined above and characerised as in the characterising portion of claim 1

The preferred embodiment of the invention handles thirty-two bit logical addresses which can be derived from either sixteen bit or thirty-two bit addresses. Unique means are provided for translating the thirty-two bit logical addresses. The system uses hierarchical memory storage, wherein information is stored in different segment storage regions (rings), access to the rings being controlled in a privileged manner so that access to different rings are governed by different levels of privilege.

Macro-instructions are decoded using a programmable read-only-memory means which is capable of decoding instructions of two types, i.e. instructions from a first basic instruction set or instructions from a second extended instruction set, the instruction which is being decoded containing in itself selected bit patterns which uniquely identify which type of instruction is to be decoded.

The invention will be described in more detail, by way of example, with reference to the accompanying drawings, in which:

Figure 1 shows a block diagram of the overall data processing system of the invention;

Figure 2-shows a block diagram of the system cache unit of the system of Figure 1;

Figure 3 shows a block diagram of the bank controller unit of the system of Figure 1;

Figure 4 shows a block diagram of a module of the main memory unit of the system of Figure 1;

Figures 5 to 7 show block diagrams which represent the address translation unit of the system of Figure 1;

Figures 8 and 9 illustrate address translation operations implemented by the address translation unit of Figures 5 to 7;

Figures 10 to 15 show block diagrams which represent the instruction processor unit of the system of Figure 1;

Figures 15 to 45 show specific logic circuitry for implementing the instruction processor unit of Figures 9 to 14; and

Figure 46 shows a block diagram of a representative arithmetic logic unit of the system of Figure 1.

In connection with the above figures, where a particular figure requires more than one sheet of drawings. each subsequent sheet is designated by the same figure number with sequential letters appended thereto.


General Description

Before describing a specific implementation of the system of the invention. it is helpful to discuss the overall concept thereof in more general terms so that the characteristics that are desired can be described and the description of a particular implementation can be better understood.

A significant aspect of the system of the invention. as discussed above. in the size of the logical address space which is available For purposes of convenience in distinguishing between the previous NOVA and Eclipse systems. the extended system as discussed herein will sometimes be referred to as the "Eagle" system In the Eagle system. for example. the logical address space can be as high as 4 gigabytes (more accurately the prefix "giga" is 1.073.741.824 or $2^{3c}$ . so that 4 gigabytes is. more accurately 4.294.967.296) where a byte is defined as having 8 bits of precision As used hereinafter. a "word" is defined as having 16 bits of precision (i e equivalent to 2 bytes) and a "double-word" as having 32 bits of precision (equal to two words. or four bytes) Because of the increased logical address space the overall system is able to support an instruction set which is larger than that supported by a Nova system or an Eclipse system having for example a much smaller logical address space The overall capability of the system can be best understood by those in the art by examination of the set of the extended instructions which are capable of being performed by the system The complete instruction set for the computer described herein is set forth in the last publication listed in Appendix A and available from Data General corporation The particular instructions which are of interest to the subject matter of the invention are set forth in Appendix B incorporated as a part of this specification Such instruction set includes the extended instruction set (which can be referred to as the Eagle instruction set) and the Eclipse C-350 instruction set as well as the Nova instruction set. all of which are capable of being handled by the system. the latter two instruction sets being already disclosed as part of the above publications All Nova and Eclipse instructions are executed according to the principles and specifications presented in the above-referenced publications

The binary encodings of the extended instructions which are supported by the system of the invention are shown in Appendix B A significant difference exists between the systems having extended instructions in accordance with the invention and systems having extended instructions which have been suggested by others In any system in which an extended instruction set effectively represents a "super" set of a previous. or original. set of instructions. all of the instructions must be suitably decoded for machine operations Normally. such systems utilize a decoding sub-system for decoding both the original instruction set and for decoding the extended instruction set The decoder operates so as to permit the decoding of

4

EP 0 149 858 B1

only one of the instruction sets at a time, the original instruction set and the extended instruction set being in effect, mutually exclusive. In order to determine which instruction is to be decoded, a unique instruction must be use to set a "mode bit", i.e., a single bit which in one state indicates that the original instruction set is to be decoded and in the other state indicates that the extended instruction set is to be decoded. However, in neither case can the decoding subsystem be made available to decode either of the both sets simultaneously. Such approach inserts a limitation on the overall machine operaton since it is never possible to simultaneously decode instructions from different instruction sets of an overall super set thereof. The Z8001 processor described above exemplifies this system, the SEG bit 15 in the flag and control word register corresponding to the "mode bit".

The system of the invention, however, avoids such mutual exclusivity and is arranged to be capable of decoding instructions from either set or both sets at any one time. A decoder PROM (programmable read-only-memory) system, is utilized for decoding both the extended Eagle instruction set and the original or basic instruction sets as, for example, the original Nova and Eclipse instruction set. Each instruction to be decoded includes the information which determines which decoder is to be utilized, such determination thereby being inherently carried in each instruction word which is to be decoded. As seen in Appendix B, for example, the information is contained in bits 0 and 12-15. Thus, in the extended Eagle instruction set, bit 0 is always a "1" while bits 12-15 are always "1001" for all instructions of the extended instruction set except for those extended instructions which use a "1" in bit 0 and the encoding "011000" in bits 10-15 and a "1" in bit "0", a "0" in bit 5, and the encoding "111000" in bits 10-15. On the other hand, the original Eclipse instructions are such that bit 0 is O and bits 12-15 are "1000". Further, in cases where the instruction does not carry either the Eagle coded bits or the Eclipse coded bits, such instruction is interpreted as a NOVA instruction.

Because each instruction carries with it an identification as to which instruction set the instruction belongs, the system operates to decode instructions on a non-mutually exclusive basis.

In order to support the extended operations of the system, the configuration thereof requires an augmentation of the registers which were previously available in the original system of which the new system is an extension. The following registers are utilized in the system and are discussed in more detail later with respect to the Particular implementation described in connection with specific figures below.

The register set includes fixed point registers. floating point registers, stack management registers and memory management registers.

Fixed Point Registers

The system includes four fixed Point accumulators (ACC 0-3), one program counter (PC) and one processor status register (PSR) Each of the accumulators has 32 bit precision which can accomodate (1) a 16 bit operand which can be sign extended to 32 bits; (2) a 15 bit address which can be zero extended to 28 bits. the higher order 3 bits of the program counter being appended thereto together with a zero bit. all of which can be appended for storage in the accumulator. or (3) an 8 bit byte which can be zero extended to 32 bits before storage in the accumulator

The program counter has 31 bits of precision bits 1-3 identifying one of 8 current memory rings (discussed in more detail below) and bits 4-31 of which accomodate an address offset for instruction addresses For Eclipse operation for example. which normally requires only a 15 bit program counter. the bits 1-3 identify the current memory ring as in a 31 bit extended operation while the 15 least significant bits 17-31 represent the 15 bit Eclipse program counter and bits 4-16 are all zeros

The processor status register is a 16 bit register which provides an overflow mask bit which if set will result in a fixed point overflow Additionally the register includes a fixed point overflow indicator bit and a bit which indicates that a micro interrupt has occurred Other bits in the register are reserved and are thus available for potential future use.

Floating Point Registers

The system includes four floating point accumulators (FPAC 0-3) and one floating point status register (FPSR). Each of the floating point accumulators contains 64 bits of precision which is sufficient to wholly contain a double precision floating point value. The floating point registers of the extended system are identical to the Eclipse floating point accumulators (FPAC) which are discussed in the aforementioned publications.

5

The floating Point status register also has 64 bits of precision, 32 bits of which act as the floating point program counter. In the event of a floating Point fault the floating point program counter bits define the address of the floating point instruction that caused the fault. Four other bits are utilized, respectively, to indicate an exponent overflow condition, an exponent underflow condition, a divide-by-zero condition and a mantissa overflow condition. Another counter bit will result in a floating point fault if any of the above latter four bits are also set. The floating point counter also includes a zero bit and negative bit, as are generally used in status registers, as well as bits for indicating a floating point rounding mode of operation and an interrupt resume operations.

Stack Management Registers

The system of the invention utilizes four 32 bit registers to manage the memory stack, which registers include a stack pointer, a stack limit, a stack base, and a frame pointer. The stack pointer register references the double word entry at the top of the stack. when a "push" operation occurs, all the bits of the stack pointer are incremented by 2 and the "pushed" object is placed in the double word addressed by the new value of the stack pointer. In a "pop" operation the double word addressed by the current value of the stack pointer is placed in a designated register and all 32 bits of the stack pointer are then decremented by 2.

The frame pointer register references the first available double word minus two in the current frame. The stack limit contains an address that is used to determine stack overflow. After any stack operation pushes objects onto the stack, the stack pointer is compared to the stack limit. If the stack pointer is greater than the stack limit a stack fault is signaled. The stack base contains an address that is used to determine the stack underflow. After any stack operation that pops objects from the stack. the stack pointer is compared to the stack base. If the stack pointer is less than the stack base a stack fault is signaled.

Memory Management Registers

Eight registers are used to manage memory, such registers each being designated as a segment base register (SBR) having 32 bits of precision. the memory being divided into eight segments. or rings. thereof The SBR's in the system described herein are formed as part of scratch pad registers on an address translation unit (ATU) of the system. as discussed in more detail below. One bit of each SBR indicates whether or not the segment associated therewith can be referenced (i.e. is there a valid or an invalid reference to such segment) Another bit indicates the maximum length of the segment offset field i e whether or not the reference is a one level page table or a two level page table. as explained in more detail below A third bit of each segment base register indicates whether a Nova Eclipse instruction for loading an effective address of a Nova Eclipse I 0 instruction is being executed Another bit represents a "protection" bit which indicates whether or not an I O instruction can be executed or whether the execution thereof would be a violation of the protection granted to such segment Nineteen of the bits contain a physical address which identifies the physical address in the memory of the indicated page table Discussions of the addressing of page tables in the memory are presented in more detail below including a discussion of the memory locations in each segment

Overall System

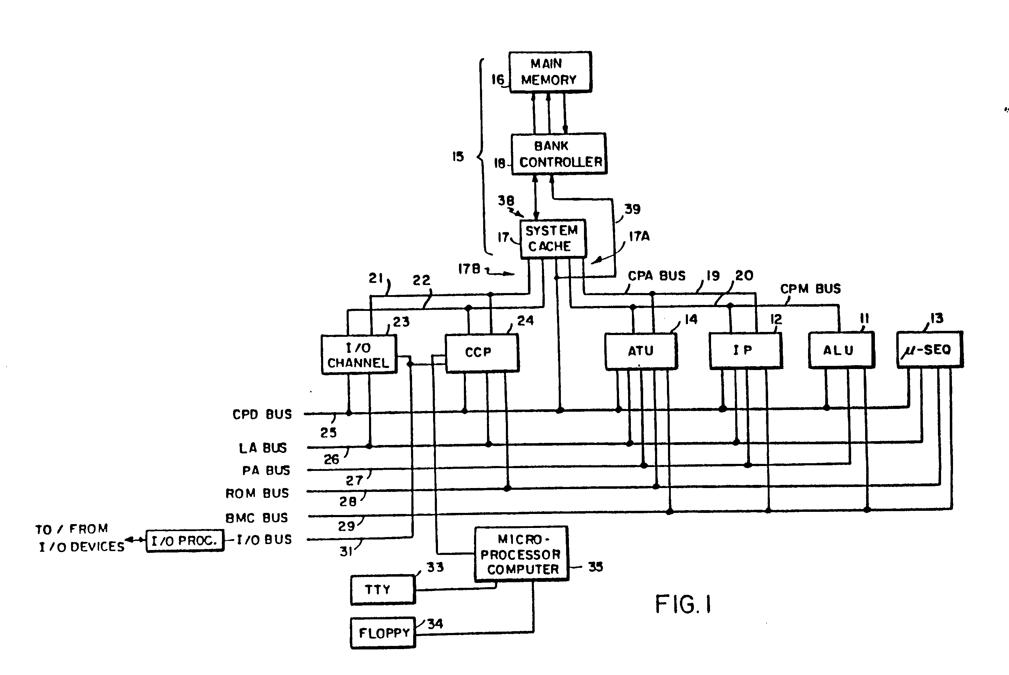

A block diagram of a preferred embodiment of the invention is shown in FIG 1 The central processor portion of the system Comprises an arithmetic logic unit (ALU) 11 an instruction processor unit 12. a Micro-sequencer unit 13 and an address translation unit (ATU) 14 The memory system includes a main memory unit 16. an auxiliary cache memory unit 17 and a memory control unit identified as bank controller unit 18 A central processor address bus 19 permits the transfer of addresses among the instruction processor unit 12 the address translation unit 14 and the memory system A control processor memory (CPM) bus 20 permits the transfer of instructions and operands among arithmetic logic unit 11. instruction processor unit 12. address translation unit 14 and the memory system 15

I O address bus 21 and I O memory data bus 22 permit the transfers of addresses and data respectively with respect to I O devices via I O channel unit 23. as well as the transfers thereof between the memory system and a console control processor unit 24 Suitable control buses for the transfer of control signals among the various units of the overall system are provided as buses 25-31 described in more detail below. Appropriate teletype and floppy disc, systems 33 and 34, respectively, can be utilized with the system, particularly in the diagnostics mode of operation via console control processor unit 24 by way of a suitable micro processor computer 35.

The inventive aspects of the system to be described herein require a more detailed discussion of the memory system, the address translation unit, the instruction processor unit and the micro sequencer unit. The arithmetic logic unit, the console control processor unit and the I/O channel unit with their associated controls need not be described in detail.

Memory System

In accordance with a preferred embodiment of the invention the memory system comprises up to two megabytes of main memory 16 and, if desired, the system can be expanded even further as, for example, to 4 megabytes. It should be noted that sufficient bits are reserved in the physical address fields so as to allow for system expansion to one billion bytes of memory. The interface between the main memory unit 16 and the remainder of the system is via the dual port cache memory unit 17, data being transferred between the main memory and the cache memory unit in blocks of 16 bytes. The cache memory unit herein will usually be referred to as the "system cache" (SYS CACHE) to distinguish it from a separate cache memory in the instruction processor unit which latter memory will normally be referred to as the "instruction cache" (I CACHE) unit. The system cache unit 17 services CPU requests for data transfers on port 17A of its two ports and services requests from the I/O system at port 17B thereof. CPU data transfers can include "byte-aligned-byte" transfers, "word-aligned-word- transfers, and double word transfers. I/O data transfers can include "word-aligned-word" transfers, "double word-aligned-double word" transfers and 16 byte block transfers.

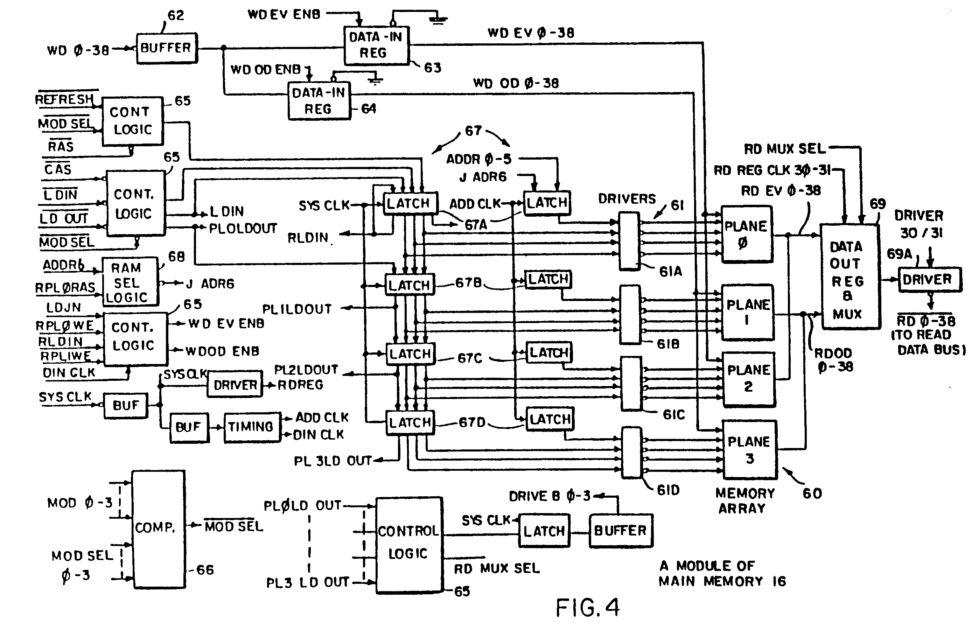

The main memory unit 16 can include from one to eight 256-kilobyte memory modules, as shown in FIG.4. Each memory module contains a memory array of 156 16 K dynamic random access memories (RAMs), organized at each module in the form of four planes 0-3 of 16K 39-bit words each. Each word comprises 32 bits of data and 7 error correction bits, as discussed in more detail below. Memory timing and control for the RAMs of each memory module is accomplished on the memory bank controller board 18. The control signals from the memory bank controller are clocked into a register on each memory module, the outputs thereof driving the "plane-0" RAMs. The outputs from such reigister are clocked a fixed time later into another register which drives the "plane-1" RAMs. Such pipe line operation continues through "plane-2" RAMs and "plane-3" RAMs so that all four planes receive the same control signals at fixed intervals (e.g. 110 nanosecond intervals). resulting in the transfer of a block of four consecutive 39-bit words.

Memory bank controller 18 has three main functions. First of all. it provides an interface between the system cache 17 and the memory modules of the main memory unit 16. Secondly. it performs necessary error checking and correction operation and. thirdly. it controls the refresh operation of the dynamic RAMs on each of the memory modules. The details of the interface between the system cache and the bank controller are discussed in more detail below.

The error checking and correction logic on the bank controller performs single-bit error correction and double-bit error detection using a 7 bit error correction Hamming code as is well known in the art. The 7 check bits generated for each 32 bit data word are stored with such word in the main memory modules. When the word is subsequently read from memory. all 39 bits are decoded to produce a 7 bit pattern of syndrome bits which pattern identifies which. if any. single bit is in error and indicates when more than one bit is in error. When a correctable single-bit occurs. the console control processor 24 is provided with the address and the syndrome bit pattern of the failing bit. The data is thereupon corrected and sent to the system cache after a fixed time delay equal to a system clock period. e.g. 110 nanoseconds in a particular embodiment. in accordance with well-known error correcting operation. the remaining words in the pipe line operation being prevented from transfer until the corrected signal is made available by the use of a suitable inhibit signal identified as the BC ERROR signal.

Substantially immediate correction of single bit errors is desirable so that such errors do not grow into multiple bit errors. A conventional technique can be used in which the corrected data is written back into memory only when it has been read and found to be in error. Two problems arise with such a technique. First of all. the memory locations which are not often read are not often corrected and. secondly. significant time can be wasted in trying to correct a failure if it occurs in a frequently accessed memory location. The system of the invention can avoid such problems by utilizing a separate process for monitoring all of the

7

main memory locations so that each location therein is checked and corrected, if necessary, once every two seconds. Such checking is performed during the memory refresh cycle and does not reduce the availability of the memory to the system. A detailed description of such a technique is disclosed in U.S. Patent Application, Serial No. 1 43 675 and our corresponding British Patent Application 8112082 (Published under Serial No 2 075 730).

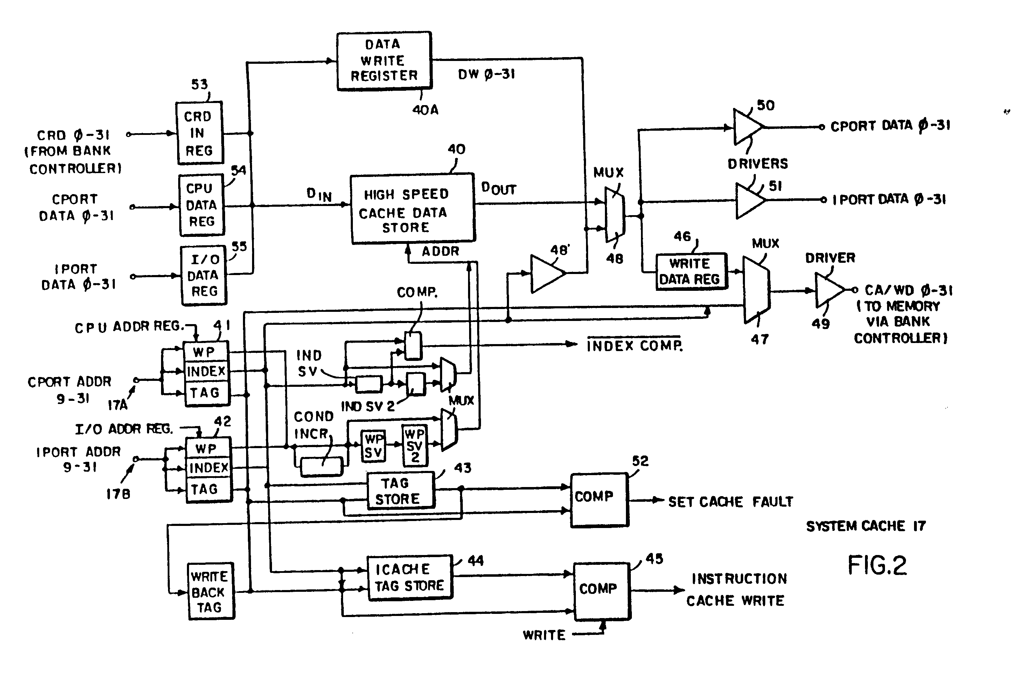

The system cache unit 17 represents the sole connection between the main memory unit 16 and the remainder of the system and consists of a memory system port 38 for connection to the main memory and two requestor ports, 17A and 17B, as discussed above, one intended primarily for handling CPU request and one intended primarily for handling I/O requests. The system cache board also provides a direct access path 39 between the I/O port and the memory system port providing for direct block transfers therebetween. Cache board 17 also includes a 16-kilobyte, direct mapped high speed cache data store 40 having a block size of 16 bytes which can be accessed from either the I/O or the CPU requestor port. Block diagrams of the logic utilized in the system cache unit 17, the bank controller unit 18 and a typical memory module of the main memory unit 16 are shown in FIGS. 2,3, and 4.

As can be seen in FIG. 2, the system cache data store 40 receives all requests for data from the memory other than block transfer requests from the I/O port which are serviced by the main memory directly. In the particular embodiment described, the cache data store receives the data address at the address input of either CPORT 17A or IPORT 17B which address is placed in either CPORT address register 41 or IPORT address register 42. The incoming address includes a Tag portion, an Index portion and a word pointer portion as follows:

| 9 | 18 19 | 28 29 31 |
|---|---|---|
| TAG · | INDEX | WP |

The three least significant bits 29-31 of the cache data store address specify the word pointer. which identifies the desired word within a block of the 16 byte 8 word block of the data store. The remaining bits 9-28 identify the block address which corresponds exactly to the address which would be used to fetch the desired block from the main memory. The latter bits are divided into Tag bits 9-18 and Index bits 19-28 as shown.

The system cache as depicted in FIG.2 includes a "Tag Store Unit 43. Data store 40 is a high speed memory array of 4K x 32 bit words (i.e. 1K 16-byte blocks) and holds a copy of a block of words from main memory. The data store is addressed by the index and word pointer bits of the cache data store address word. the index being a 10-bit address of a block within the data store 40 and the three word pointer bits pointing to the desired word within the selected block. as mentioned above a data store block may be used to buffer any data block of main memory which shares the same index.

The function of the Tag store 43 is to identify which of the many possible blocks from the main memory is buffered in each 16 byte block of the data store 40. Tag store 43 is a high speed array of 1K 12-bit words and is addressed by the 10-bit index portion of the memory address Each 12-bit word contains ten bits which identify the block from the main memory which is buffered in data store 40 When the main memory is 4 megabytes or less. the first two bits of this tag are needed only for future expansion of the main memory capacity and can be zero Bits 10 and 11 are flags to indicate the status of the data Thus a "valid" flag V indicates that the indentifiable data store block contains valid data For example if an I O port operation were to request a block "write" to main memory which modifies the contents of a block which has already been buffered in the data store 40. the valid flag of that block would be reset to indicate that its data is no longer valid

A "modify" flag M indicates that the contents of the data store block have been modified Thus. if a data block is removed from the data store 40 to make room for a new data block from main memory the removed data block is written back to main memory if the modified data flag is set

A second tag store unit 44 is shown on the system cache board which latter tag store is a replica of the instruction cache (ICACHE) tag store which is described later. The ICACHE tag store is used on the system cache board to determine when a write to memory would affect the contents of the instruction cache at the instruction processor When such an effect would occur as indicated by a comparison at comparator 45 of the incoming address and the ICACHE addresses. the system cache alerts the instruction processor by asserting an "instruction cache write" signal. as indicated in FIG 2. to inform the instruction cache (ICACHE) at the instruction processor board of the location of the block which has been so modified

In the operation of the system cache all requests are initially assumed to be "read" requests. since even when a "write" request occurs it is possible that the data to be written will need to be read and modified (a "read-modify-write" operation) before the write operation is to be performed. If the system cache is not busy when a request is received at an input port, the data store 40 and the tag store 43 are accessed simultaneously, using the appropriate portions of the received input address as discussed above. The data from the location in the data store 40 which has been addressed is loaded into the cache write data register 46 via multiplexer 48 if the data transfer is a write into memory operation so that in the next cycle the contents of the write data register 46 can be enabled onto the bus via multiplexer 47 and bus driver unit 49. If the data is a read operation the data output from data store 40 is supplied at the CPORT or IPORT, as required, via multiplexer 48 and driver units 50 and 51, respectively.

The data from the tag store 43 is first examined to determine if the requested data, is, in fact, in the data store 40. The tag portion of the word which is read from the tag store is compared at comparator 52 with the tag portion of the address which has been submitted by the requestor and the valid flag checked to see that it is set. If such comparison is successful (a system cache "hit") the data from data store 40 is the desired data and the requestor is permitted to receive it or to write it into memory. If the comparison fails (a system cache "miss") the data block which has been requested is not in the cache data store 40 and must be brought in from the main memory. Such an occurrence is termed a "cache fault" condition and, when such fault occurs, the requestor is prevented from loading in data until after the fault is resolved.

Once the data is available for the requestor the requestor must signal that it wishes to accept the data and, if the requestor does not do so when the data first becomes available, the read operation will be repeated until the requestor indicates its willingness to accept the data.

Because access to the data in data store 40 requires two system clock cycles to complete, the cache addresses as received from requestors can be "pipe-lined" in a manner such that two accesses can be in progress at any one time. Advantage is taken of this ability to pipe-line access requests by intertwining the accessors of one of the input ports with those of the other input ports. An appropriate clocking signal which has a frequency one-half that of the basic system clock, is used to indicate which requestor port is allowed to access the cache data store at any given time. As a result there is no interference between CPU and I O port accesses except during a cache fault. The only exception is that both I/O and CPU ports are not allowed to be in the process of accessing the same data store block at the same time. An example of the intertwining operation between the ports for a read operation is discussed below. In the particular example described the CPU port requestor does not choose to take the data at the first opportunity so that a read repeat occurs.

| | t0 | t1 | t2 | t3 | t4 | t5 |
|---|---|---|---|---|---|---|
| CPU PORT READ | Address and START Signal on bus. | Tag and Data Stores read. | Data ready. Requestor does not assert RT Signal. | Data Store read again. | Data Ready. Requestor asserts RT Signal and loads data. | |
| IO PORT READ | Idle cycle or end of last access. | Address and START Signal on bus. | Tag and Data Stores read. | Data ready. Requestor asserts RT Signal and loads data. | Idle cycle or start of next access. | |

For a cache write operation, the cache, at the time the memory write access is initiated, assumes that a read-modify-write operation will be performed and accordingly does a read as described above. However, even if the transfer is to be a simple write operation, the tag store information must be read to determine the location at which the incoming data will be written so that in actuality no time is lost in performing a superfluous data store read operation. For a simple write operation, or for the write portion of a read-modify-write operation, the requestor asserts a write transfer (WT) signal to indicate completion of the transfer. Instead of driving the data from the output register onto the memory port 38 the system cache loads an input register 53 with the data which is to be written from the data bus at the end of the cycle and writes it into the data store 40 during the next cycle. If a cache fault results from such a write request, the system cache accepts the data to be written into the input register but does not write it into the data store 40 until after the fault is resolved. An example of a CPU port write request in a manner similar to that discussed above for a read request is shown below

| | t0 | t1 | t2 | t3 | t4 | t5 |
|---|---|---|---|---|---|---|
| CPU PORT WRITE | Address and START and WRITE Signals on bus. | Tag and Data Stores read. | Data ready. Requestor asserts WT Signal and sends data. | Data Store written. | Idle cycle. | |
| IO PORT READ | Idle cycle or end of last access. | Address and START Signal on bus. | Tag and Data Stores read. | Data ready. Requestor asserts RT Signal and loads data. | Idle cycle or start of next access. | |

The examples discussed above show single read or single write operations. It is also possible for a requestor to submit a new address and a START signal along with the read transfer (RT) and/or write transfer (WT) signal, so that consecutive read operations or consecutive write operations from a single port can be performed every two cache cycles (a CPU cycle, for example, is equivalent to two cache cycles) unless a cache fault occurs. However, if a read access is initiated at the same time that a write transfer is performed, the data store 40 cannot be read on the next cycle because it is being written into at that time. When this condition happens, the read operation requires an additional two cache cycles for completion. If the requestor is aware that a read operation is following a write transfer and wishes to avoid a wasted cycle, the requestor can either delay starting the read request until the next cycle or it may start the read request to wait an extra cycle before requesting the data transfer. In either case useful work could be done in the otherwise wasted cycle, although initiation of a read followed by a wait for an extra cycle is usually more desirable because it allows a cache fault to be detected at an earlier point in time.

A read-modify-write operation can be accomplished by asserting a START signal and WRITE signal along with the address, followed by a read transfer at a later cycle and a write transfer at a still later cycle. When a WRITE signal is signaled at the start of an access, the system cache will not consider that the access has been completed until a write transfer is performed. During such operation all other requestors are prohibited from accessing the same data. Thus, requestors utilizing the same input port are prevented from access by the fact that the first requestor controls the bus during the entire read-modify-write operation. Requestors on the other port are prevented from access by the fact that both ports are prohibited from accessing the same data store block at the same time. Such prohibition also prevents requestors at another port from removing a block of data from the cache data store when the system cache is in the middle of an operation.

If the system cache board receives a write transfer request when a write operation has not been previously indicated or, if it receives a read transfer and a write transfer request simultaneously, access to the system cache data store is aborted without the transfer of any data. If such simultaneous read and write transfer requests are asserted at the beginning of the next cycle after the START request the access may be avoided without even initiating an unnecessary cache fault indication.

In addition to the above transfers the system cache board has the capability of performing direct write transfers between the input ports and the main memory, the bulk of such data traffic being capable of being handled without affecting the contents of the cache data store 40. If the requested transfer is a block write transfer, the data is written directly into the main memory via data write register 40A, MUX 48 and write data register 46. Data transfers at the IO port are not allowed when the CPU port is in the process of accessing data which has the same Index as the IO block which is to be transferred. Data read-modify-write transfers are also not permitted by the system.

In the overall system cache block diagram shown in FIG 2, the input registers for the CPU request port and the IO request port are shown as data registers 54 and 55. Addresses associated with the data at such registers are supplied to the CPU address register 41 and the IO address register 42, each address comprising the Index, Tag and Word Pointer as discussed above.

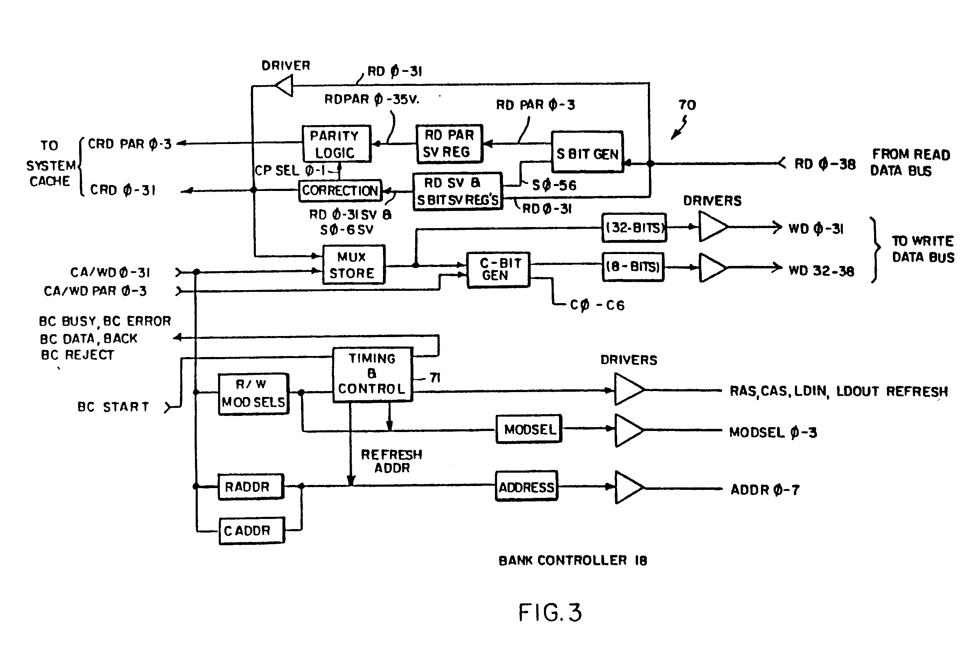

FIG 3 depicts an overall block diagram of the bank controller 18 which interfaces between the system cache at the left hand side of the drawing and the memory modules at the right hand side thereof. Words which are read from the memory modules, identified as RD 0-38 including 7 parity bits are supplied to the bank controller for transfer to the system cache, such words being identified as CRD 0-31 in FIG 3 via the error correction logic 70 which also supplies four parity bits, identified as CRD PAR 0-3. Address and data words which are to be written into the main memory modules are supplied from the system cache such words being identified as CA/WD 0-31, together with the parity bits therefor, identified as CA/WD PAR 0-3, the data being supplied to the write data bus for the memory modules as WD 0-31 and parity bits WD 32-38 via error correction logic 70. The addresses therefor are supplied in the form of information which is required to select the desired memory module (MODSEL 0-3) (to identify up to 16 modules) and to select the desired RAM within the selected module (ADDR0-7)

Further, the bank controller supplies the following control signals to the main memory which responds thereto as required. The RAS and CAS signals represent the row address and column address strobe signals for the RAM's of the main memory. The LDOUT signal causes the selected module to load its output register at the end of the current cycle and to enable the register to place the contents of the output register on the read data bus during the next cycle. The LDIN signal causes the selected module to accept data from the write bus during the next cycle and to write such data into the RAMs during the following cycle. The REFRESH signal overrides the module selection for the row address strobe (RAS) signal only. During a refresh operation one module is read normally and all others perform an RAS refresh only.

The bank controller also interfaces the system cache to supply 32-bit words (CRD 0-31) to the cache along with 4 parity bits (CRD PAR 0-3) for byte parity and to receive 32 bit address and data words (CA/WD 0-31) from the cache along with byte parity bits (CA/WD PAR 0=3). The bank controller also supplies the following control signals to the cache. The BC BUSY signal indicates that the bank controller is not able to accept a BC START (see below ) request. The BC ERROR signal indicates that the data word placed on the read data bus during the last cycle contained a correctable error and must be replaced with the corrected word for the data which is on the bus during the current cycle. Once a BC ERROR signal has been asserted all subsequent words of the same block transfer are also passed through the error correction logic. Accordingly, BC ERROR need be asserted only once for each block transfer.

The BC DATABACK signal indicates that the first word of the four word block to be transferred will be at the read data bus in the next cycle. The BC REJECT signal indicates that the bank controller cannot accept the contents of the write data bus at the end of the current cycle. The BC START indicates that a bank controller transfer operation is to commence.

FIG. 4 depicts the overall block diagram for a typical memory module of the main memory system of the invention and shows the memory array 60 of dynamic NMOS random access memories (RAM's) organized as four planes of 16K 39-bit words each and identifiable as planes 0 -3. A word which is to be written into the memory array is received from the bank controller as $\overline{WD0\text{-}38}$ via buffer 62. Words being stored in even planes 0 and 2 are stored in even plane data register 63 while words to be stored in odd planes 1 and 3 are stored in odd plane data register 64. The control signals are supplied from the bank controller to control logic 65. The module select code bits MOD SEL0-3 are supplied to a comparator 66 to provide a $\overline{MODSEL}$ signal if the particular module has been selected. Control signals from control logic 65 are supplied to appropriate latching circuitry 67 to provide appropriate signals for controlling the operation of the memory array via drivers 61 The control signals from the memory bank controllers are first clocked into the plane 0 latching registers 67A and the outputs thereof drive the plane 0 RAMs via drivers 61A The outputs of the first latch register are those clocked at a fixed time period later into the next latch register set 67B which drives the plane 1 RAMs Such pipeline operation continues in order to drive the plane 2 and plane 3 RAMs such that all four RAM planes receive the same control signals at fixed intervals resulting in the transfer of a block of four consecutive 39-bit words While the RAM address from the bank controller includes eight bits only seven bits of address are used for the 16K RAMs discussed above the extra bit allowing for possible future expansion Thus addressed bits ADR 0-5 are clocked at fixed intervals to each of the latches 67A-67D of the planes 0-3 at fixed intervals ADR 6 is supplied to RAM selection logic 68 together with the plane 0 latch signal $\overline{RPL \: 0 \: RAS}$ to provide the JADR 6 signal for the Plane 0 latch register 67A. The RAS and CAS signals provide the necessary control signals via the control logic 65 and latch registers 67 for driving the row address strobe (RAS) and the column address strobe (CAS) signals for the RAMs

The LDOUT signal to the input of control logic 65 causes the module to load its output register at the end of the current cycle and enable it onto the read data bus during the next cycle via the data out register and multiplexer logic 69 and read bus driver 69A The LDIN signal at the input to control logic 65 causes the module to accept data from the write data bus via registers 63 and 64 for writing into the RAM during the following cycle The following timing diagrams show the status of the various signals for block read and block write operations at each fixed time interval (in the particular embodiment described for example each cycle can be 110 ns) As can be seen the plane 0-3 data is provided in the read operation in sequence and the input data is written into such planes in sequence

| | t0 | t1 | t2 | t3 | t4 | t5 | t6 | t7 |
|---|---|---|---|---|---|---|---|---|
| Control Signals | RAS MODSELS | RAS,CAS MODSELS | RAS,CAS MODSELS | LDOUT MODSELS | <pre- charge> | <next access> | . |
| Address Lines | ROW ADDRESS | COLUMN ADDRESS | COLUMN ADDRESS | | | | | |
| Read Data bus | | | | | PLANE DATA | PLANE DATA. | <etc.> <etc.> |
| Write Data Bus | | | | | | | . | |

## Block Write

| | t0 | t1 | t2 | t3 | t4 | t5 | t6 | t7 |
|---|---|---|---|---|---|---|---|---|
| Control Signals | RAS,LDN MODSELS | RAS,CAS MODSELS | RAS,CAS MODSELS | | | | <next access> | |
| Address Lines | ROW ADDRESS | COLUMN ADDRESS | COLUMN ADDRESS | | | | | |
| Read Data Bus | | | | | | | | |
| Write Data Bus | | PLANE 0 DATA | PLANE 1 DATA | PLANE 2 DATA | PLANE 3 DATA | | | |

## ADDRESS TRANSLATION UNIT

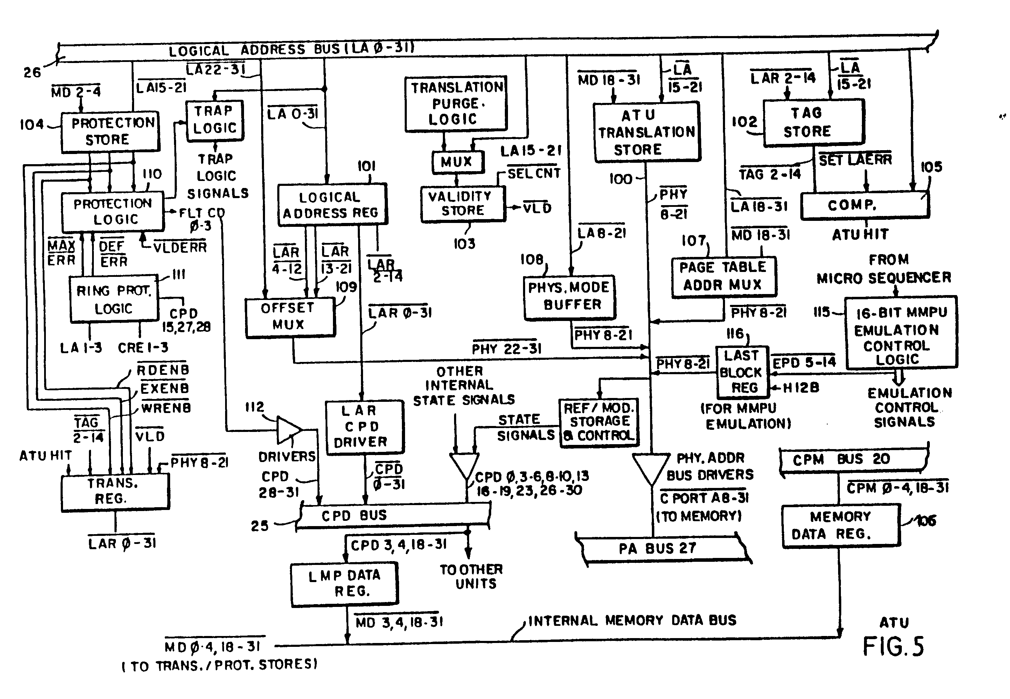

The address translation unit (ATU) 14 is shown broadly in FIGS 5 to 7. the primary function of such unit being to translate a user's logical address (LA) into a corresponding physical address (PA) in the physical address space of the processor's memory modules discussed above Such translation is effectively performed in two ways one by accessing a page from the system cache or from main memory at the particular page table entry specified in a field of the logical address and placing the accessed page in a translation store unit for use in performing the address translation. a sequence of operations normally designated as a Long Address Translation (LAT) and the other by accessing additional references to a page that has already been selected for access after an LAT has been performed and the page selected by the LAT is already present in the translation store The latter translation provides an accelerated address reference and can be accomplished by saving. at the end of every Long Address Translation. the address of the physical page which has been accessed As mentioned the physical page involved is stored in a high speed random access memory (RAM) file designated in FIG 5 at ATU translation store 100

Translations of addresses on the physical page which is stored in the ATU translation store 100 are available to the processor within one operating time cycle of the CPU. while normally the Long Address Translation will take a plurality of such cycles for a reference which requires a single level page table reference (e.g 3 cycles) or a two-level page table reference (e g 5 cycles). where the page in question is available in the system cache memory Even longer times may be required if the page involved can not be found in the system cache memory and must be accessed from main memory

A secondary function of the ATU is to emulate all operations of the previous system of which the present system is an extension. e.g. in the system described. to perform all Eclipse memory management processor unit (MMPU1) address translation operations as described in the above referenced publication for such systems. in an efficient and compatible way. such emulated operations being described in more detail later.

In order to understand more clearly the translation of a logical word address (a byte address when shifted right by one position produces a word address), the logical word address can be. defined as shown below:

| 0 | 1  3 | 4                     21 | 22     .   31 |
|---|------|------------------------|----------------|
| X | SEGMENT | LOGICAL PAGE ADDRESS | OFFSET |

| 1 |  ← INDEX → | 15     21 |
|---|------------|-----------|

| 2           14 |
|----------------|
| TAG |

As seen therein, the segment and logical page address is 21 bits long. the segment and logical page address being divided into two fields, the Tag field and the Index field. The Tag field is defined as bits $\overline{LA}$ $\overline{2\text{-}14}$ while the Index field is defined as bit $\overline{LA}$ $\overline{1}$ plus bits $\overline{LA}$ $\overline{15\text{-}21}$ .

As seen in FIG. 5, when a logical word address $\overline{LA0\text{-}31}$ is received from the arithmetic logic unit (ALU) on the logical address bus 26 it is latched into a logical address register $\overline{(LAR)}$ $\overline{101}$ . The Index bits $\overline{LA}$ $\overline{15\text{-}21}$ are taken directly from the logical address bus to address four RAM stores, the first being a Tag store 102, which retains the tag portions of the logical addresses corresponding to the physical addresses saved in the ATU physical address (PA) translation store 100. The Index bits $\overline{LA}$ $\overline{15\text{-}21}$ are also supplied to a validity store RAM unit 103 and to a protection store RAM unit 104, as discussed below.

If the physical address translation store 100 contains valid address translations. when a memory access is started the logical address is loaded into the logical address register 101 and the Index (bits $\overline{LA}$ $\overline{15\text{-}21}$ ) is used to select a location in the store.

In the particular system described. even though there is a valid address translation at such location in translation store 100, it may not be the correct one corresponding with each index of the logical addresses (and each address location in the translation store) there are a selected number of possible "tags". each tag corresponding to a unique physical page address Only one of such tags and its corresponding physical page addres can be saved in the translation store 100 at the location selected by the Index. Therefore the "tag" (TAG 2-14) that corresponds to the Index in question and is currently stored in the tag store 102 is compared at comparator 105 to the "tag" in the logical address register ( $\overline{LA}$ $\overline{2\text{-}14}$ ). If the "tags" correspond the address translation contained in the translation store 100 is the correct one and can be used to supply the desired physical address (signified by an ATU HIT signal at the output of comparator 105) If they do not match. a Long Address Translation operation must be performed to obtain the desired physical page address from the system cache or main memory The physical page address which is thereby accessed by such LAT procedure to replace the physical page address previously contained in the ATU translation store 100 is placed on the appropriate transfer bus (CPM bus 20). At the completion of the long address translation the "tag" taken from the logical address register ( $\overline{LAR}$ $\overline{2\text{-}14}$ ) is written into the tag store 102 at the location selected by the index and the physical page address from the memory data register 106 (MD 18-31) is written into the translation store 100 at the location specified by the index

The ATU configuration shown in FIG 5 also contains further components which are used to place the translated physical address of a desired physical page table on the physical page address (PA) bus 27 There are three other possible sources of physical page table addresses. the first of which is bits SBR 18-31 of a segment base register which segment base register can also be located in scratch pad units of the address translation unit This address is used to reference either a high order page table (HOPT) of a two-level page table or the low order page table (LOPT) of a one-level page table Since the segment base registers are located at the ATU. such addres can be obtained from the logical address bus 26 as $\overline{LA}$ $\overline{18\text{-}31}$

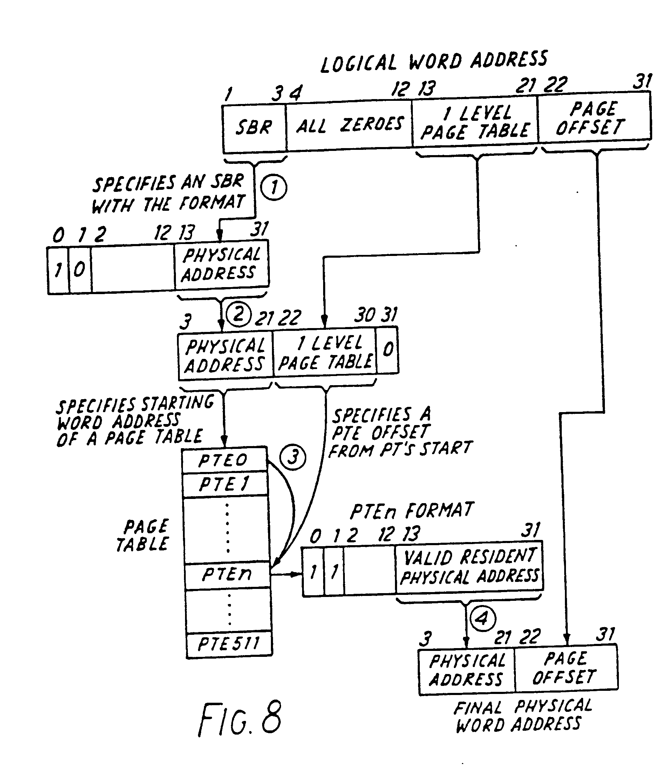

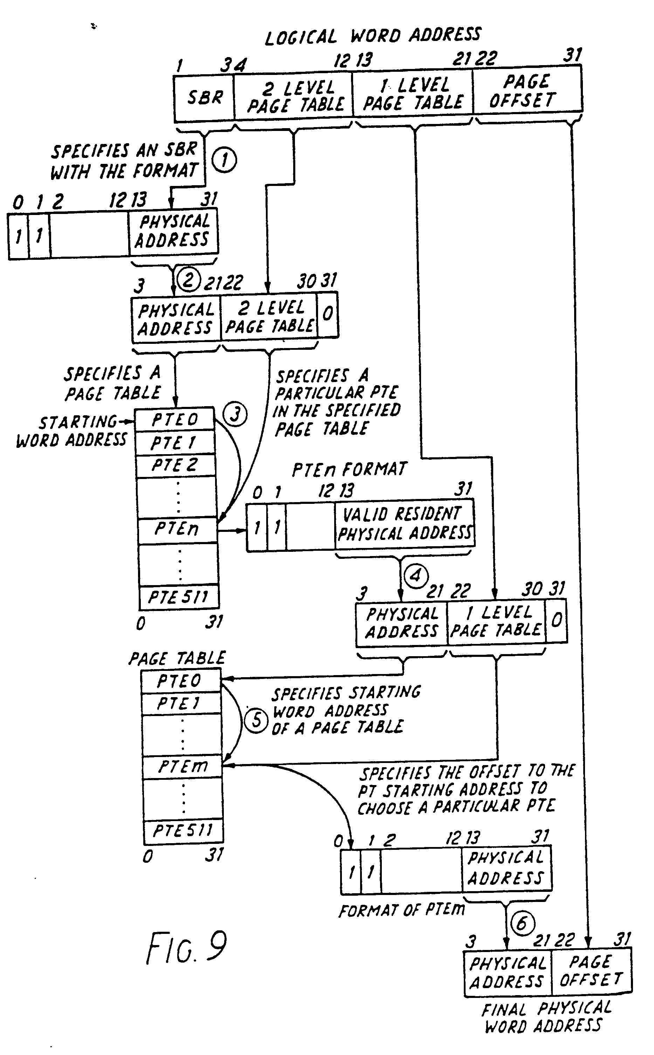

Figs 8 and 9 depict the results of the control actions initiated by the arithmetic translation unit (ATU) to perform a long address translation in which a physical address is derived from a logical address by traversing the one-and two-level page tables in the main memory. Fig 8 depicts a one-level page table traversal, while Fig 9 depicts a two-level page table traversal, the physical address bits 3-21 of the final physical address (i.e., the desired memory allocation data) being placed in the translation store 100 so that when the corresponding logical address is subsequently requires a translation, the physical address is available (an ATU HIT occurs) and there is no need for subsequent long address translation.

The logical word address to be translated for a one-level page table translation has the format shown in Fig 8. Bits 1-3 of the word address specify one of the eight segment base registers (SBRs). The ATU uses the contents of this valid SBR to form the physical address of a page table entry (PTE), as shown at point (1) of Fig 8.

The selected SBR contains a bit (bit 1) which specifies whether the page table traversal is a one-level (bit 1 is zero) or a two-level (bit 1 is a one) page table. In Fig 8 a page table entry address comprising the starting address of a selected page table and page table entry offset specifying a page address therein.

To form this physical page address, the ATU begins with the physical address as shown at (2) of Fig 8. This address becomes bits 3-21 of the PTE address. Bits 13-21 of the logical word address becomes bits 22-30 of the PTE address. The ATU appends a zero to the right of the PTE address, making a 29-bit word address.

Bits 3-21 of the PTE address (unchanged in the step above) specify the starting address of a page table. Bits 22-31 of the PTE address specify an offset from the start of the table to some PTE (labelled PTEn in Fig 8). This PTE specifies the starting address of a page of memory, as shown at (3) of Fig 8.

PTEn bits 13-31, the page address, becomes bits 3-21 of the physical address, as shown at (4) of Fig 8. The page offset field specified in bits 22-31 of the logical word address becomes bits 22-31 of the physical address. This is the physical word address translated from the original word address. The physical address bits 3-21 are placed in the translation store as the memory allocation data for subsequent use if the same logical word address requires subsequent translation. It should be noted that when using a one-level page table, bits 4-12 of the logical word address must be zero. If they are not zero and bit 1 of the SBR indicates a one-level page table is required, a page fault occurs.

Just as in the one-level page table translation process, in the two-level page table translation depicted in Fig 9, the processor produces a physical address. The logical word address to be translated has the format shown in the diagram, the steps (1) to (4) being substantially the same as in Fig 8 except that bits 4-12 of the logical word address become bits 22-30 of the PTE address. The ATU appends a zero to the right of the PTE address, making a 29-bit word address. Bits 1-3 of the word address specify one of the eight segment base registers (SBRs)

Bits 3-21 of the PTE address specify the starting address of a page table. Bits 22-31 of the PTE address specify an offset from the start of the table to some PTE (labelled PTEn). The PTE specifies the starting address of a page table. Thus, the ATU now constructs the address of a second PTE from the address at (4). The physical address specified in bits 13-31 of the first (PTEn) becomes bits 3-21 of the address of the second PTEm Bits 13-21 of the logical word address become bits 22-30 of the second PTE's address The ATU appends a zero to the right of the second PTE address to make a 29-bit word address

Bits 3-21 of the second PTE address specify the starting address of a second page table Bits 22-31 of the second PTE address specify an offset from the start of the second table to some PTE (labelled PTEm in Fig 9) The second PTE specifies the starting address of a page, as shown at (5) in Fig 9

The second PTEm's bits 13-31, the page address, become bits 3-21 of the physical address and the page offset specified in bits 22-31 of the logical word address becomes bits 22-31 of the physical address as shown at (6) in Fig 9 This last value is the final physical word address

The Physical page table address for she low order page table of a two-level page table is in bits 18-31 of the high order page table entry (HOPTE) which must be fetched from the main memory Thus the second possible source of the physical page table address is the memory data register (MD) 105 which holds the data that arrives on the physical memory data (CPM) bus 20 as $\overline{MD}$ $\overline{18\text{-}31}$ A suitable page table multiplexer 107 is used to select which of the two sources will drive the physical address bus when its outputs are enabled

The third and final source is to drive the physical page address bus 27 directly through a physical mode buffer 108. such buffer being used to address physical memory directly ( $\overline{PHY}$ $\overline{8\text{-}21}$ ) from buts $\overline{LA}$ $\overline{8\text{-}21}$ of the logical address bus Such buffer is enabled while the ATU unit is turned off (i.e., no address translation is required) since the physical address in that mode is the same as the logical address and no translation is necessary

Bits $\overline{PHY}$ $\overline{22\text{-}31}$ of the physical address are offset by displacement bits. there being three possible origins for the offset. The first source of such offset is from bits $\overline{LA}$ $\overline{22\text{-}31}$ of the logical address bus which bits are used while in physical mode (no address translation is necessary) as well as the offset in the object page. The second source of the offset is bits $\overline{\text{LAR}}$ $\overline{\text{4-12}}$ (referred to as two-level page table bits in Diagram B above) of the logical address register which is used as an offset within the high order page table during a long address translation Since this source is only nine bits long and page table entries are double words aligned on even word boundaries, a ten bit offset (to form $\overline{\text{PHY}}$ $\overline{\text{22-31}}$ ) is constructed by appending a zero bit to the least significant bit. The final source for the offset is bits $\overline{\text{LAR}}$ $\overline{\text{13-21}}$ (referred to as one-level page table bits in Diagram B above) of the logical address register which is used as an offset within the low order page table during a long address translation. A zero bit is appended to the least significant bit of this source also. Offset multiplexer 109 is used to select the desired one of such three offset sources.

The following discussion summarizes the address bit sources for forming a low order or high order page table entry address in main memory in making a long address translation. The address of the page table entry is formed from address fields in a segment base register (SBR) and from address fields in the logical address register. The address fields of a segment base register can be depicted as follows:

| 0 | 1 | 2 | 3 | 4 | 12 | 13 | 31 |
|---|---|---|---|---|----|----|----|
| V | L | LEF | I/O | RESERVED | | PHYSICAL ADDRESS | |

**SEGMENT BASE REGISTER**

Depending on whether a one-level (low order) or a two-level (high order) page table entry is called for, the SBR address field comprising bits 4-12 or the SBR address field comprising bits 13-21 is transferred to the memory data register 106 to form the higher order bits of the page table entry. As mentioned above, the eight SBR registers are located in 8 of the 256 locations of scratch pad registers on the ATU. This use of such scratch pad locations for the segment base registers can be contrasted with prior known systems wherein the segment base register (or registers comparable thereto) in a segment, or ring, protection memory system are all located at specified locations in the main memory. By placing them in a scratch-pad memory located in a processing unit of the system, as in the ATU unit here, the higher order page table entry bits are acquired more rapidly than they would be if it were necessary to fetch them from main memory and, hence, the speed at which page table entries can be made is improved considerably.

One of the bits of an SBR (identified above as "V" bit) is examined to determine whether the SBR contents are valid. Another bit (identified above as "L" bit) is examined to determine whether a 1-level or a 2-level page table entry is required so that the correct field is supplied to the memory data register

Other bit fields of the SBR are used to determine whether a Load Effective Address (LEF) instruction (such LEF instruction is part of the Eclipse instruction set as explained more fully in the above cited publications therein) or I O instruction is required Thus in a selected state the LEF Enable bit will enable an LEF instruction while a selected state of the I O Protect bit will determine whether an I O instruction can be permitted The remaining field of the SBR contains the address offset bits

As is also seen in FIG 5 a variety of protection checks are made for each reference to memory which protection checks are made by the use of protection store unit 104. protection logic unit 110 and ring protection logic unit 111 for providing appropriate fault code bits ($\overline{\text{FLTCD}}$ $\overline{\text{0-3}}$ ) which are supplied to the micro-sequencer (described below) via driver 112 on to the CPD bus 25 for initiating appropriate fault micro-code routines depending on which fault has occured

The following six protection checks can be made

1 Validity storage protection
2 Read protection
3 Write protection
4 Execute protection
5 Defer protection
6 Ring maximization protection

A validity storage protection check determines whether the corresponding block of memory to which a memory reference is made has been allocated and is accessible to the current user of the system The validity storage field is a one-bit field which is located for example. at bit zero of each of the segment base registers (located on an ATU board as discussed above) or at bit zero in each of the high order page table entry addresses and low order page table entry addresses In a particular embodiment. for example a "1" indicates that the corresponding block has been so allocated and is accessible whereas a "0" indicates that the user cannot use such a memory block.

Generally when a new user enters the system all pages and segments in the logical address space which are allocated to that user, except those containing the operating system, are marked invalid. Validity bits are then set valid as the system begins allocating logical memory to such new user. If a user makes a memory reference to an invalid page, an invalid page table, or an invalid segment, the memory reference is aborted and a validity storage protection error is then signaled by the fault code bits on the CPD bus.

The read protection field is a one-bit field normally located at a selected bit (bit 2, for example) in each of the low order page table entry addresses and a check thereof determines whether the corresponding object page can or cannot be read by the current user. If the page cannot be read, a read error is signaled by the fault code bits on the CPD bus. In a similar manner a check of the write protection error field determines whether the corresponding object page can be written into by the current user, an appropriate write error being signaled by the fault code bits if the user attempts to write into a page to which he is not allowed.

The execute protection field is a one-bit field which is located at a selected bit (e.g. bit 4) in each of the low order page table entry addresses and a check thereof determines whether instructions from a corresponding object Page can or cannot be executed by the current user. If such an instruction fetch is not allowed, an execute error is signaled by the fault code bits on the CPD bus. Execute protection is normally checked only during the first fetch within a page and any additional instruction fetches are performed using the physical page address from the first fetch, which for such purpose is retained by the instruction processor.

When a user is attempting to reference a location in memory and is utilizing a chain of indirect addresses to do so, the system will abort the operation if a chain of more than a selected number of said indirect addresses is encountered. For example, in the system under discussion if a chain of more than sixteen indirect addresses is encountered the operation is appropriately aborted and a defer error is signaled by the fault code bits on the CPD bus. Such protection is utilized, for example, normally when the system has performed a loop operation and the system, because of a fault in the operation thereof, continues to repeat the indirect loop addressing process without being able to break free from the loop operation.

Ring maximization protection is utilized when the user is attempting to reference a logical location in memory in a lower ring (segment) than the current ring of execution (CRE 1-3). Since such operation is not permitted by the system, the operation must be aborted if the user attempts to reference a lower ring than currently being used and a ring maximization error is signaled on the CPD bus. Since the logical address space is divided into eight rings, or segments, a ring which the user desires to reference can be indicated by bits 1-3, for example, of the logical address.

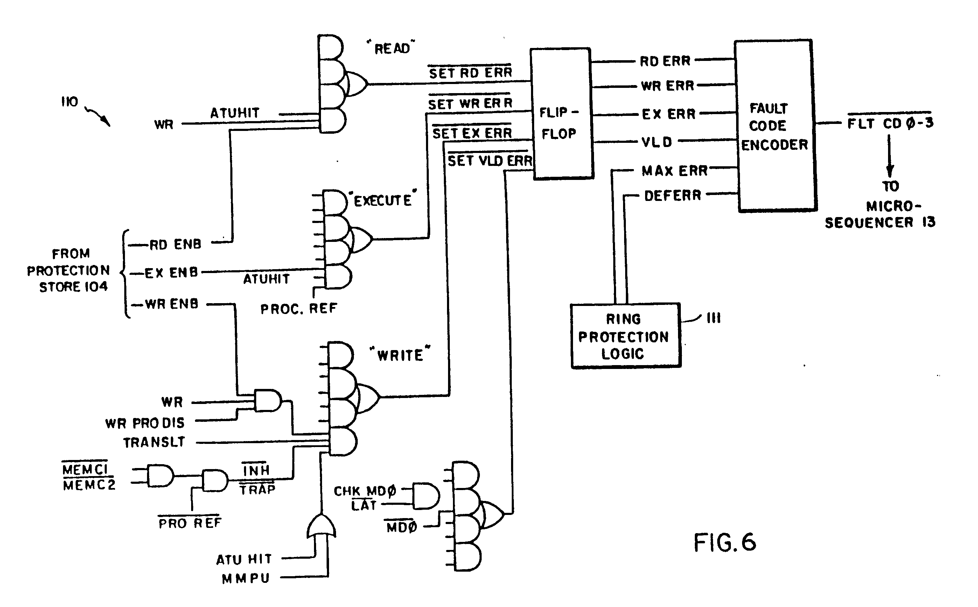

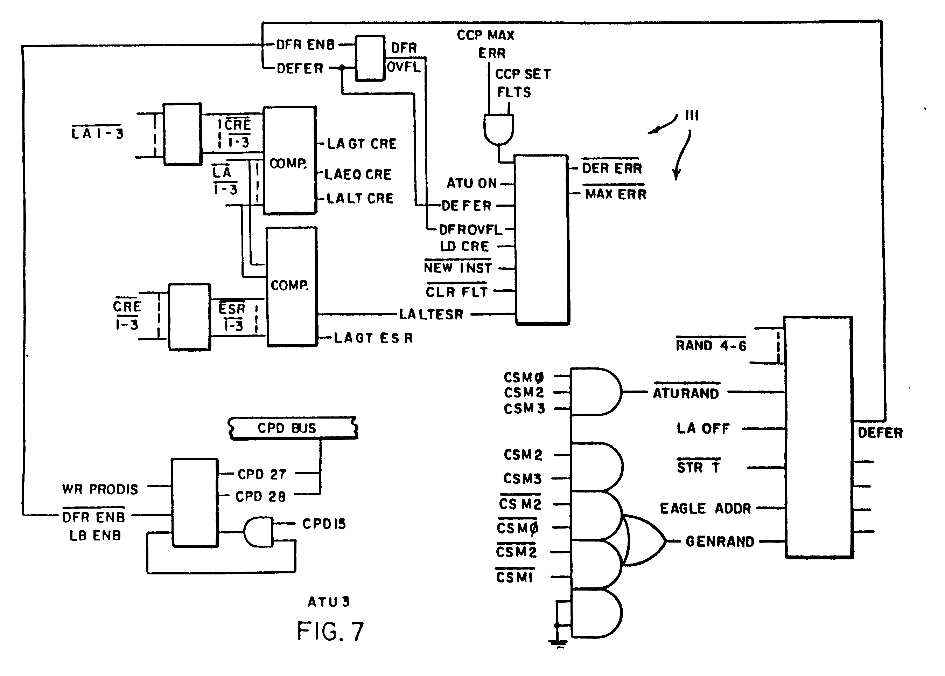

The specific logic circuitry utilized for such protection checks (i.e., the protection store 104 and the protection logic 110 and the protection logic 111 associated therewith) is shown in FIGS. 6 and 7 Thus logic for the generation of the read error, write error, execution error and validity error signals is shown in FIG. 6 and logic for generating the defer error and ring maximization error signals being shown in FIG. 7

With respect to the protection system, since logical address space is partitioned into eight hierarchical regions (i e the "rings" or "segments") the partitioning can be delineated by the segment field of the logical address Thus. segment number 0 is always assigned to ring 0 (ring 0 being the ring in which only privileged instructions can be executed). segment 1 is always assigned to ring 1 and so forth Such approach differs from previous systems using a segmented hierarchical address space in that the ring number is not independent of the logical address space In contrast. in the system discussed here each ring is directly bound in the space so that segment 0 is always allocated to ring 0 segment 1 to ring 1 and so forth

The access field in a page table entry comprises three bits (MD 2-4) is shown in FIG 5 and indicates the capabilities of the referenced data item in the logical address space. i e as to whether the reference data item is to be a read access a write access. or an execute access. the protection store 104 responding to such bits to produce either a read enable signal ( $\overline{RD\ ENB}$ ). or a write enable ( $\overline{WR\ ENB}$ ) or an execute enable ( $\overline{EX\ ENB}$ ) The ring protection governs the proper interpretation of the access privileges of the user to a particular ring. a user being permitted access only to selected. consecutively numbered rings Thus access can only be made to a bracket of rings (an access bracket) if the effective source for such reference is within the appropriate access bracket For example. the read bracket of a data reference in any ring is the ring number That is. a data address reference to segment 5 (ring 5) . for example. can never legitimately originate from an effective source which is greater than 5 In other words an effective source in segment 5 can never reference a ring lower than ring 5 and. therefore. if a reference from an effective source greater than 5 attempts to access ring 5 a ring maximum error (MAX ERR) will be signaled as shown by the logic in FIG. 6 A table showing such ring protection operation is shown below

| Effective Source Space \ Target Space | RING 0 | RING 1 | Ring 2 | ... | RING 7 |
|---|---|---|---|---|---|
| RING 0 | Val-R0 | Val-R1 | Val-R2 | ... | Val-R7 |
| RING 1 | Fault | Val-R1 | Val-R2 | ... | Val-R7 |
| RING 2 | Fault | Fault | Val-R2 | ... | Val-R7 |
| . | . | . | . | | . |
| . | . | . | . | | . |
| . | . | . | . | | . |
| RING 7 | Fault | Fault | Fault | ... | Val-R7 |

In summary, in order to make a ring access, the ring maximization function is used to determine whether or not the reference is a valid ring reference and, if it is, the page table entry that references the address datum is examined to see if the page is a valid one. Then, if the read protection bit indicates that such valid page can be read, the read can be performed. If any one of the examinations shows a protection error (i.e., ring maximization error, validity error, or read error) the read is aborted and an appropriate fault code routine is called. Similarly, appropriate examination for protection errors for write access and execute access situations can also be performed

In an hierachical address space such as discussed above, it is desirable to mediate and authenticate any attempt to switch rings, i.e., to obtain access to a ring (segment) other than the ring which is currently being used (a "ring crossing" operation). The performing of a ring crossing operation is authenticated as follows.

Any ring crossing attempts occur only as a result of an explicit attempt to do so by a program control instruction, and such explicit attempt can occur only if the following conditions are satisfied.

(1) The program control instruction is of the form of a subroutine "call", i.e., where access is desired to a subroutine in another ring (LCALL - see Appendix B), or a subroutine "return", i.e., where a subroutine in another ring has been accessed and it is desired to return to the original ring (WRTN and WPOPB-see Appendix B). All other program control instructions (e.g., JUMP) ignore the ring field of the effective address required for the instruction and such instructions can only transfer to locations within the correct segment .

(2) The direction of a subroutine call crossing must be to a lower ring number (i.e., inwardly toward ring 0) wherein the lower ring has a higher order of protection and the current ring of execution and the direction of a subroutine return crossing must be to a higher ring number (i.e., outwardly away from ring 0) wherein the higher ring has a lower order of protection than the called ring containing the subroutine Outward calls and inward returns are trapped as protection faults.

(3) The target segment of the effective branch address is not in the segment identified by bits 1-3 of the program counter

In the above conditions are met the return address for outward returns is merely interpreted as a normal word address However, if the above conditions are met for an inward call, the branch address is interpreted as follows:

| 0 | 1 3 | 4 15 | 16 31 |
|---|---|---|---|
| X | SBR | NOT USED | GATE NUMBER |

Inward Call Branch Address

Bits 16-31 are interpreted as a "gate" into the specified segment (SBR of bits 1-3) in the target space. The gate number is used to verify that the specified gate is in the called segment and, upon verification, to associate on instruction address with the specified gate via a "gate array" in the called segment, as discussed below.

The location of the gate array in any called segment is indicated by a pointer contained in particular locations of the calls segment (e.g., in a particular embodiment the pointer locations may be specified as locations 34 and 35 in each segment. The structure of the gate array is as follows:

| 0 | 15 16 | 31 | |
|---|---|---|---|
| NOT USED | MAX. NO. OF GATES | | |
| .X GATE BRACKET | P C OFFSET | | GATE 0 |

... ... ...

| X GATE BRACKET | P C OFFSET | | GATE (MAX-1) |
|---|---|---|---|
| 0 | 3 4 | 31 | |

**Gate Array**

The gate number of the pointer which referenced the target segment is compared with bits 16-31 of the first 32 bits of the gate array. If the gate number is greater than or equal to the maximum number of gates in the gate array, the ring crossing call is not permitted and a protection fault occurs (if the maximum number of gates is 0, the segment involved cannot be a valid target of an inward ring crossing call operation).

If the gate number is less than the maximum number of gates, the gate number is then used to index into one of the gates of the gate array which follows the first 32 bits thereof. The contents of the indexed gate are read and are used to control two actions. First, the effective source is compared to the gate bracket bits 1-3 of the indexed gate The effective source must be less than or equal to the referenced gate bits and, if so, the PC offset bits 4-31 become the least significant 28 bits of the program counter and bits 1-3 of the program counter are set to the segment containing the gate array.

If the gate in a ring crossing operation. as described above, is a permitted entry point to the ring to which the crossing is made. a new stack is constructed. In order to do so a stack switching operation must occur since there is only one stack per ring. Thus, before the new stack can be created, the contents of the current stack management registers must be saved at specified memory locations of the caller's ring. The callee's stack can then be created. the arguments from the caller's stack being copied onto the newly created callee's stack. the number of such arguments being specified by the X or the LCALL instruction (see Appendix B) An appropriate check is first made to determine whether copying of all of the arguments would created a stack overflow condition If so. a stack fault is signalled. the ring crossing being permitted and the fault being processed in the called ring

In order to emulate operation of ECLIPSE address translation operations appropriate emulation control signals for placing the ATU in the ECLIPSE operating mode are required as shown by emulation control logic unit 115 which in response to coded instructions generated by the microsequencer board 13 produces such signals to permit operation for 16-bit addresses equivalent to the memory management protection unit (MMPU) of ECLIPSE comparators as described in the aforesaid publications thereon

## INSTRUCTION PROCESSOR

The instruction processor (IP) 12 is utilized to handle the fetching and decoding of macro-instructions for the data processing system of the invention The instruction processor operates both at and ahead of the program counter and its primary function is to provide a starting microaddress (ST$\mu$AD) for each micro-instruction which starting microaddress is supplied to the microsequencer unit 13 Subsidiary functions of the instruction processor are (1) to provide the source and destination accumulator designations. (2) to provide the effective address calculation parameters for the arithmetic logic unit and (3) to provide sign or zero extended displacements for making memory references or for in-line literals (immediates) to the arithmetic logic unit (ALU)

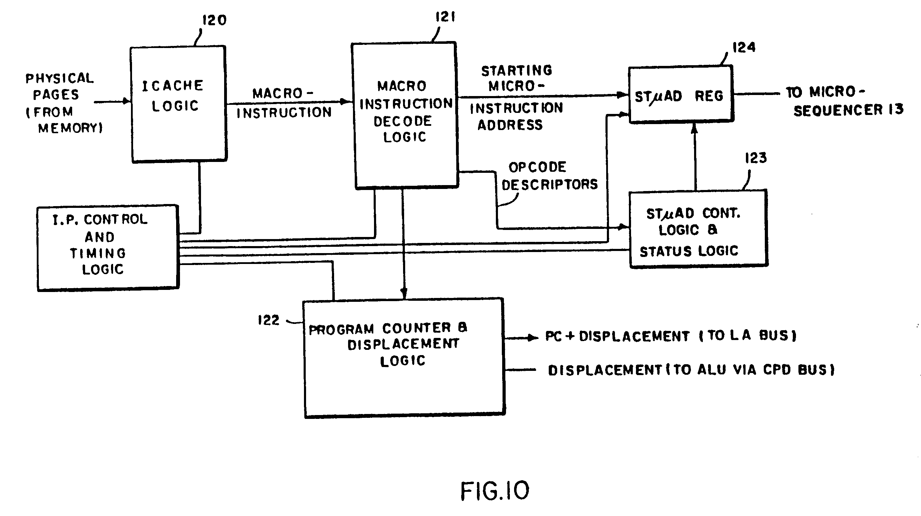

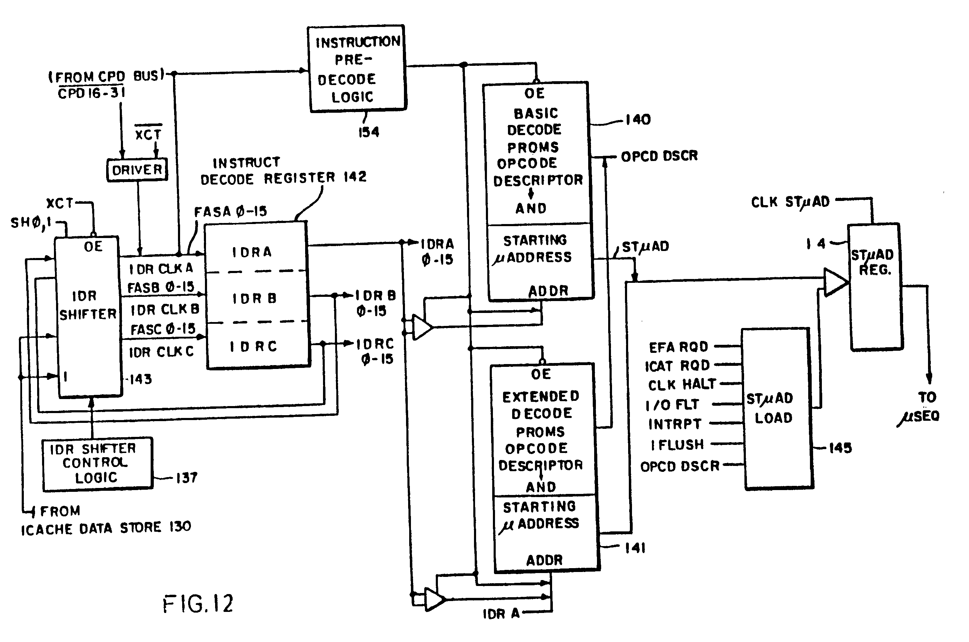

As seen in FIG 10 the instruction processor includes instruction cache logic 120 (ICACHE). macro-instruction decoding logic 121 (which includes an instruction decode register as shown in FIG 12) and program counter displacement logic 122 as described below The ICACHE logic functions as a pre-fetcher unit. ie. the instruction cache (ICACHE) thereof obtains a block of subsequent macro-instructions for decoding, which block has been accessed from memory while the previous macro-instructions are being executed. The ICACHE stores the subsequent block of macro-instructions even if such macro-instructions are not immediately going to be used by the microsequencer. The decoding logic 121 of the instruction processor responds to a macro-instruction from ICACHE, decodes the operational code thereof (opcode) to provide the opcode description information for control and status logic 123 and to supply the information needed therefrom to the starting micro-address (STμAD) register 124 (and thence to the micro-sequencer) to identify the starting micro-address of the required micro-instructions.

The displacement logic 122 supplies the displacement data to the ALU if the index for such displacement is on the ALU board. If the index for the displacement is the IP program counter, the displacement logic combines the displacement information with the program counter information available at the instruction processor to form the logical address for supply to the LA bus.

Thus, in an overall IP operating sequence, a macro-instruction is read from an ICACHE storage unit of the ICACHE logic 120 into the decode logic 121 which thereupon decodes the instruction opcode and generates the starting micro-address for the micro-sequencer. During the decoding and starting micro-address generation process, the instruction processor simultaneously reads the next macro-instruction from the ICACHE into the decode logic. While the micro-sequencer is reading the first micro-instruction, the decode logic is decoding the next macro-instruction for generating the next starting micro-address. When the micro-instruction at the starting micro-address is being executed, the micro-sequencer reads the next micro-instruction from the next starting micro-address. Accordingly, a pipeline decoding and execution process occurs.

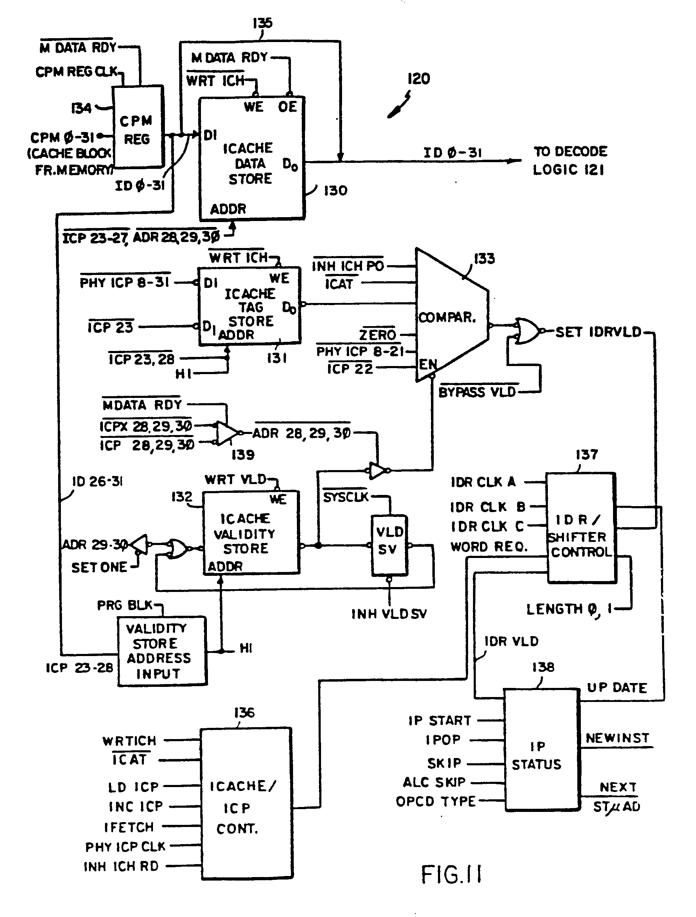

As seen in the more detailed FIG. 11, the ICACHE logic 120 includes an ICACHE data store unit 130, a tag store unit 131 and a validity store unit 132. As discussed with reference to the system cache 17 of the memory system, the operation of the ICACHE is substantially similar in that the tag portion ( $\overline{PHY}$ $\overline{ICP}$ $\overline{8-21}$ ) of the address of each desired word of the macro-instruction is compared at comparator 133 with the tag portions of the addresses stored in the TAG store 131 of those words which are stored in the ICACHE data store 130. In addition, the validity store unit demonstrates whether the desired address is a valid one. If the address is valid and if a tag "match" occurs, the 32-bit double word at such address is then supplied from the ICACHE data store 130 to the decode logic 121.

If the required macro-instructions in the appropriate ICACHE block are not present on the current physical page (i.e., the physical page corresponding to the logical page value of the current value of the program counter)which is stored in the ICACHE data store 130 (i.e., a Tag match does not occur) or if the validity bit is not set, an ICACHE "miss" occurs and the cache block containing the macro-instructions must be referenced from memory. Such ICACHE block memory reference may be to the system cache (SYS CACHE) or to the main memory, if the system cache access also misses. When the accessed ICACHE block is fetched, the desired macro instructions thereof are written into the ICACHE data store 130 from CPM register 134 and the block is simultaneously routed directly into the decoding logic through bypass path 135. The ICACHE logic can then continue to prefetch the rest of the macro-instructions from the fetched page as an instruction block thereof, placing each one into the ICACHE data store 130 as they are accessed. The control logic for the ICACHE logic 120 is ICACHE ICP control logic unit 136.

The decode logic, shown in more detail in FIG. 12, includes instruction decode units 140 and 141 for decoding the opcode portion of the macro-instructions. Decode unit 140 is used for decoding the opcodes of the original basic instructions for the system of which the present system is an extension. Thus in a specific embodiment as discussed above, such basic instructions may be the NOVA and ECLIPSE instructions for Data General Corporation's previous NOVA and ECLIPSE system. Decode unit 141 is used for decoding the opcodes of the extended instruction set, e.g. the "Eagle" macro-instructions mentioned above.

The opcodes are supplied from an instruction decode register (IDR) 142 having three storage register sections, each capable of storing a word and identified as IDR A, IDR B and IDR C. The opcode of each macro-instruction is stored in the IDR A section while displacements are stored in the IDR B and C sections. An IDR shifter unit 143 is used to shift the desired opcode portion of the instruction accessed from the ICACHE data store 130 into the IDR A section of IDR 142 and to shift the appropriate displacement words of the instruction, if any, to the IDR B and IDR C sections thereof. The control logic for the IDR and the IDR shifter units is IDR shifter control unit 137, shown in FIG. 11.

When the macro-instruction has been routed to the decode logic, the decode units 140 or 141, as required, decode the opcode portion thereof to provide opcode description (OPCD DSCR) information, including the length of the instruction (i.e., whether the instruction comprises a single, or double or triple word). When the entire instruction has been supplied to the decode logic (from ICACHE data store 130) a SET IDR VLD signal is generated to produce an IDR VLD signal at IDR shifter control 137 (FIG. 11) Following the decoding process, the starting micro-address is loaded into the STµAD register 144 from either decode PROM 140 or 141 depending on whether the macro-instruction is a basic or an extended instruction. Control of the loading of STµAD register 64 resides in STµAD load control unit 145.

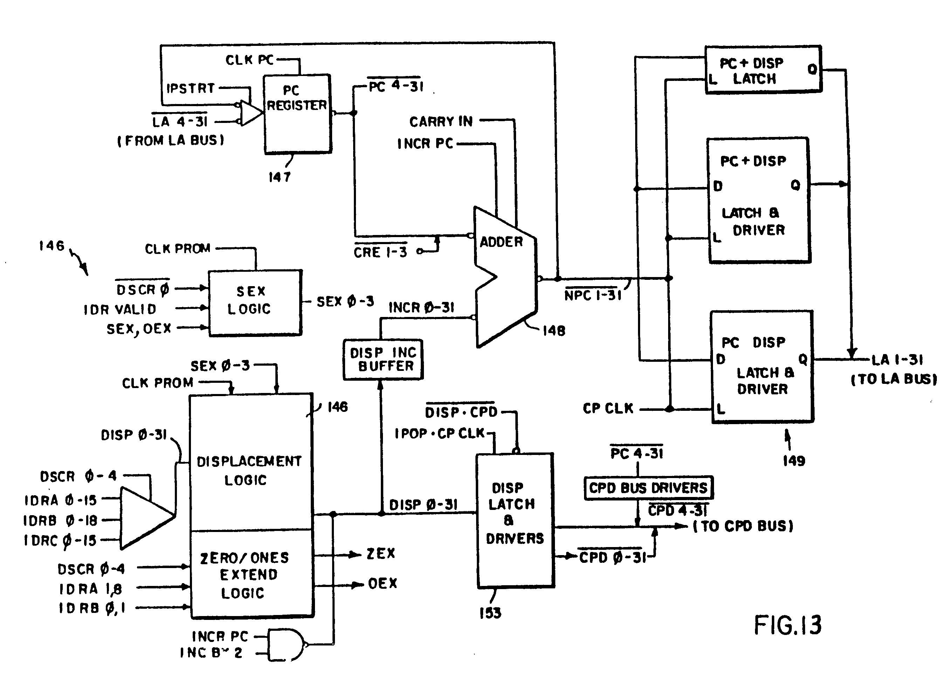

The displacement word or words, if any, are generally present in IDR B or C (for certain NOVA instructions a byte displacement may be extracted from IDRA, although generally for almost all other instructions displacements are extracted from IDRB and IDR), being extracted from the displacement logic 146, as shown in FIG.13. The displacements are sign or zero extended, as necessary, and are clocked into a displacement register thereof so as to be made available either directly to the logical address (LA) bus or to the CPD bus for use at the ALU unit, as discussed below.

When the starting micro-address has been clocked into STµAD register 144, an UPDATE signal is issued by the IP status logic unit 138 (FIG.11 ) to inform the IDR/shifter control 143 that the decoded information has been used and can be shifted out of IDR 140/141. The decoding of subsequent macro-instructions continues until a discontinuity in the straight-line decoding operation occurs. When a jump in the straight-line operation occurs the micro-sequencer issues an IPSTRT signal to the program counter register 147 of the instruction processor (FIG. 13) so that a new program counter address ( $\overline{LA\ 4\text{-}31}$ ) can be placed in the program counter register from the logical address bus. The starting micro-address register 144 is reset and the starting micro-address of an appropriate wait routine, for example, is placed therein until the decoding process for the instruction associated with the new program counter can begin.

In some situations the sequence of macro-instructions which are being decoded are present on more than one physical page. Under such conditions when the ICACHE control detects the end of the page which is stored in the ICACHE data store 130, a special routine must be invoked in order to fetch the next page into the ICACHE store 130 so as to continue the prefetching operation on the new page. Thus, when the last instruction of a particular page has been decoded and the decode pipeline is effectively empty, the starting micro-address register is loaded with the starting micro-address of a suitable page control routine which accesses the required new page and permits the next page to be loaded into ICACHE store 130 via physical page register 134 so that the instruction processor can continue with the decoding of the macro-instructions thereon.

If a macro-instruction is not on the page contained in the ICACHE store 130, the correct page must be accessed from either the system cache or main memory because of an ICACHE "miss" in the instruction processor. Access to the system cache is provided at the same system cache input port as that used by the address translation unit (ATU). In the system of the invention, however, the ICACHE is given a lower priority than the ATU so that if the ATU wishes to access the system cache the instruction processor must hold its access request until the ATU has completed its access.

The use of ICACHE logic as described herein becomes extremely advantageous in programs which utilize a short branch backwards If a macro-instruction branch displacement is less than the number of words in the ICACHE data store there is a good chance that the required macro-instructions will still be stored locally in the ICACHE data store and no additional system cache or main memory references are required

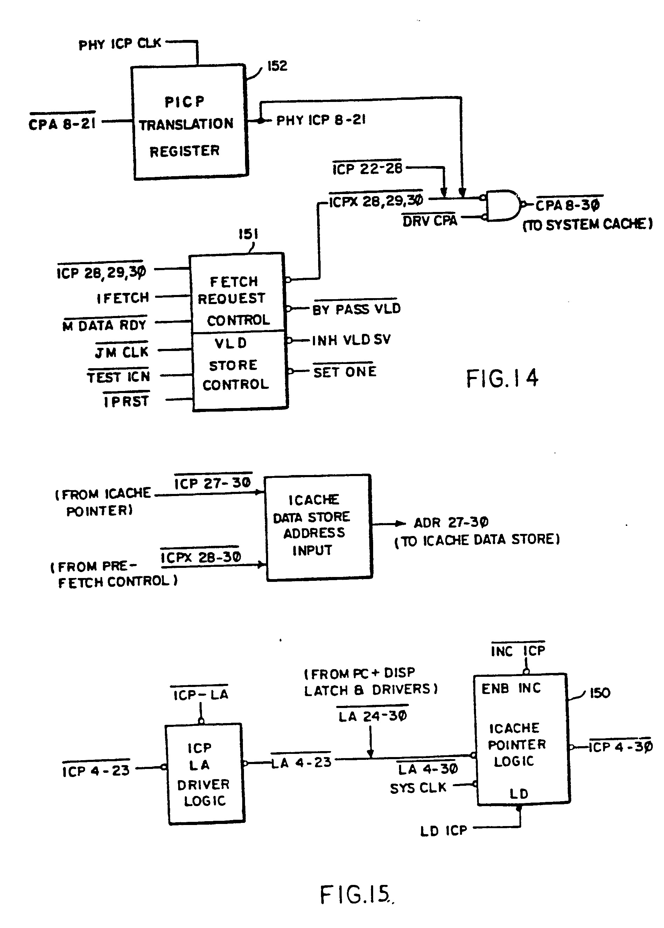

In a particular embodiment for example the overall ICACHE logic 120 may comprise a single set, direct mapped array of 256 double words in data store 130 plus Tag and validity bits in Tag Store 131 and Validity Store 132 Data is entered into the data store as aligned double words and the ICACHE data store is addressed with the eight bits which include bits $\overline{ICP\ 23\text{-}27}$ from the instruction cache pointer (ICP) unit 150 shown in FIG 14 and bits ADR 28.29 30 from unit 139

A copy of the "Tag store 131 of the instructor processor's ICACHE unit is also kept in the system cache the latter cache needing such information so that it can inform the instruction processor when data has been written into the ICACHE

The validity store 132 is arranged. for example. in a particular embodiment. as 64 double words by four validity bits in order to indicate the validity of each double word in the ICACHE data store. Each initial fetch into a new block of instruction words will set the corresponding validity bit for the double words and reset the raining three validity bits During a prefetch operation into the same block. the corresponding validity bit for the prefetch double word is set while the remaining three validity bits remain the same. The prefetching operation stops when the last double word in the block has been prefetched in order to avoid unnecessary system cache faults

If the ICACHE operation is such that the end of a physical page is reached and it is necessary to obtain the next physical page address for the next logical page of the program counter (PC bits 4-21). the ICACHE control logic unit 136 (FIG 102) asserts a signal (identified as the $\overline{ICAT}$ signal) which is supplied to the STµAD load control logic 145 (FIG 12 ) When the last macro-instruction at the end of the current page has been decoded. the STµAD control logic 145 supplies the starting micro-address for the $\overline{ICAT}$ Micro-code

20

routine which thereupon performs the necessary address translation operation for a transfer of the next physical page address for the ICACHE data store 130.

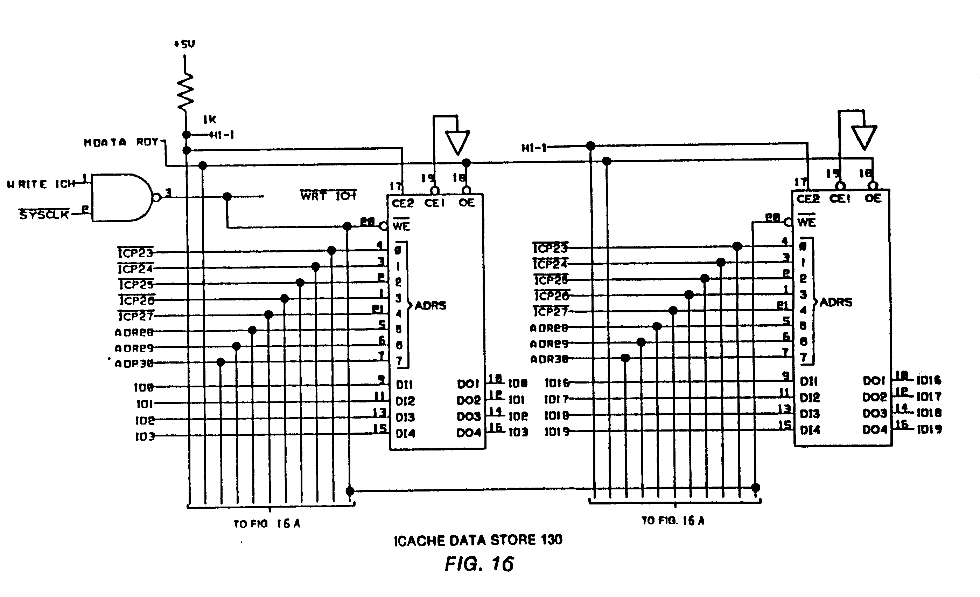

The instruction processor utilizes two pointers to the instruction stream. The first pointer is the program counter register 147 (FIG. 13 ) which holds the logical address of the instruction which is being executed, and the second pointer is the instruction cache pointer (ICP) 150 (FIG.15 ) which holds the logical address of the next macro-instruction which is needed for the decode logic. A separate register PICP 152 (physical instruction cache pointer) holds the physical page address of the logical page referred to by bits 4-21 of the instruction cache pointer (ICP). Thus the ICP 150 functions as the prefetch logical address pointer and the PICP functions as the prefetch physical address pointer. The program counter 147 and the ICP 150 are loaded from the logical address bus at the start of an instruction processor operation. The ICP is incremented ahead of the program counter as the decoding pipeline operation is filled. On an ICACHE fault, or miss, the PICP physical address is used to reference the memory and the ICP address is used as a pointer to the next logical page address for address translations when the end of the correct page has been reached.

In accordance with the instruction processor operation the optimum performance is achieved when the instructions are locally available in the ICACHE, such instructions thereby becoming substantially immediately available when the micro-sequencer requests them. Instructions which are not locally available in the ICACHE take an amount of time which is dependent on system cache access operation and page fault routine operations.

The macro-instruction decoding logic utilizes three 16-bit fields identified as the IDR A, IDR B, and IDR C fields, as mentioned above. The "A" field contains the opcode while the "B" and "C" contain either the displacement(s) for the instruction in the "A" field or one or more fields of the macro-instruction which follows in the instruction stream. The instruction decode register, IDR 142, is arranged to keep all three fields full, if possible, by sending word requests to the ICACHE (ICP control unit 136) when any of the three IDR fields is empty. As mentioned above, if the ICACHE word request results in an ICACHE "miss" a system cache fetch is initiated.

The "A" field of the instruction decode register 142 is used by the decode logic PROMs 140 or 141 to decode the opcode of the macro-instruction and, also to provide the starting address of the macro-instruction which is required. The "B" and "C" fields determine the displacements, if any, that are required. Each field is one word in length and therefore the longest instruction that the instruction processor can decode and canonicalize the displacement for has a maximum length of three words

When the A field of the instruction decode register is full, the decode PROMs 140 or 141 decode the opcode of the instruction. If the entire instruction, including opcode plus displacement, is in the instruction decode register, a signal IDR VLD is asserted by the IDR shifter control logic 137 to inform the IP status logic 138 that an entire instruction is ready to be decoded so as to provide a starting micro-address for STμAD register 144. The displacement logic 146 which extracts the displacement, either sign or zero extends it, as necessary, and then loads it into a displacement register. If the displacement index is on the ALU board the displacement is latched onto the CPD bus via latch unit 153 for supply thereto. If the displacement index is the PC register 147, the displacement is added to the PC bits at adder 148 and supplied to the logical address bus via latches 149 as shown in FIG.13.

During the above loading processes the instruction decode register 142 is shifted by the length of the instruction that has been decoded so as to be ready to receive the next instruction i e a shift of one two or three words. The IDR shifter unit 143 serves to provide such shift of the contents of the instruction decode register 142. A shift of three words, for example completely empties the instruction decode register which is then ready to receive the next instruction from the ICACHE (or directly from memory on an ICACHE "miss"). The shifter, for example, allows either word in a double-word instruction which has been accessed from the ICACHE to be directly loaded anywhere into the instruction decode register. The placement in IDR 142 is determined by examination of the validity bits in the IDR. Thus if the "A" field is invalid, the incoming instruction data would be loaded into the "A" field. Whenever any of the three fields in the instruction decode register 142 are empty, a word request is made of the ICACHE via ICACHE control logic 136 for accessing the next instruction as determined by the ICACHE pointer (ICP) 150, bits 23-27 of which uniquely determine which double-word in the ICACHE is to be accessed. If the instruction is a single word instruction, the ICP bits 28-30 and the ICPX bits 28-30 obtained from the fetch request control logic 151 (FIG 14 ) uniquely determine which word of the double word is to be used as the instruction as shown at word pointer logic 139 (FIG 11 ).

If the instruction decode register 142 has at least two fields empty and a word pointer points to an even double word, then the double word would be loaded into two empty fields of the IDR. After loading the ICACHE pointer 150 would be incremented so that it points to the next double word. If the IDR has only one empty field and a word pointer points to an even double word, then the first word would be loaded into the IDR and the word pointer would be sent to point to the second word of the double word and the ICACHE pointer remains the same. When the word pointer points to the second word, only one word can be accessed from the ICACHE and loaded into the instruction decode register.

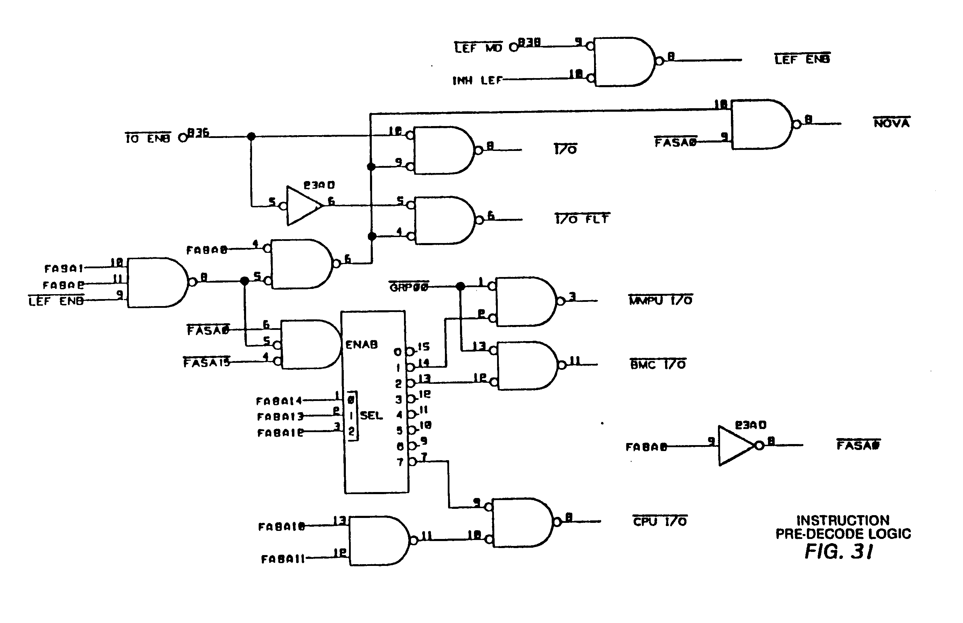

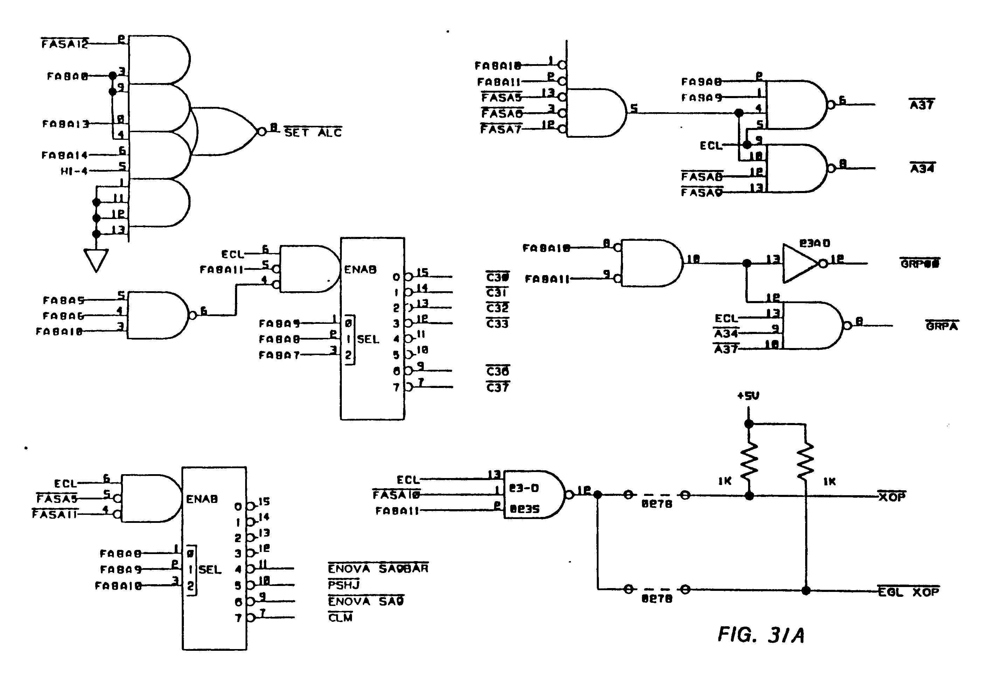

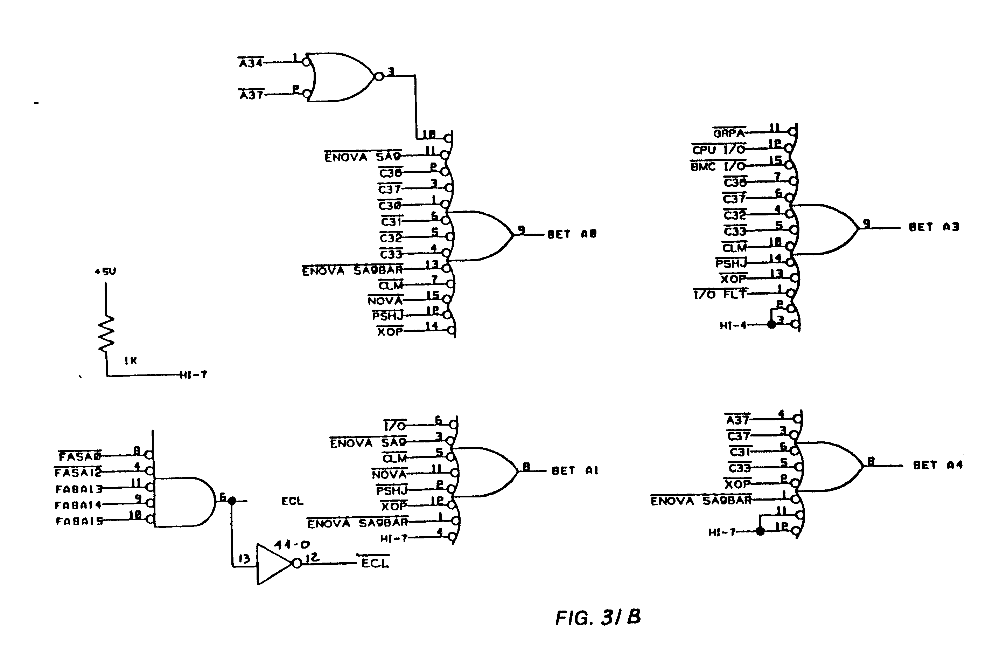

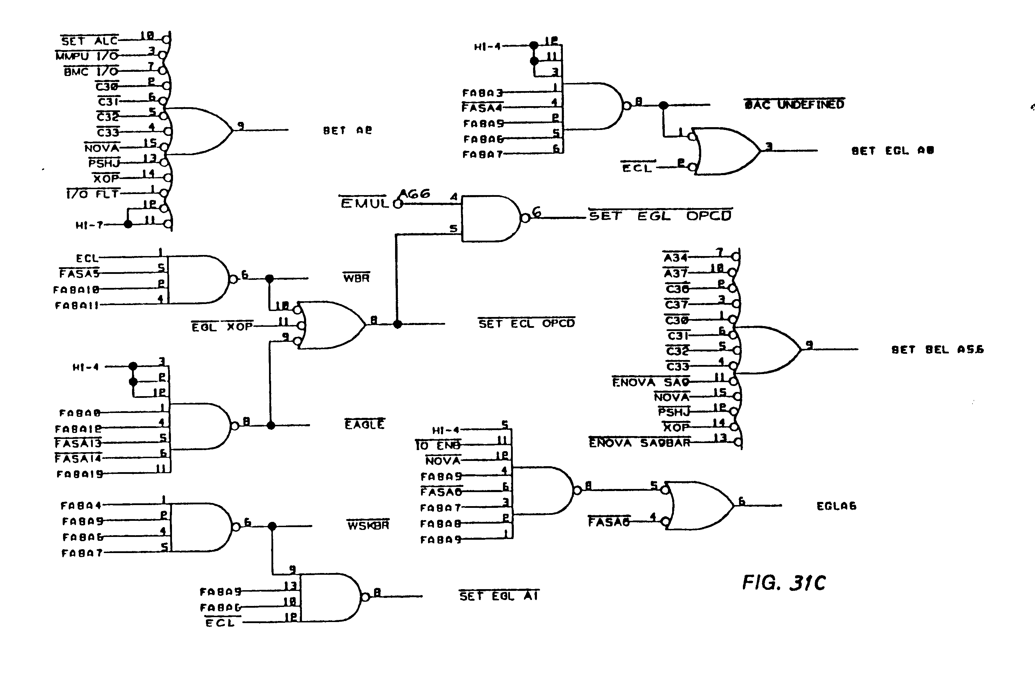

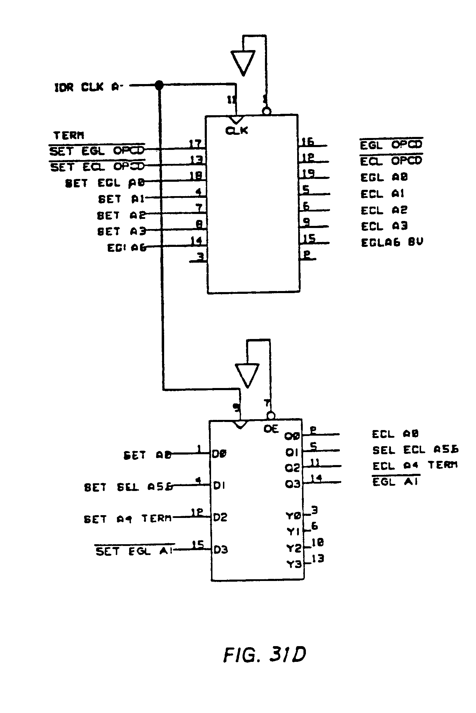

The decode logic utilizes predecode logic 154 (FIG. 12) which is used to select the location in one of the two sets of decode PROMS 140 and 141. As mentioned above, one set of PROMs 140 holds a basic set of instructions (e.g., NOVA/ECLIPSE instructions) while the second set of PROMs 141 holds the extended instructions (e.g., EAGLE instructions). The decoding process for the basic set of decode PROMs 140 is performed in two stages, the first level being performed in the predecode logic 154 at the output of the shifter which is used to place the basic macro-instructions into the correct form so that the decode logic 140 can decode the opcode and be ready with the displacement information in the correct form and sequence. Such logic is shown in more detail in FIG. 31. The instructions for the extended set are already in the desired form and need not be predecoded before being supplied to the decode PROMS 141. In either case each incoming macro-instruction maps into at least one location of a selected one of the decode PROMs 140 or 141 to produce the required opcode descriptors and the required starting micro-address for supply to the micro-sequencer.

The decision to select the output of decode PROM 140 (e.g., NOVA/ECLIPSE) or decode PROM 141 (e.g., EAGLE) is determined by examining selected bits (e.g., bits 0, 12-15 as discussed above) of IDR A. As described above, the selection of the decode PROM is not determined by a separately designated "mode" bit as in previous systems, which prior process causes the decode operation to be mutually exclusive. In contrast, the present system in selecting the appropriate decode operation performs such operation on an instruction by instruction basis since each instruction inherently carries with it the information required to determine such decode selection.

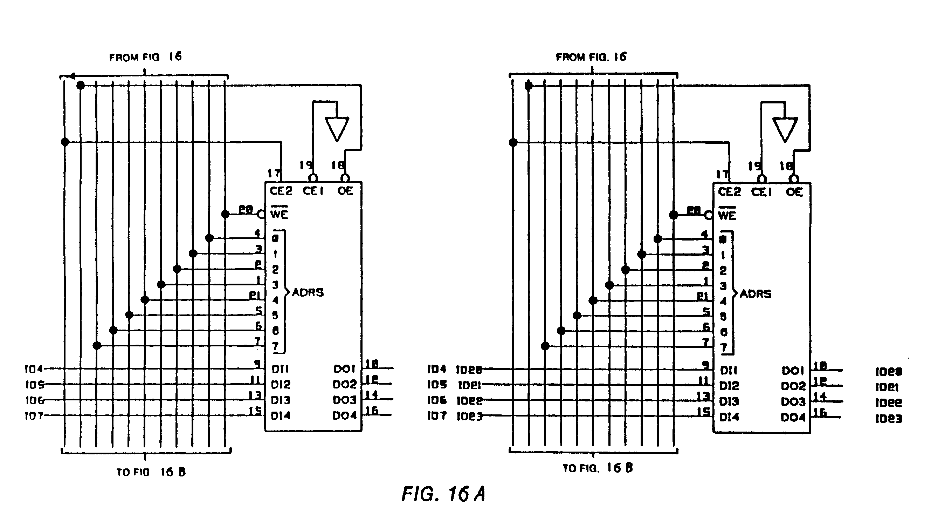

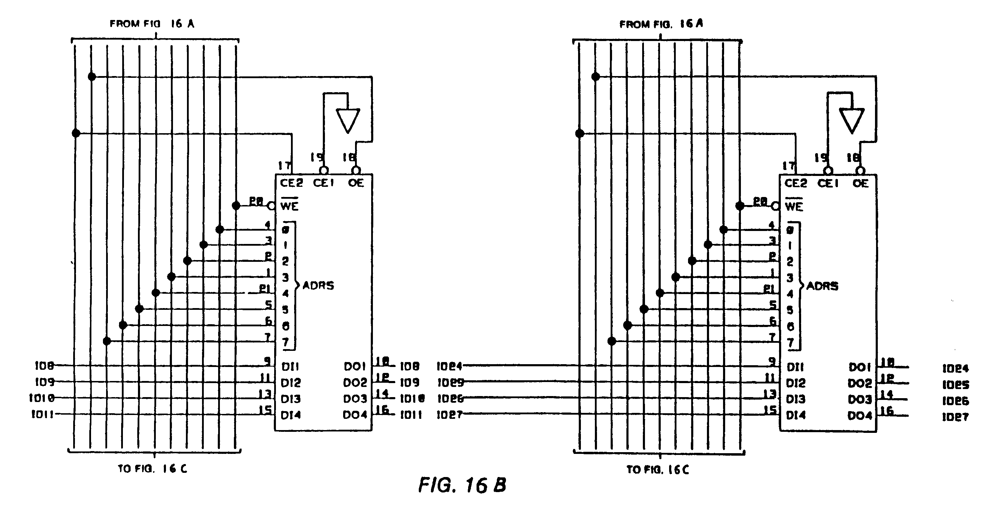

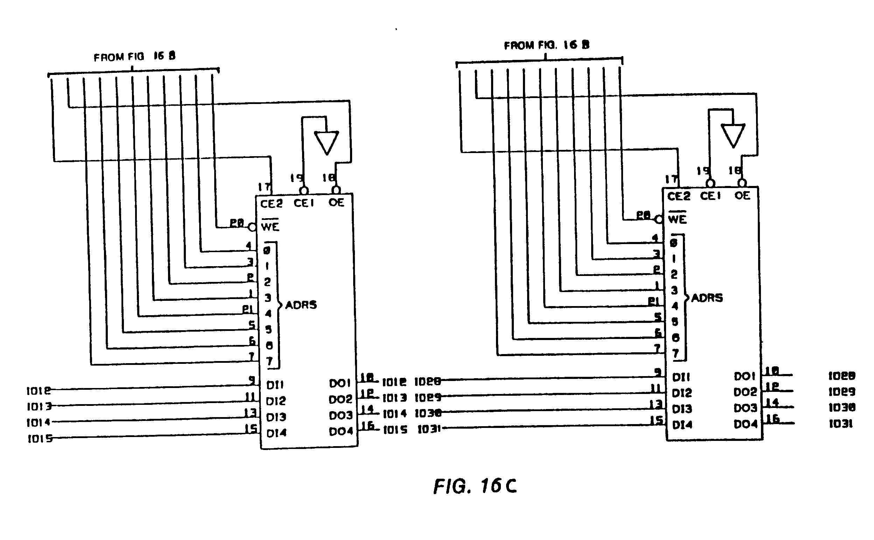

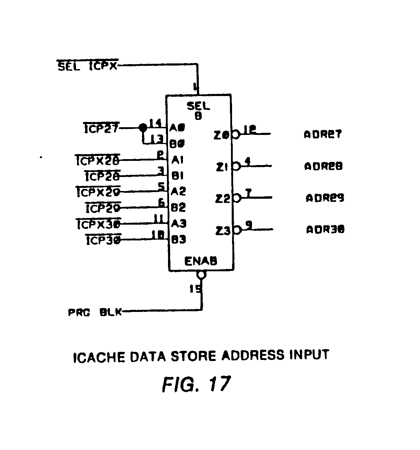

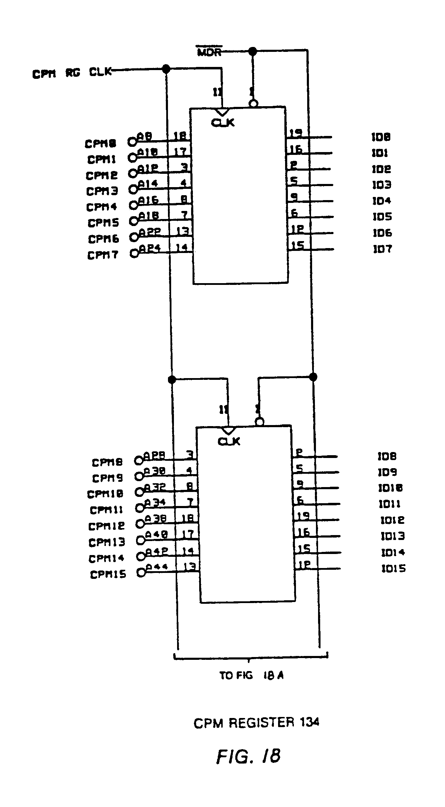

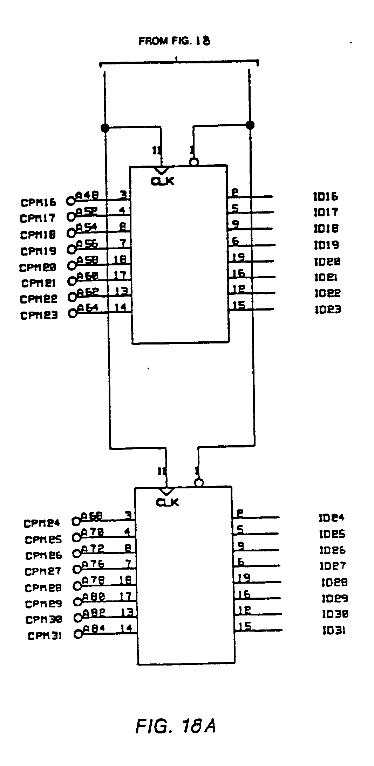

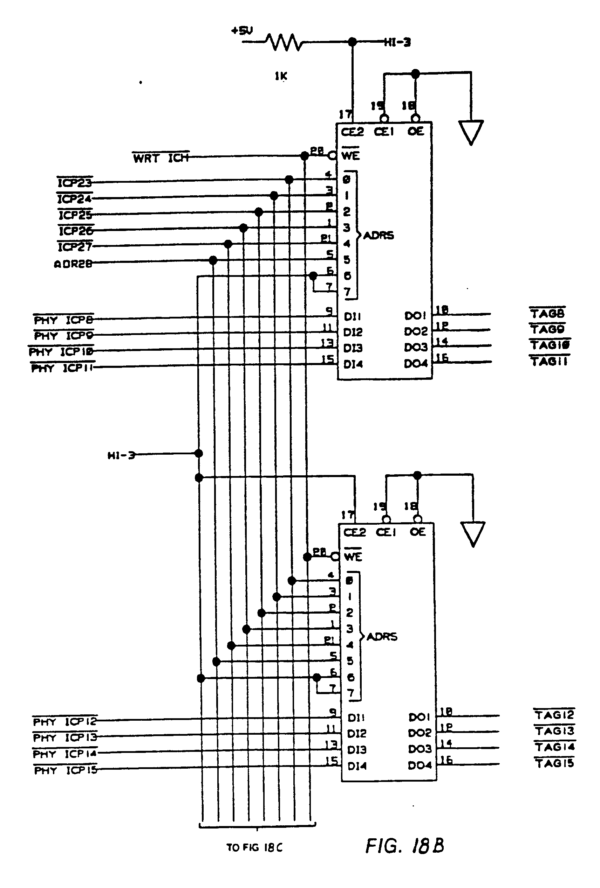

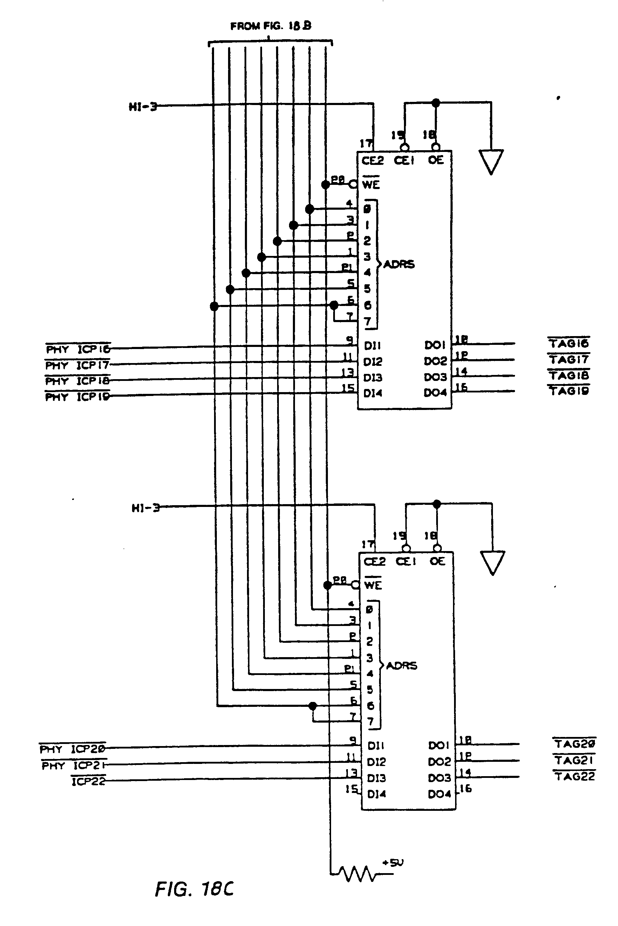

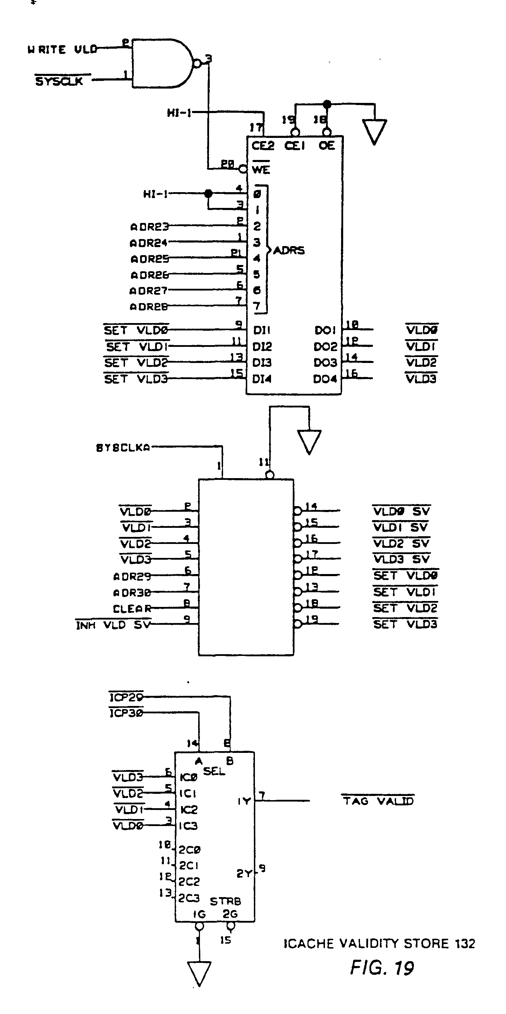

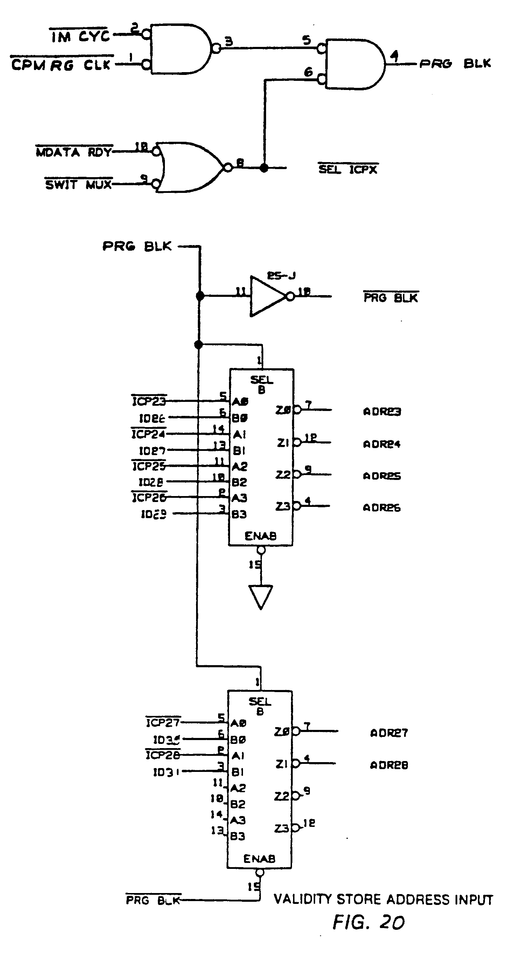

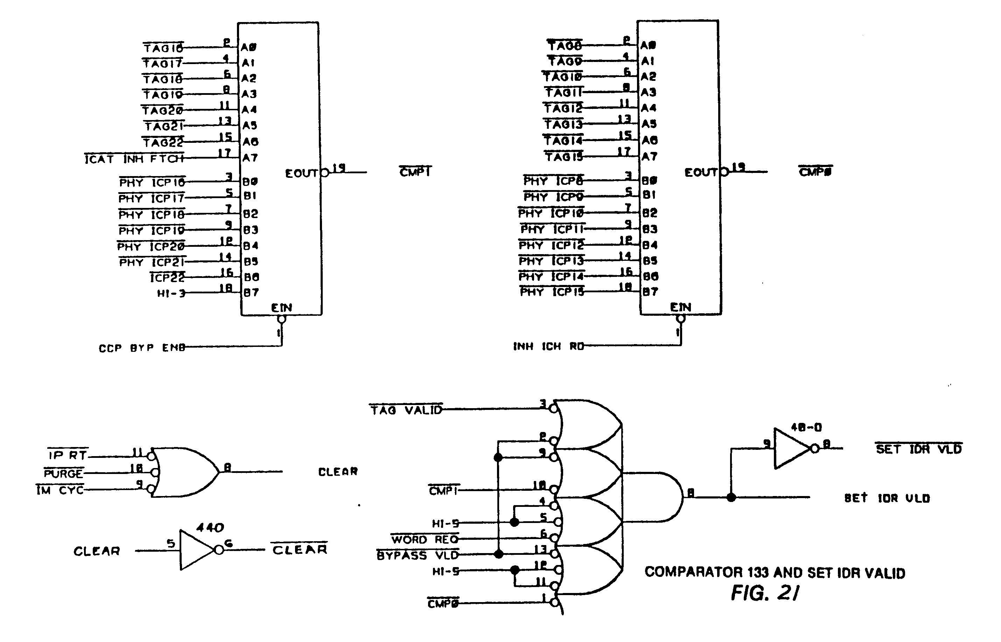

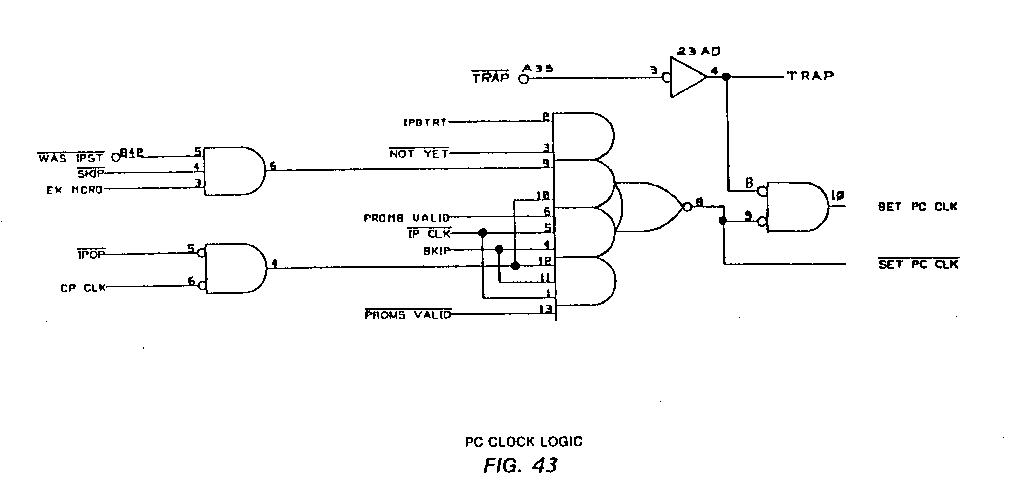

Specific logic circuitry for implementing the block diagram of the instruction processor to provide the operation discussed above with reference to FIGS. 10 to 15 is shown in FIGS. 16 to 45 ICACHE data store 130 and the ICACHE data store address input logic are shown in FIGS.16 and 17 respectively. while CPM register 134 supplying cache block words from memory is shown in Figs 18 and 18A. ICACHE tag store 131 is also depicted in FIG. 18B and 18C and ICACHE validity store 132, together with the validity store address input are shown in FIGS. 19 and 20. respectively. Comparator 133 and logic for providing the SET IDR VLD signal are shown in FIG. 21.

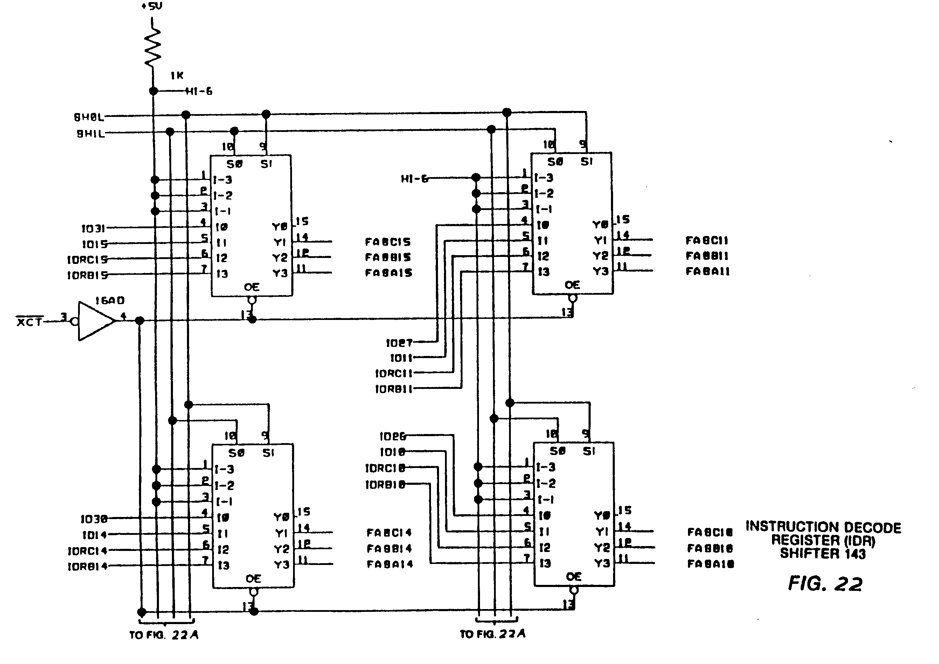

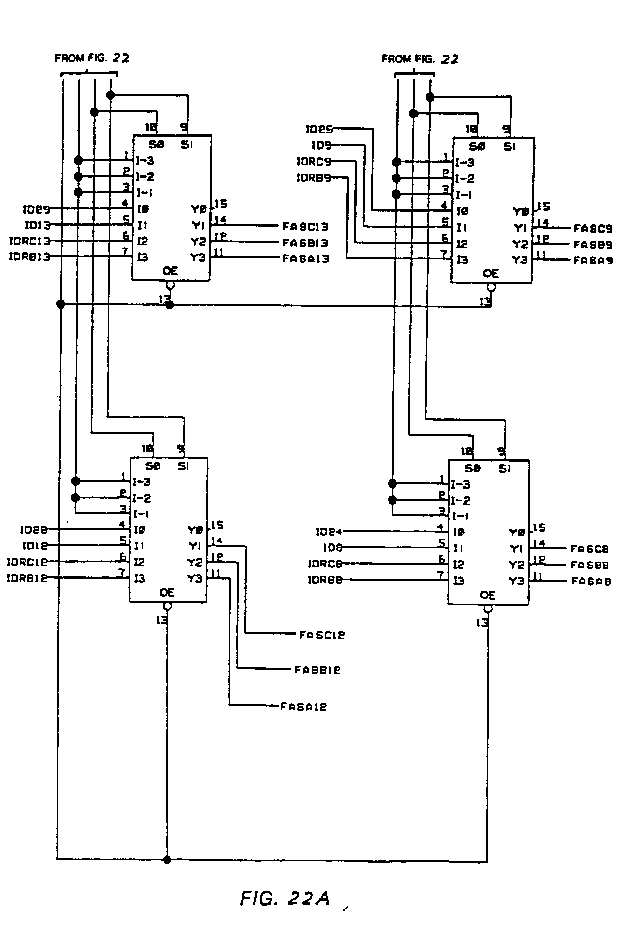

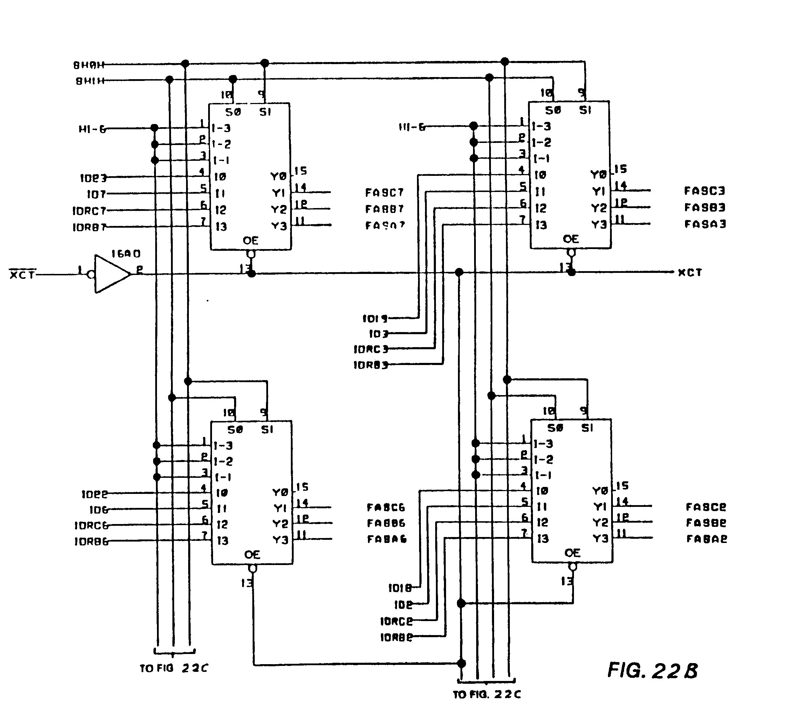

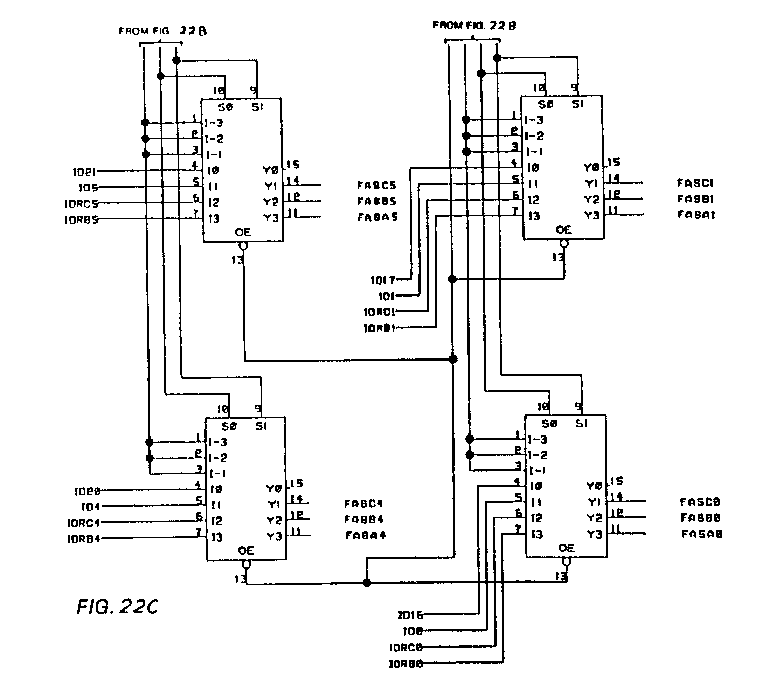

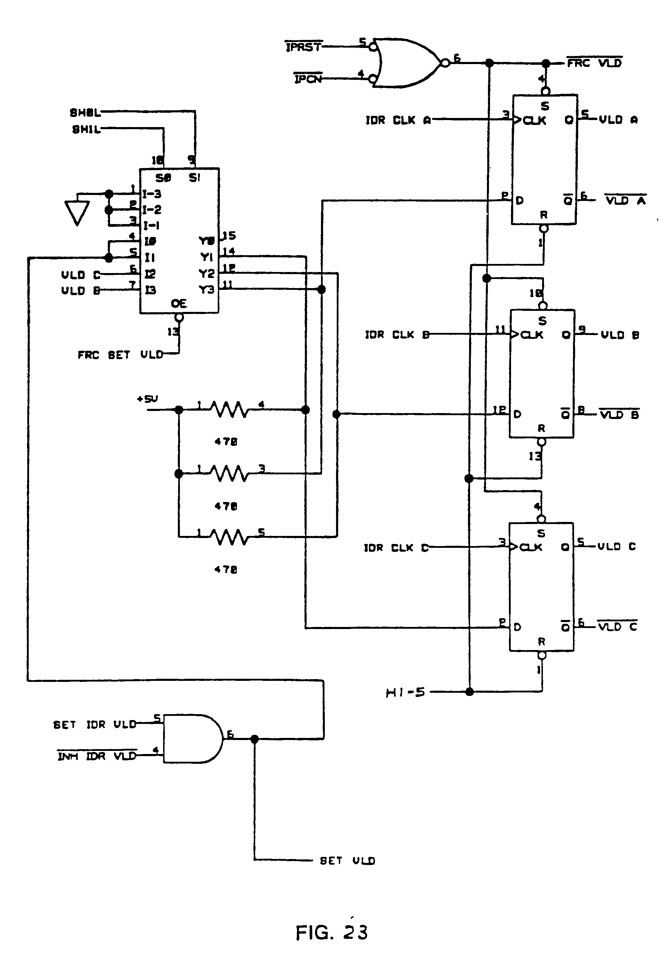

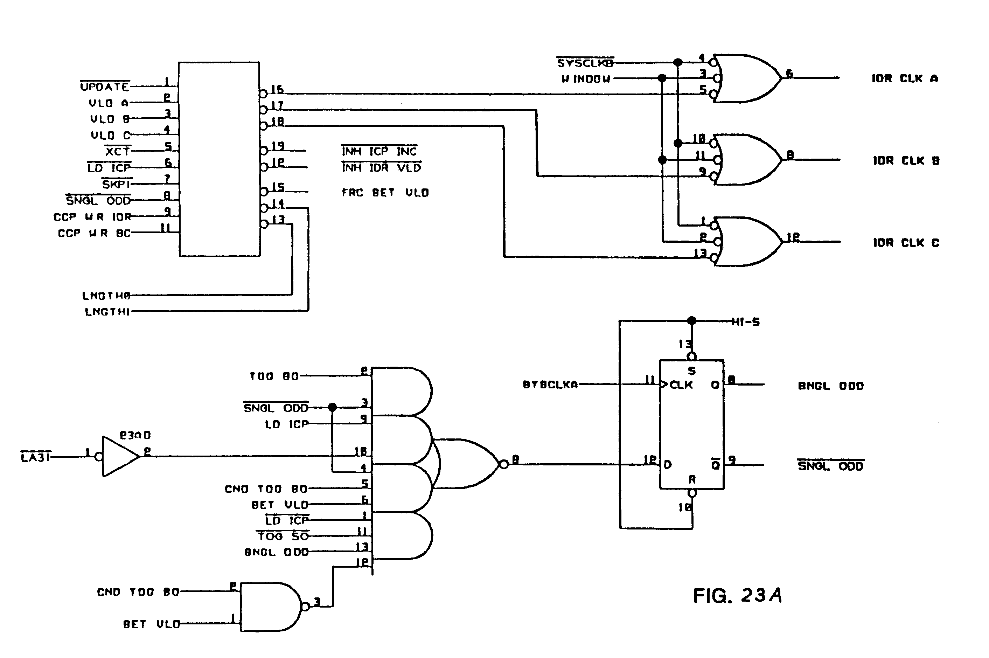

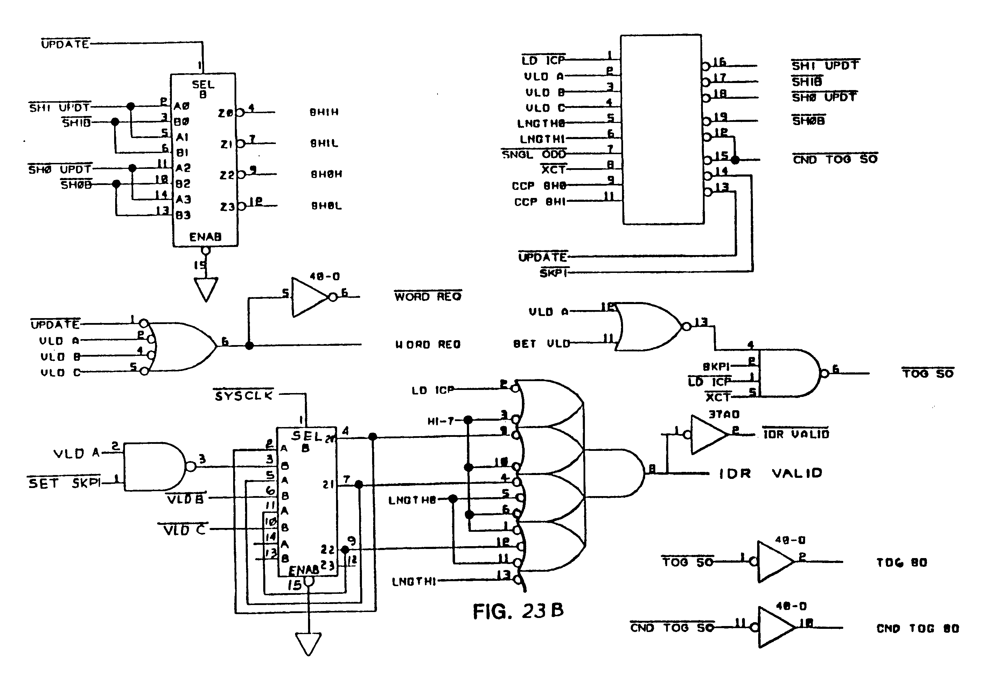

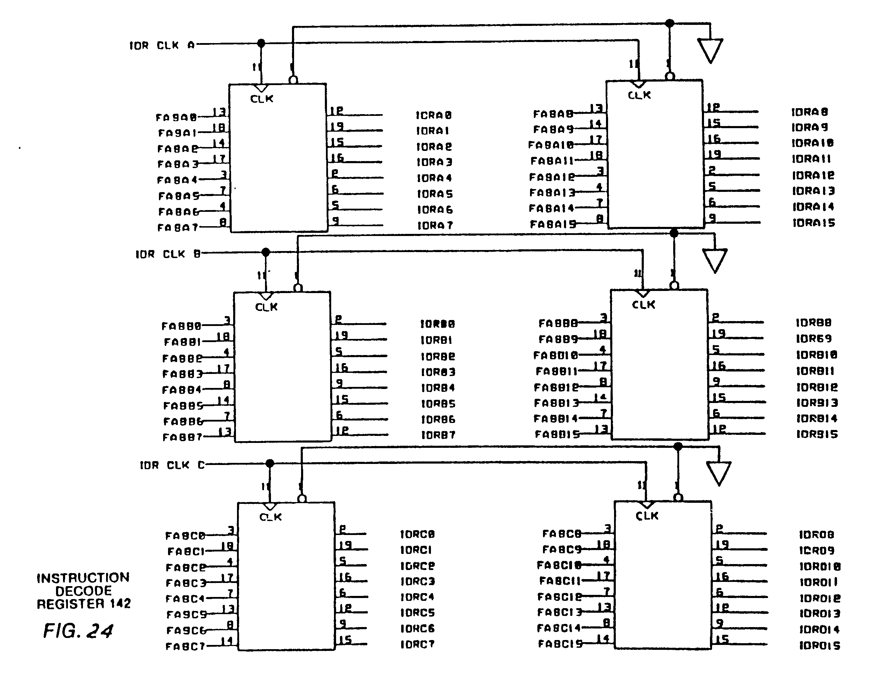

FIG. 22 shows IDR shifter 143. the IDR shifter control logic 137 being shown in FIG. 23. The instruction decode register (IDR) unit 142 is depicted in FIG. 24 and include IDR sections A, B and C as shown.

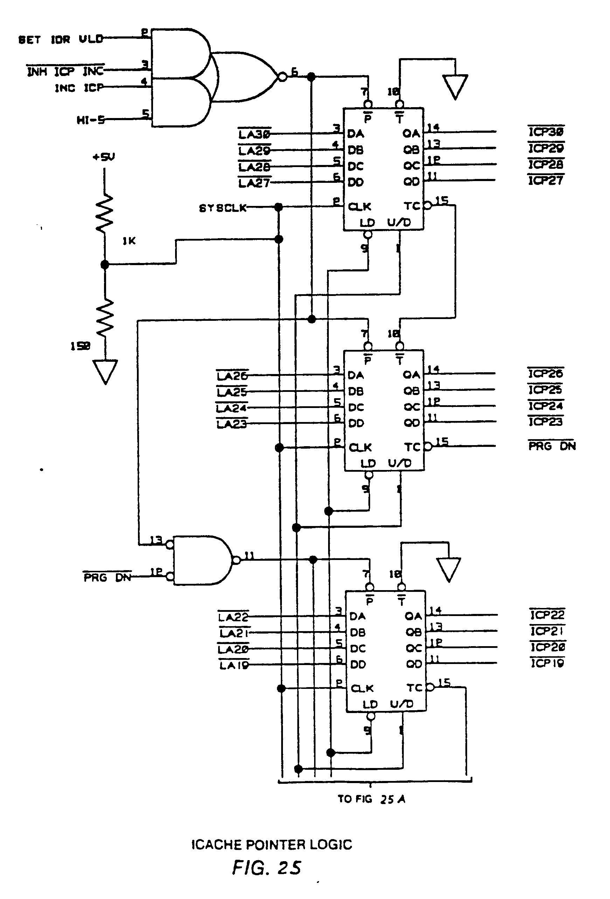

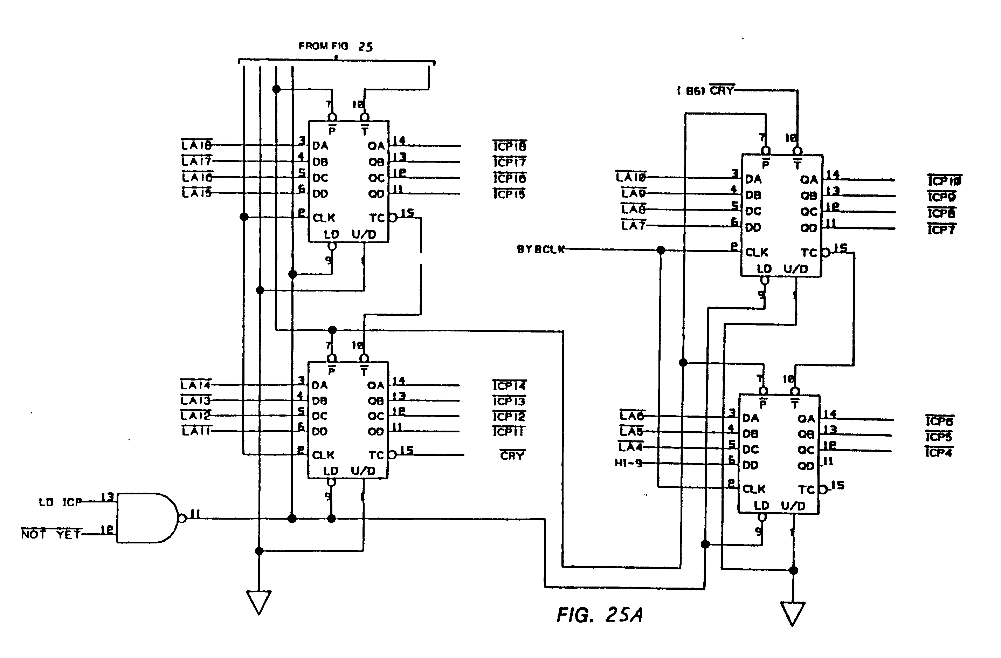

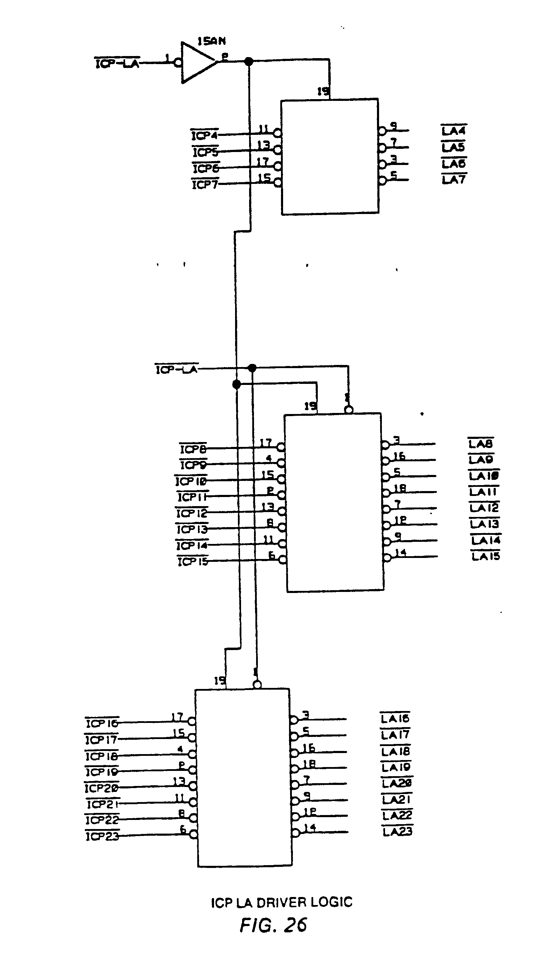

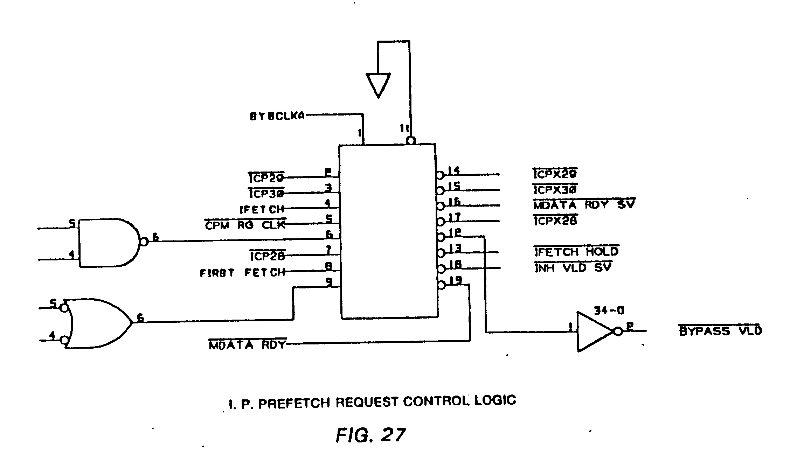

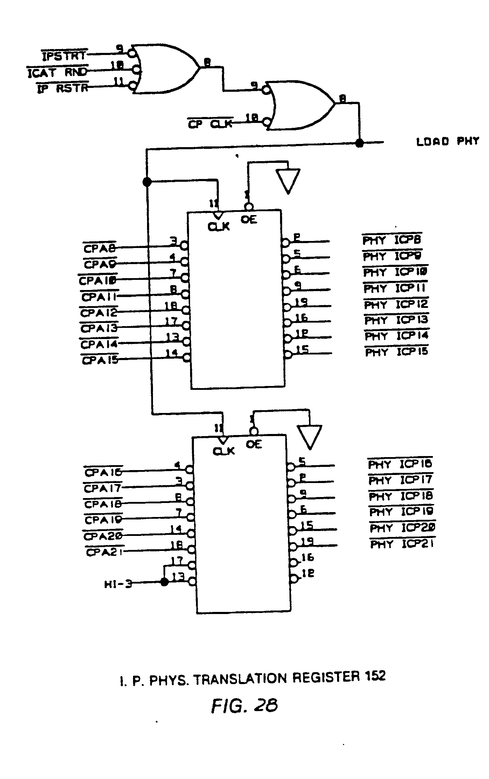

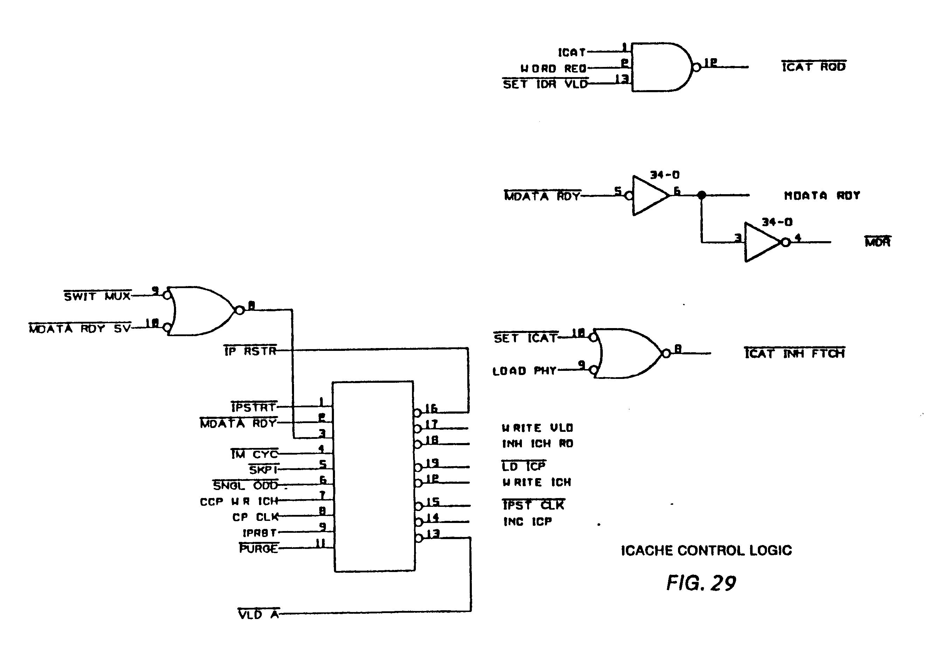

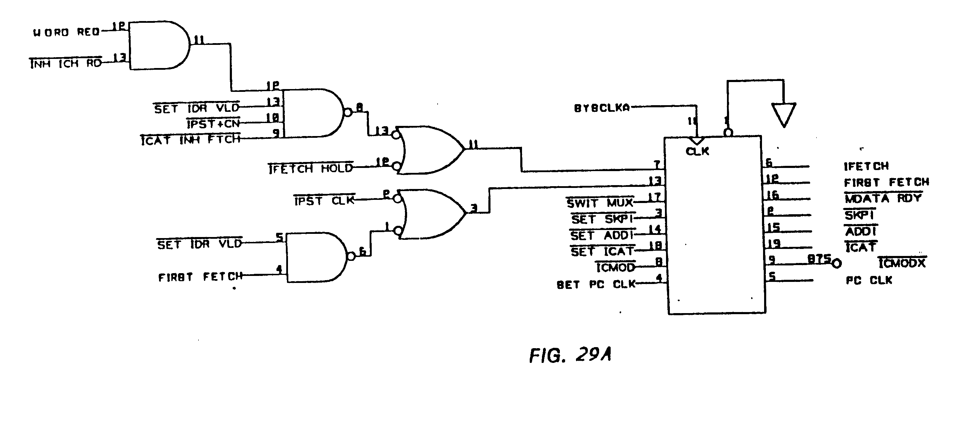

With reference to the ICACHE logic circuitry the ICACHE pointer (ICP) logic 150 and the ICP logical address driver logic of FIG 15 is shown in more detail in FIGS. 25 and 26 . respectively. The ICACHE pointer pre-fetch request control logic 151 and the physical ICP translation register 152 of FIG. 15 is depicted in more detail in FIGS 27 and 28 . respectively Other general ICACHE control logic is further depicted in FIG 29

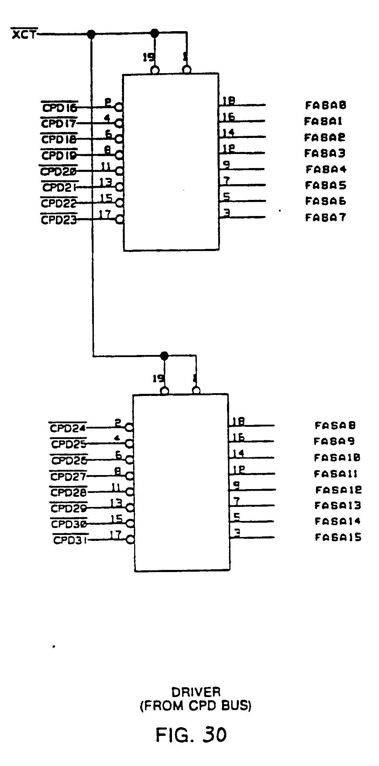

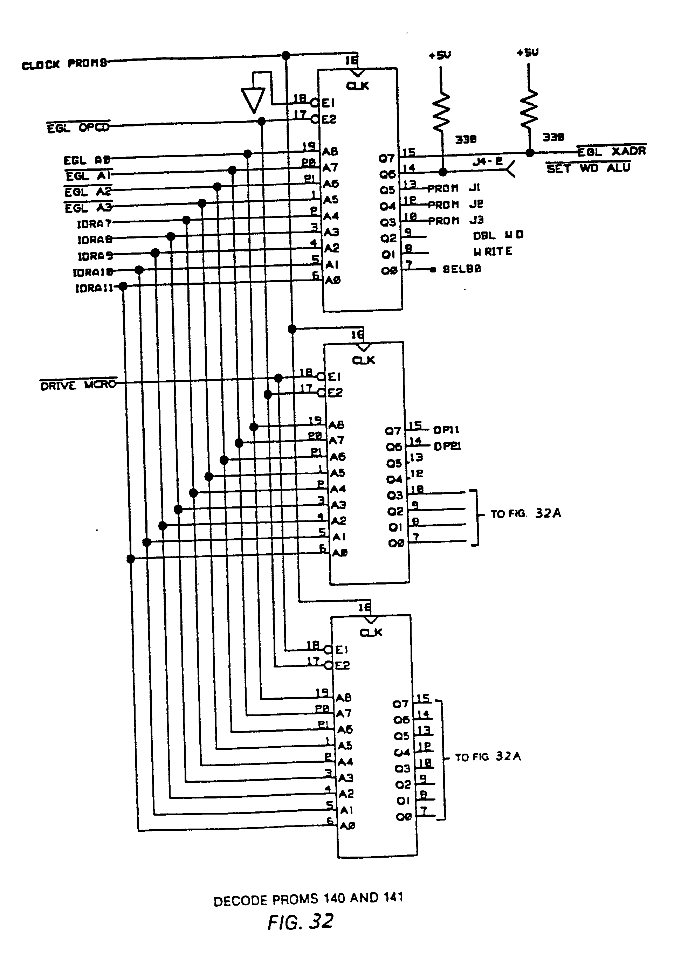

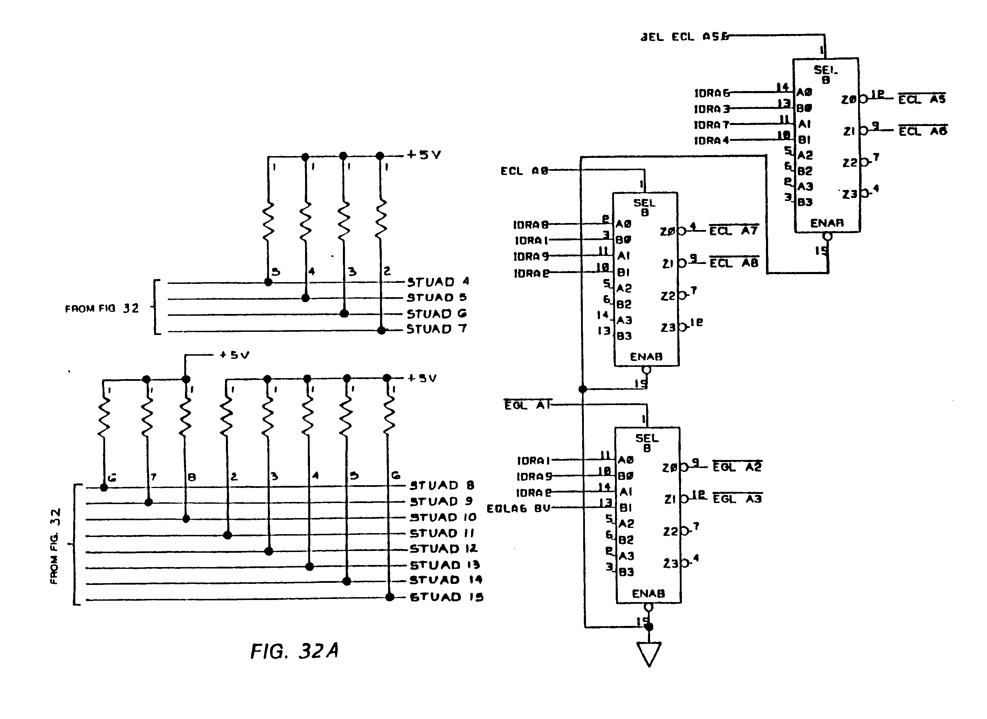

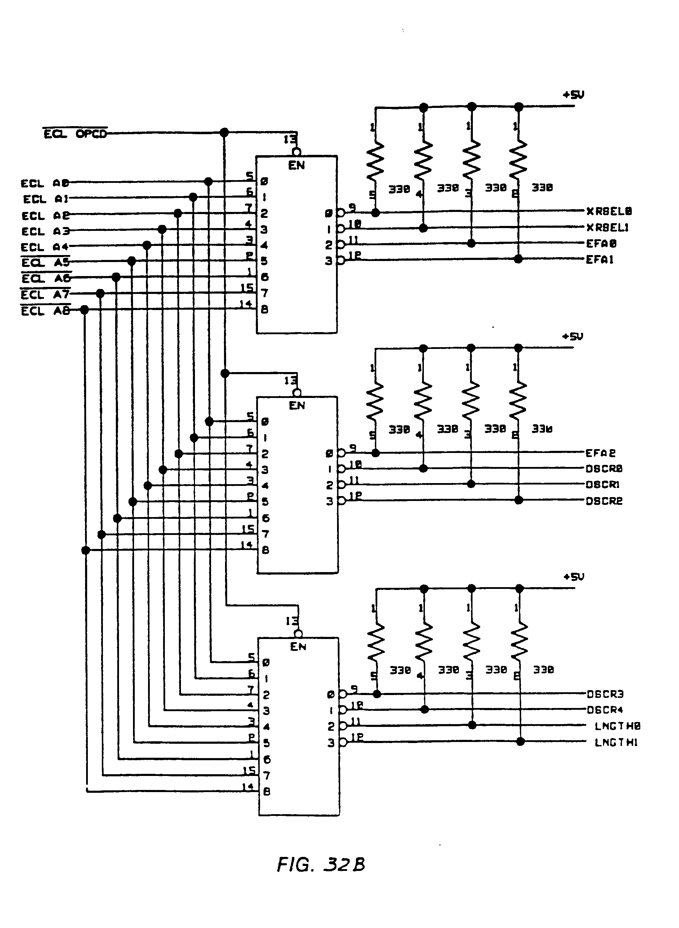

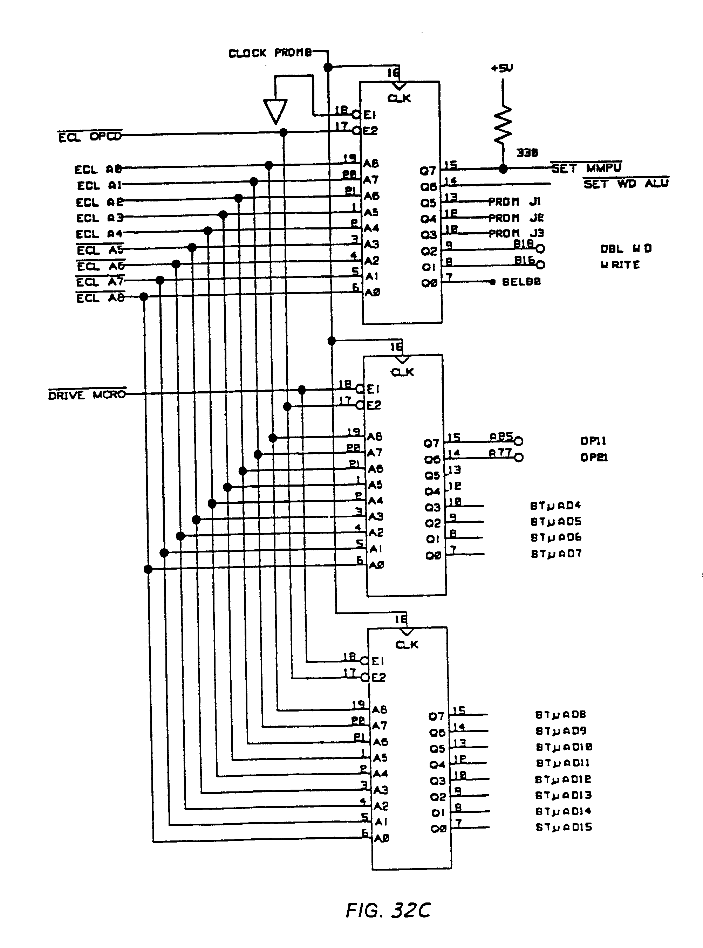

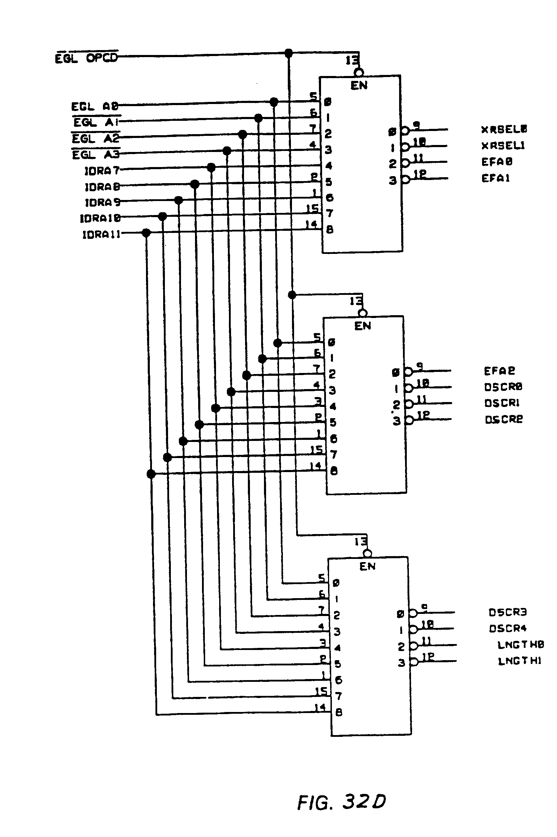

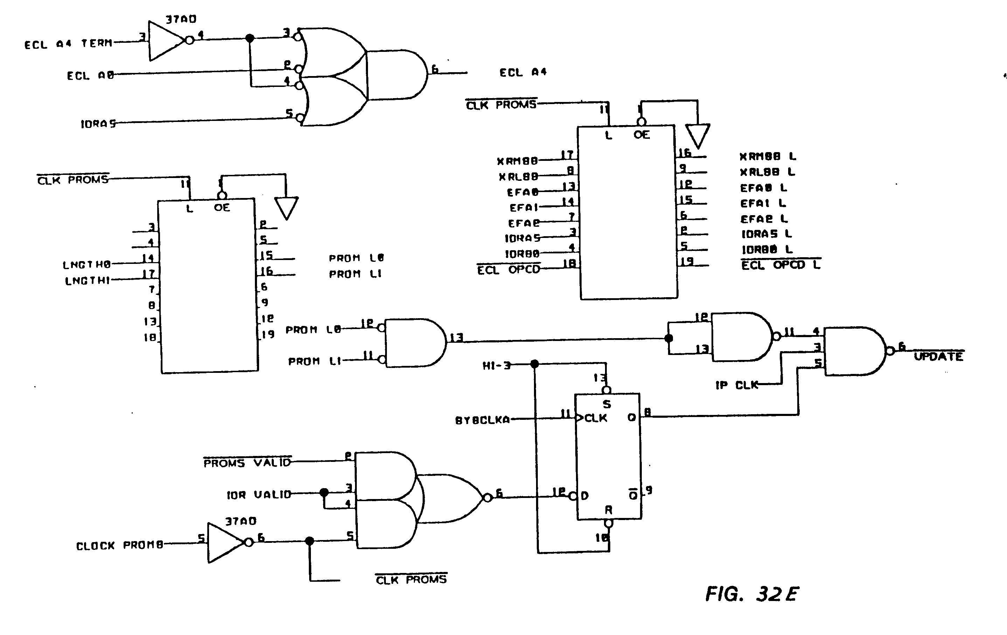

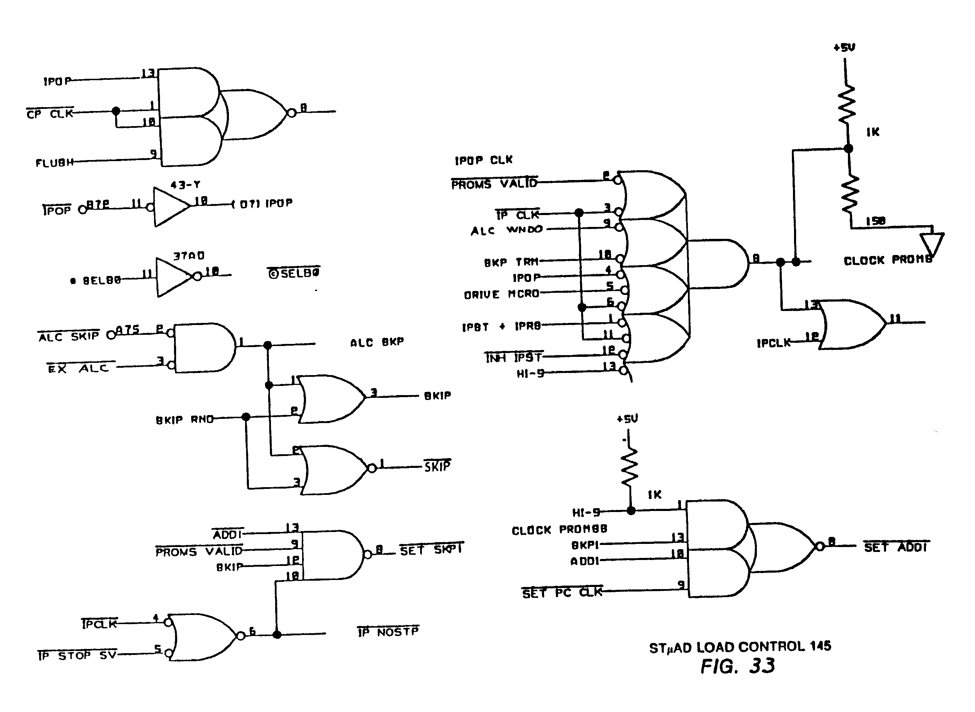

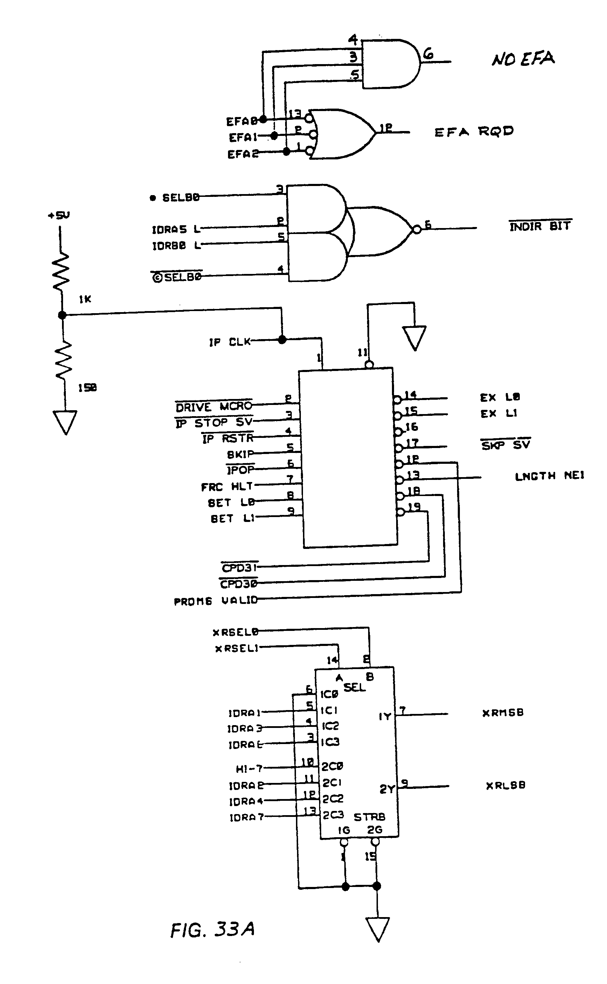

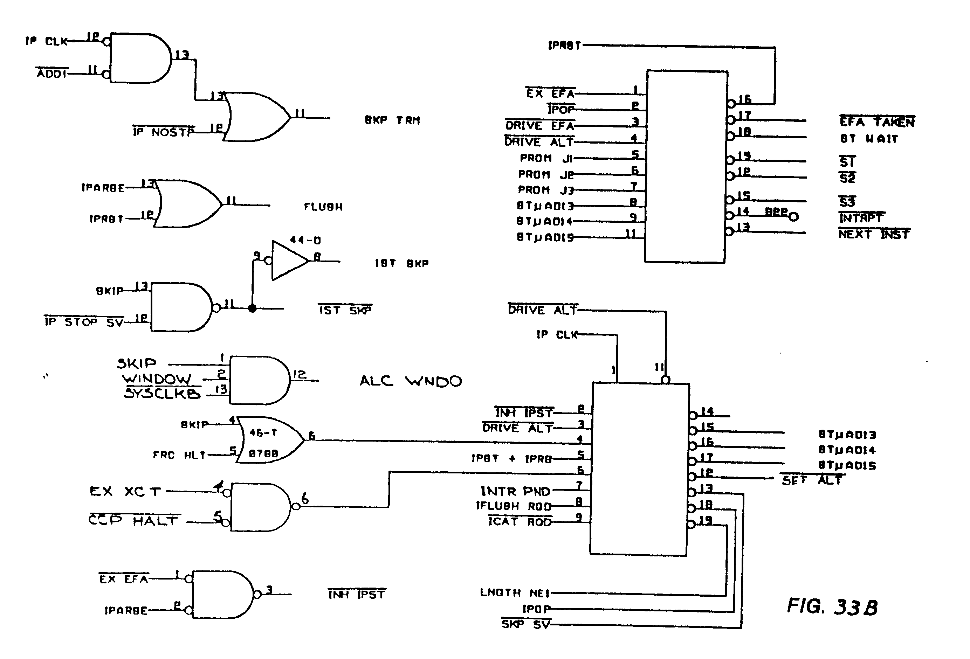

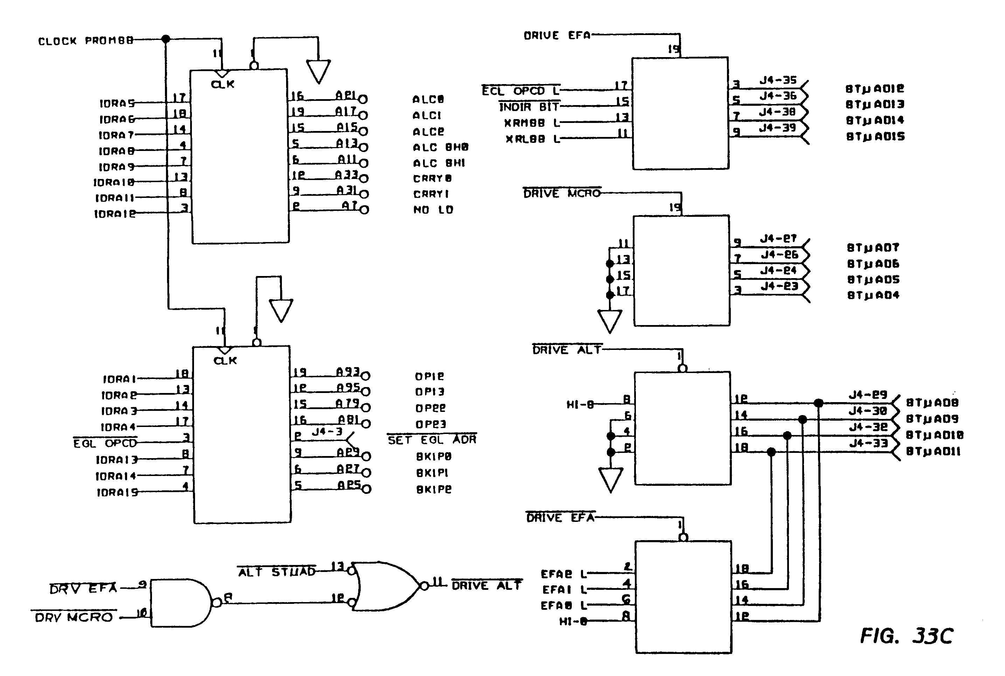

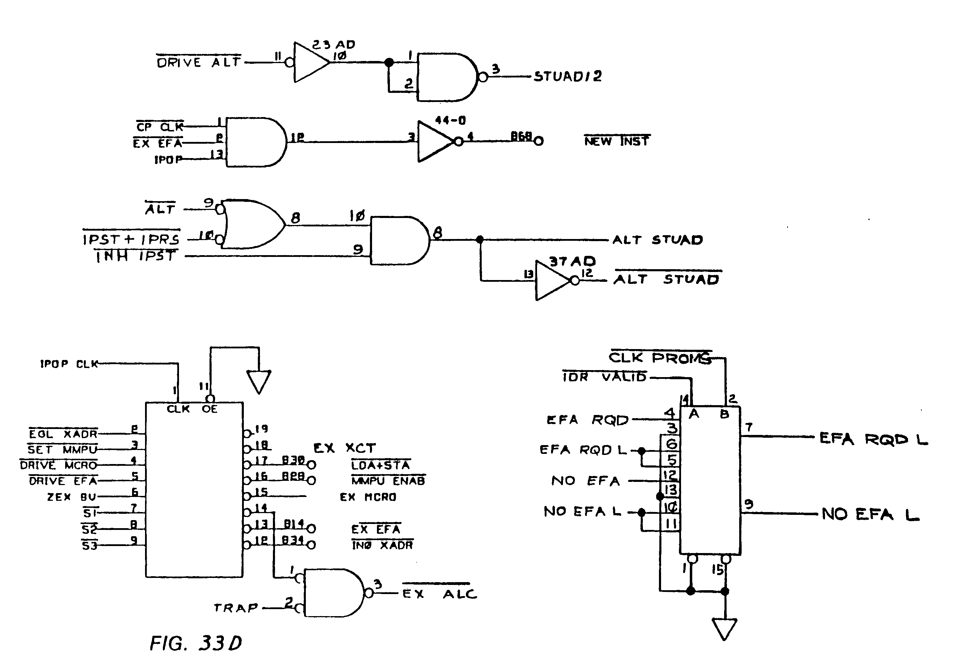

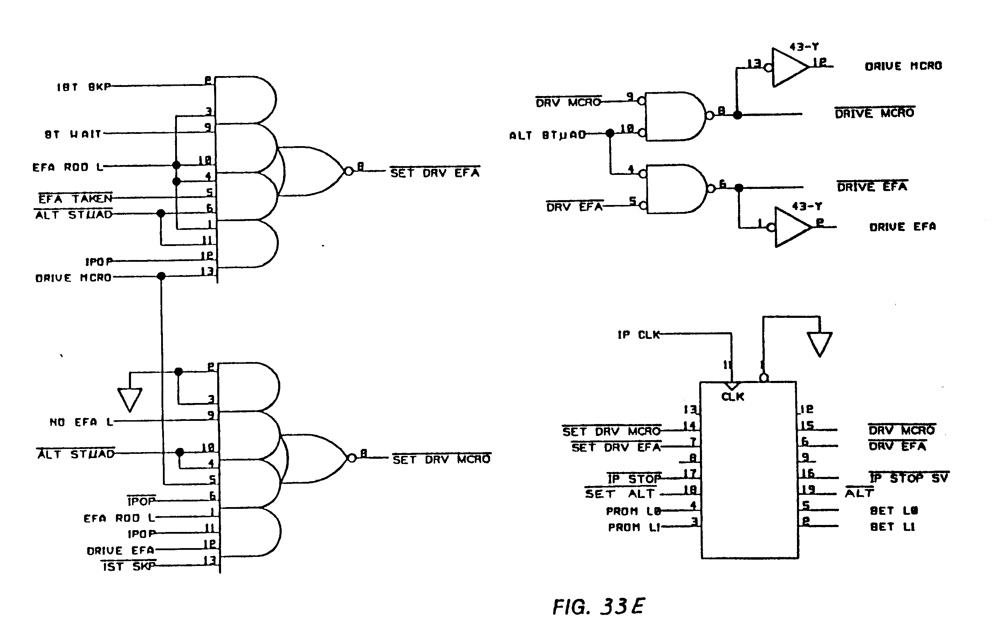

The driver logic which provides inputs FASA0-15 from the CPD bus to IDR A as shown in FIG 12 is depicted in FIG 30 while the instruction pre-decode logic and control therefor is shown in FIG. 31 Decode PROMS 140 and 141 which effectively include the ST$\mu$AD register 144. together with the IP status logic 138 are shown in FIG 32 The starting microaddress control logic 145 is depicted in detail in FIG 33

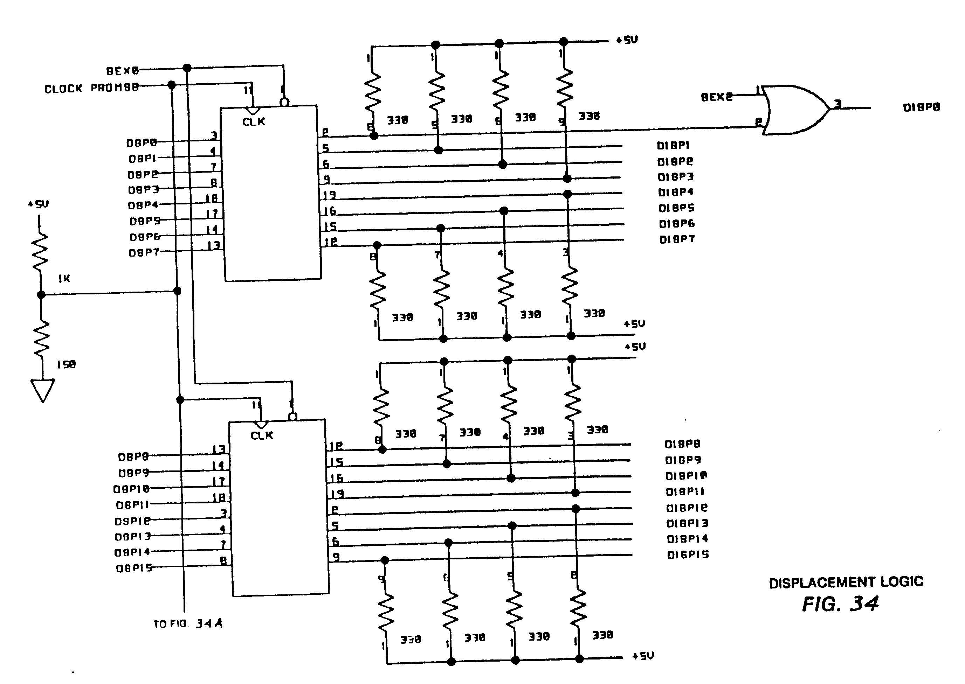

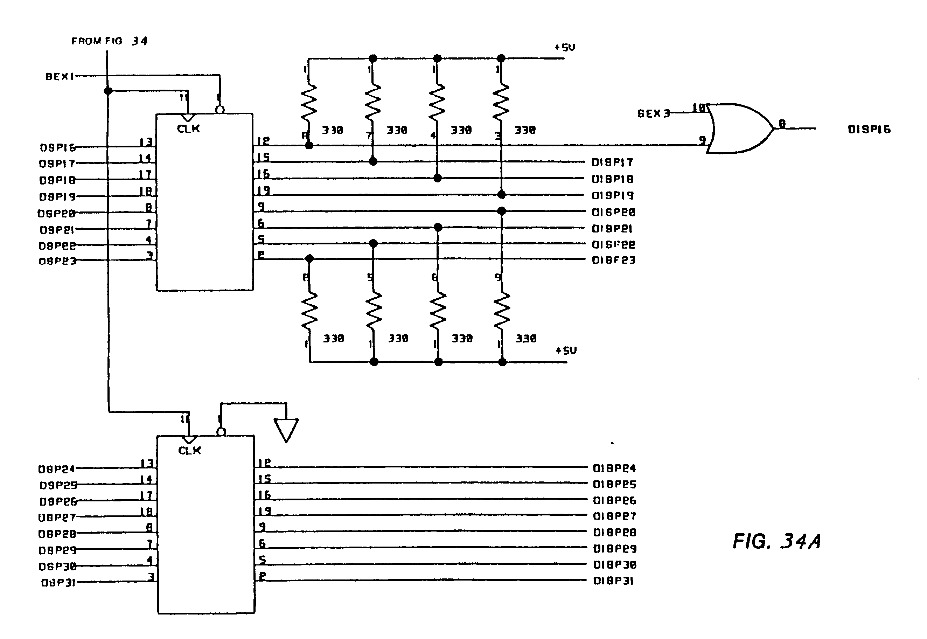

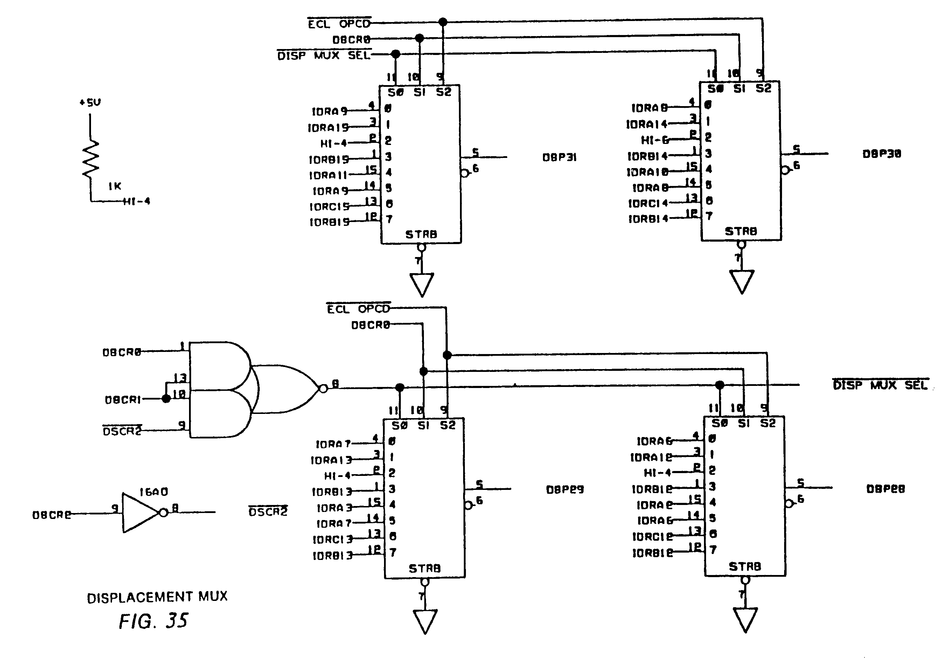

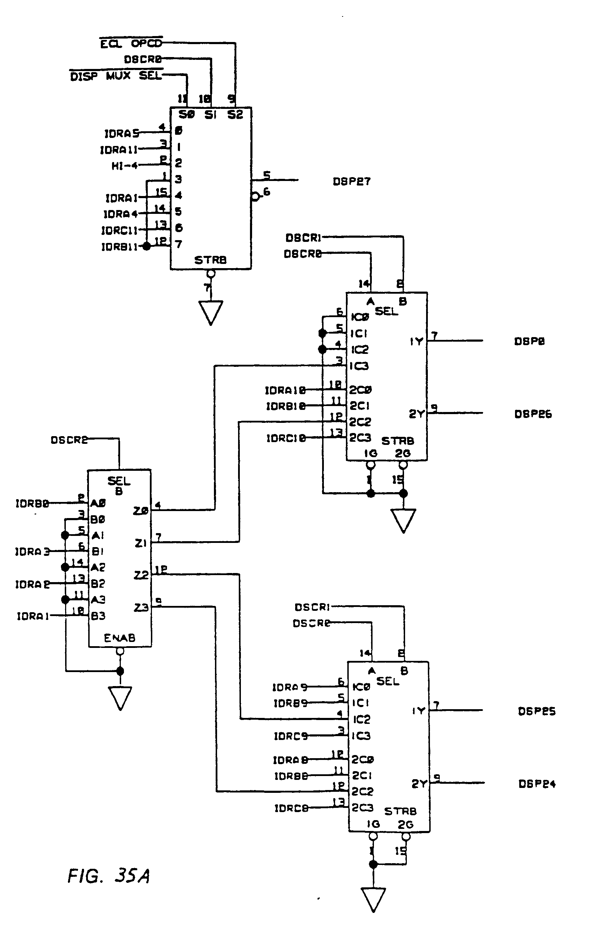

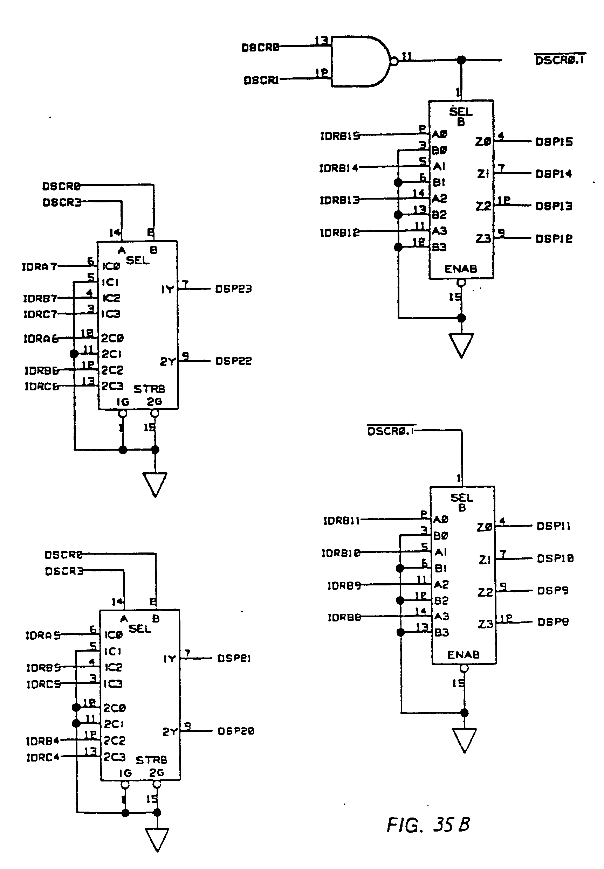

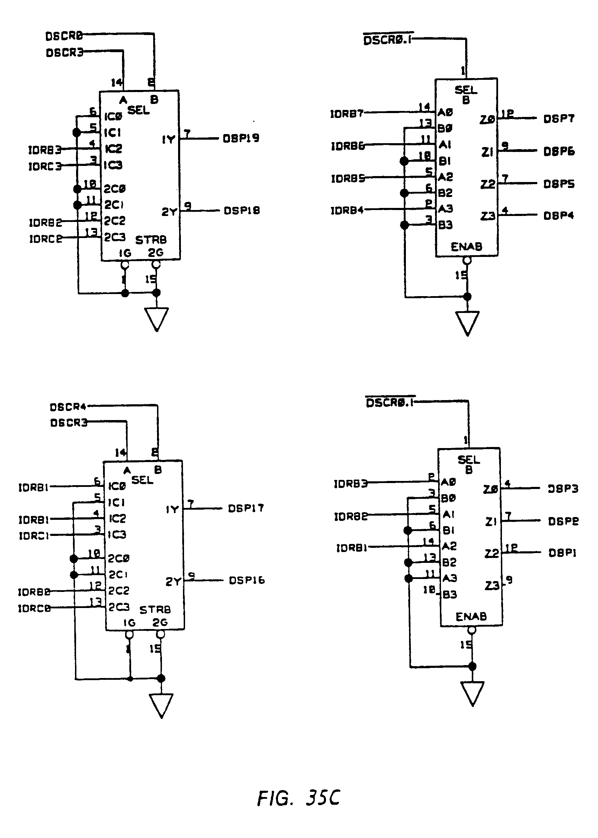

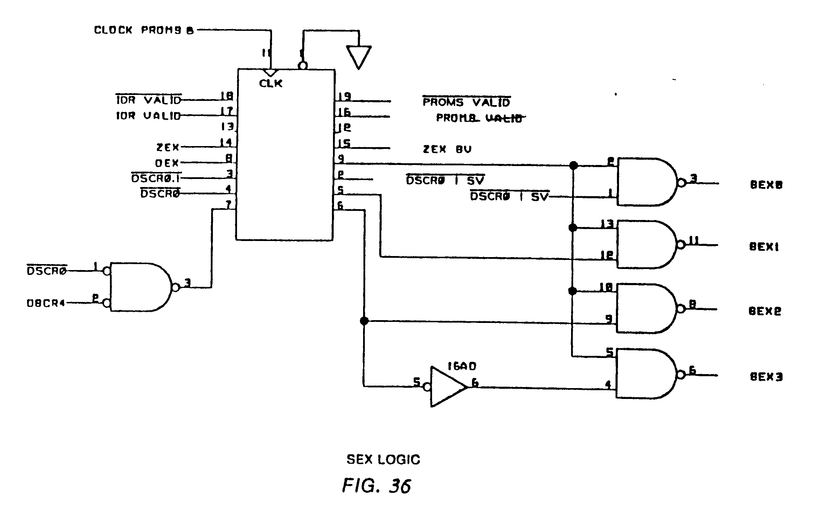

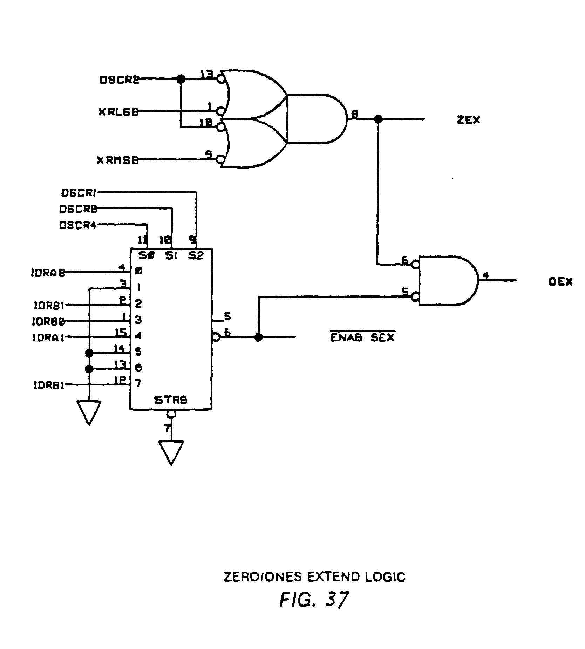

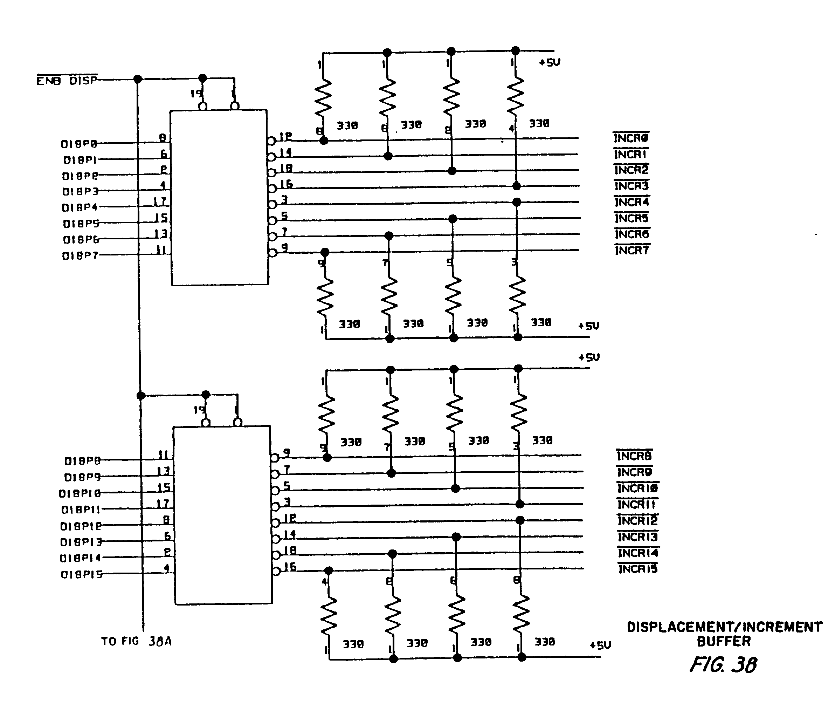

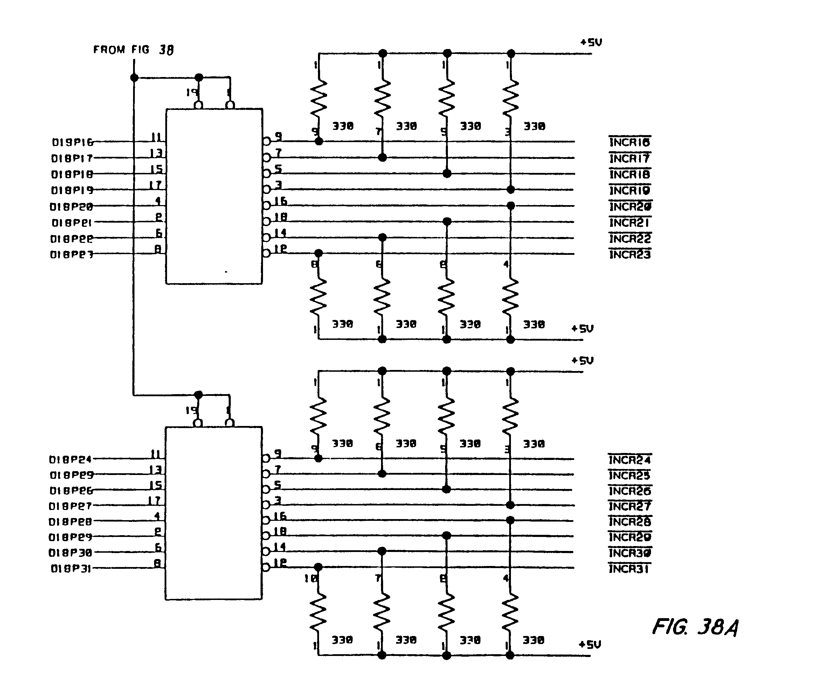

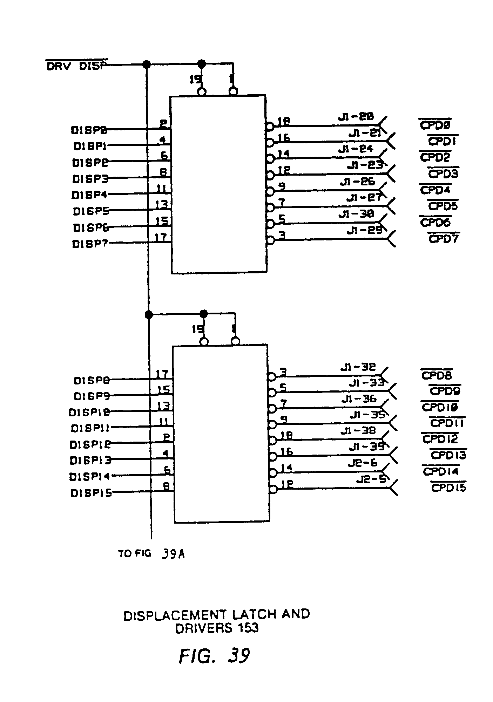

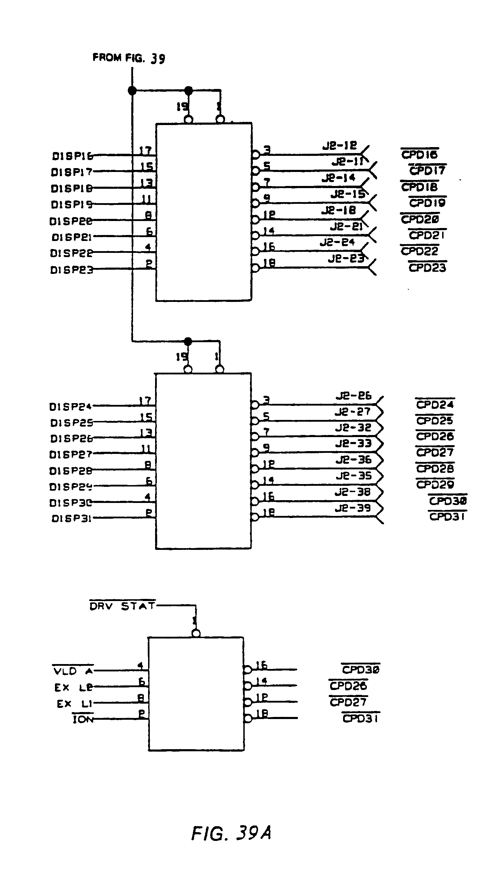

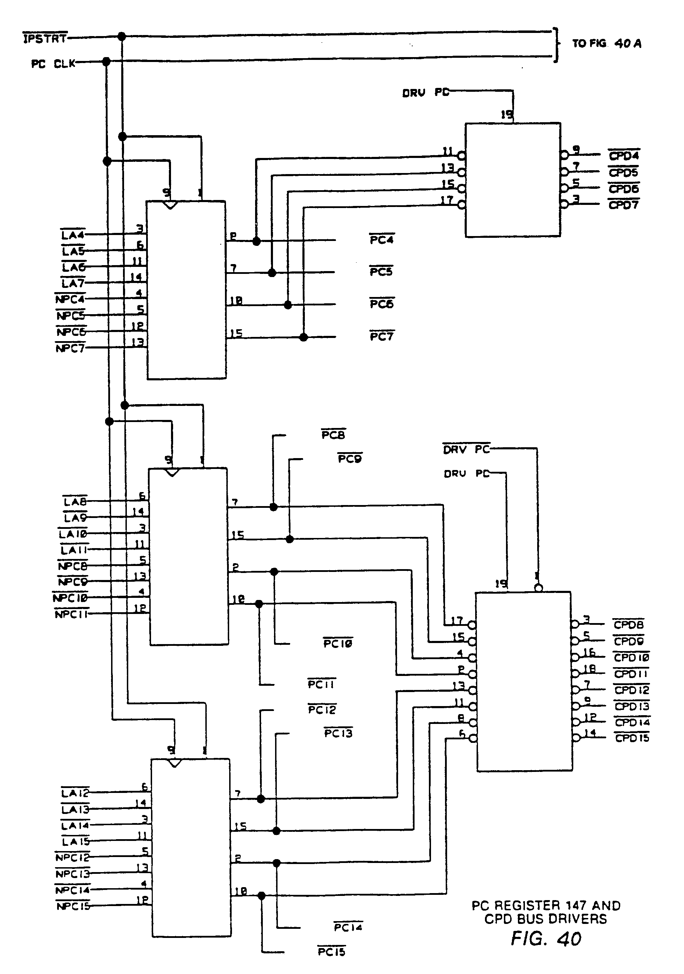

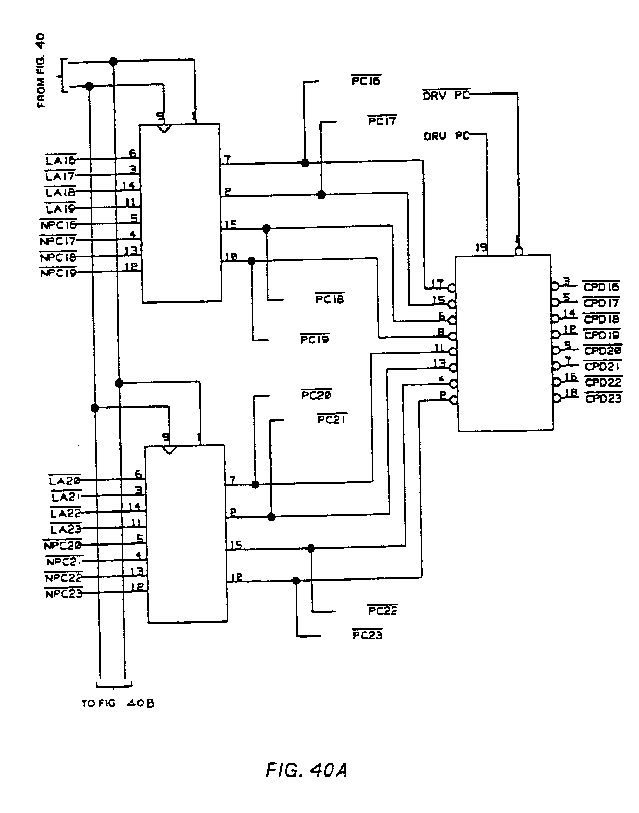

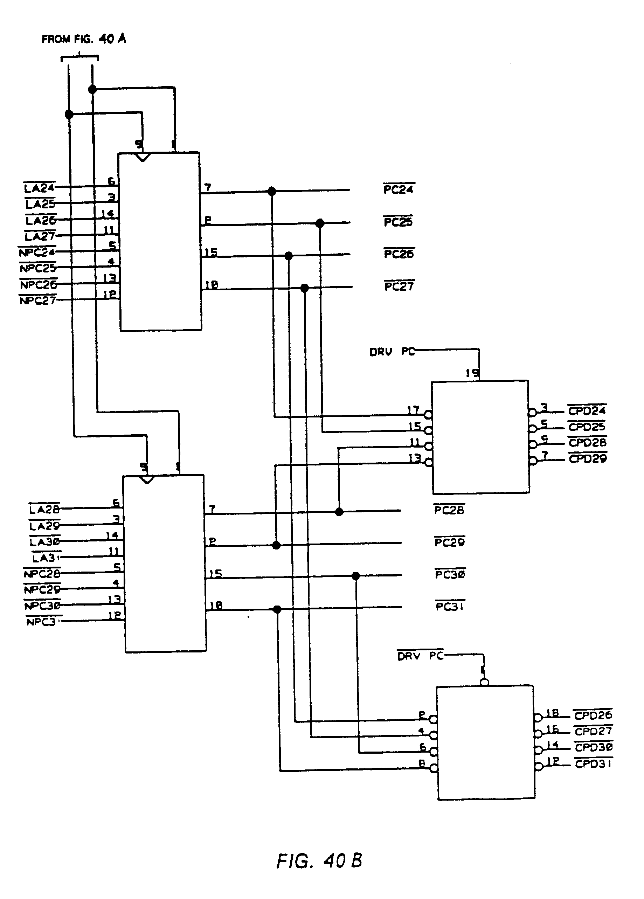

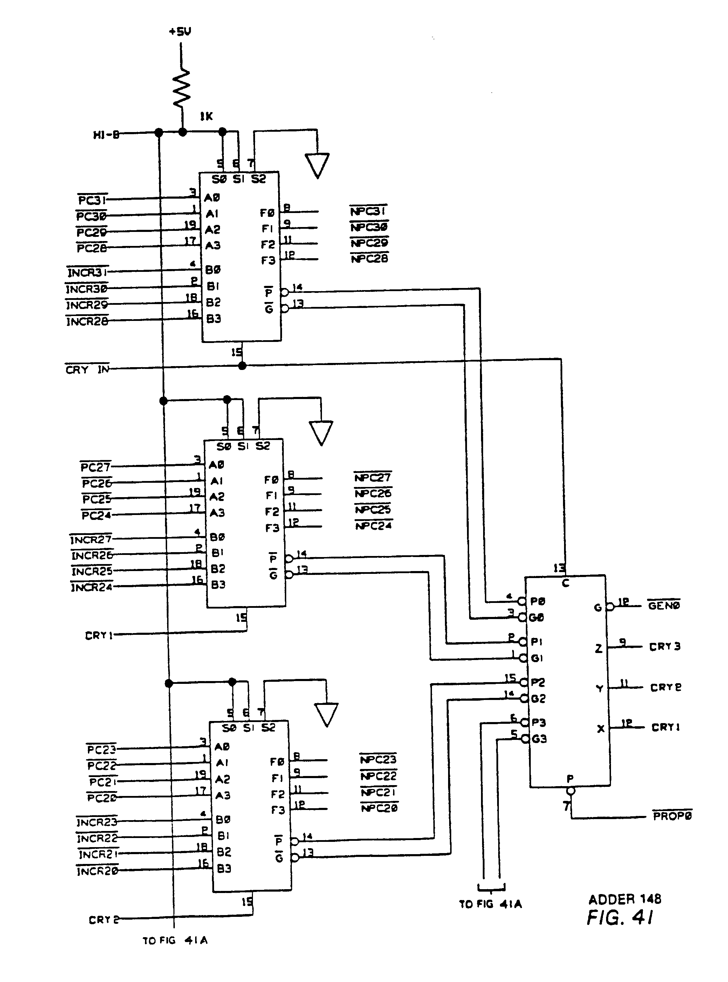

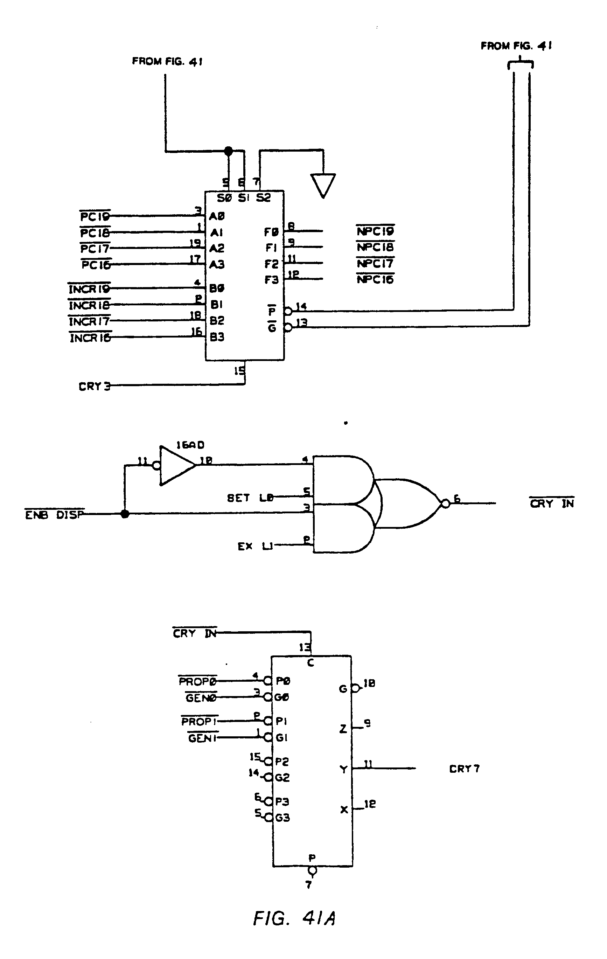

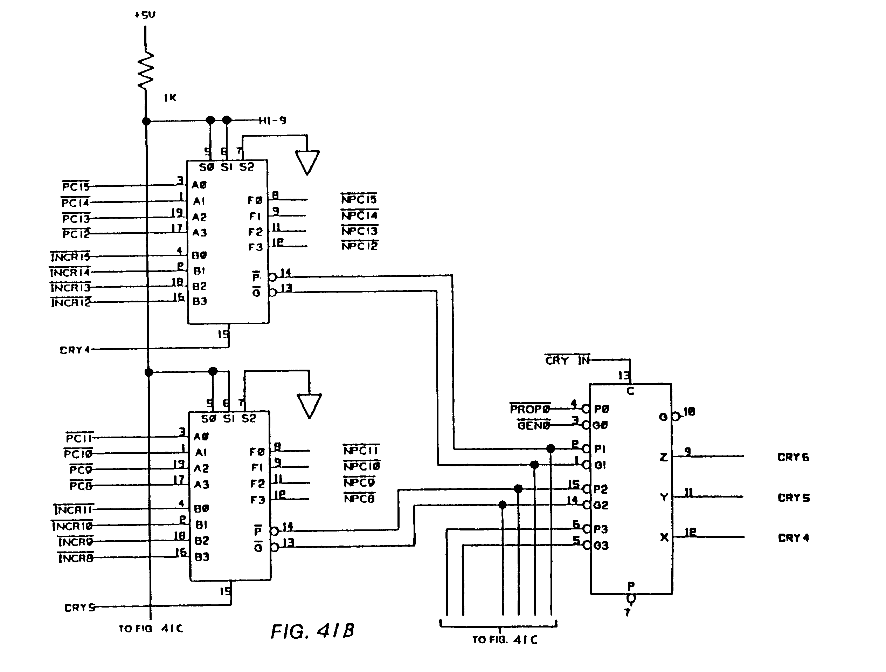

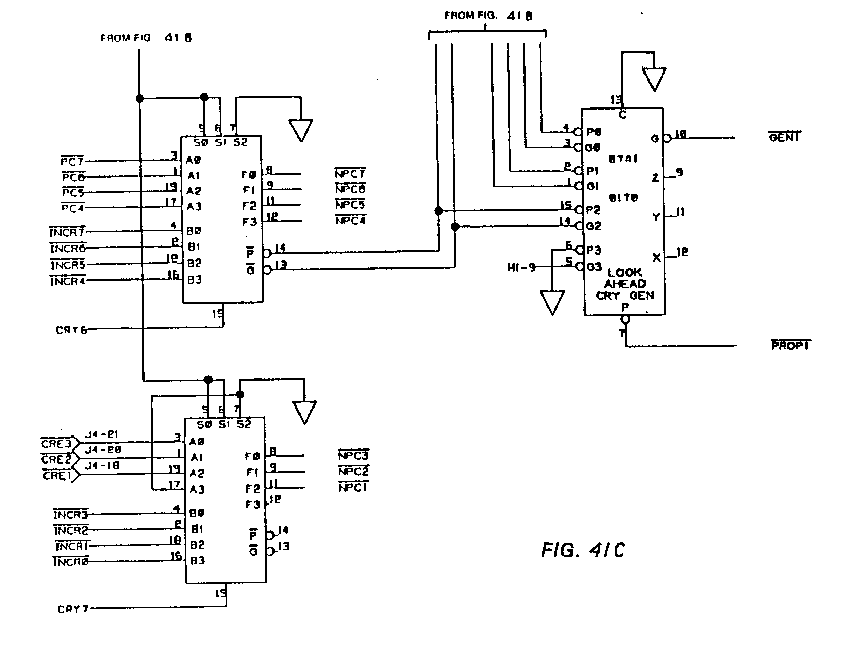

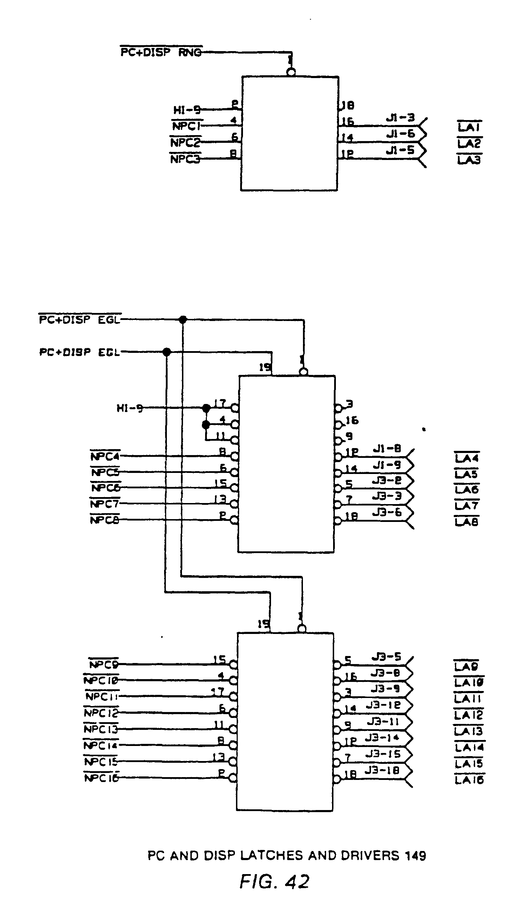

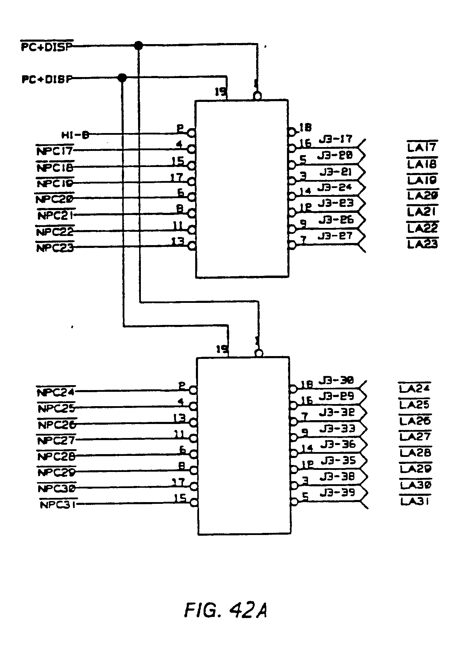

With reference to the displacement and program counter portion of the instruction processor. the displacement logic 146 is shown in FIG 34 the displacement multiplexer associated therewith being depicted in FIG 35 The sign extend (SEX) logic is shown in FIG 36 while the zero ones extend logic is shown in FIG 37 FIG 38 shows the displacement increment buffer of FIG 13 while the displacement latch and drivers 153 are depicted in FIG 39 FIG 40 shows program counter register 147 and the CPD bus driver of FIG 13 while adder 148 and the PC + DISP latch and driver units 149 are shown in FIGS 41 and 42 respectively Program counter clock logic is depicted in FIG 42

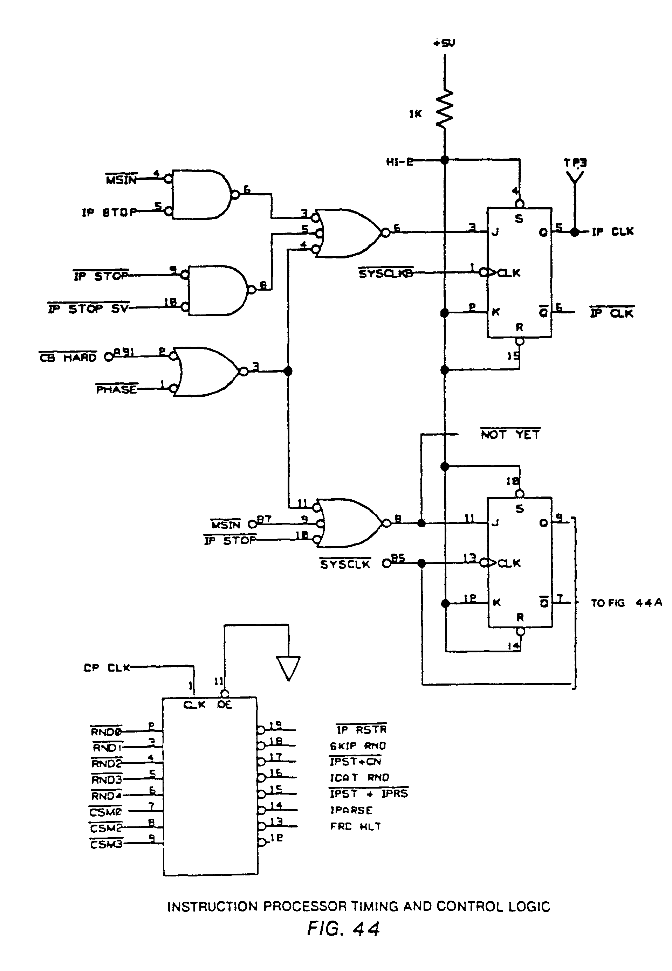

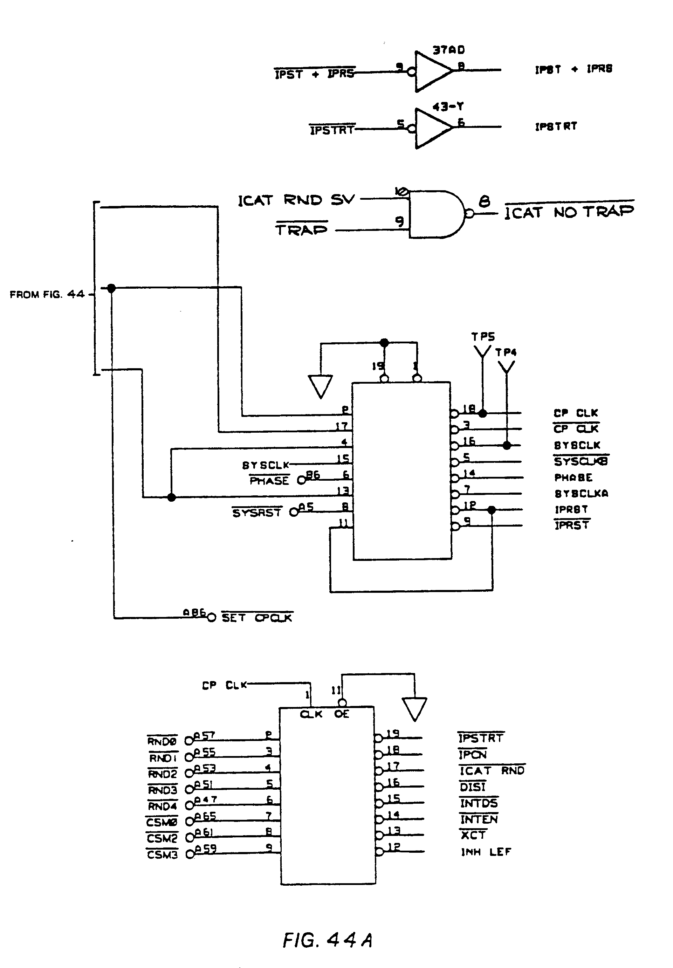

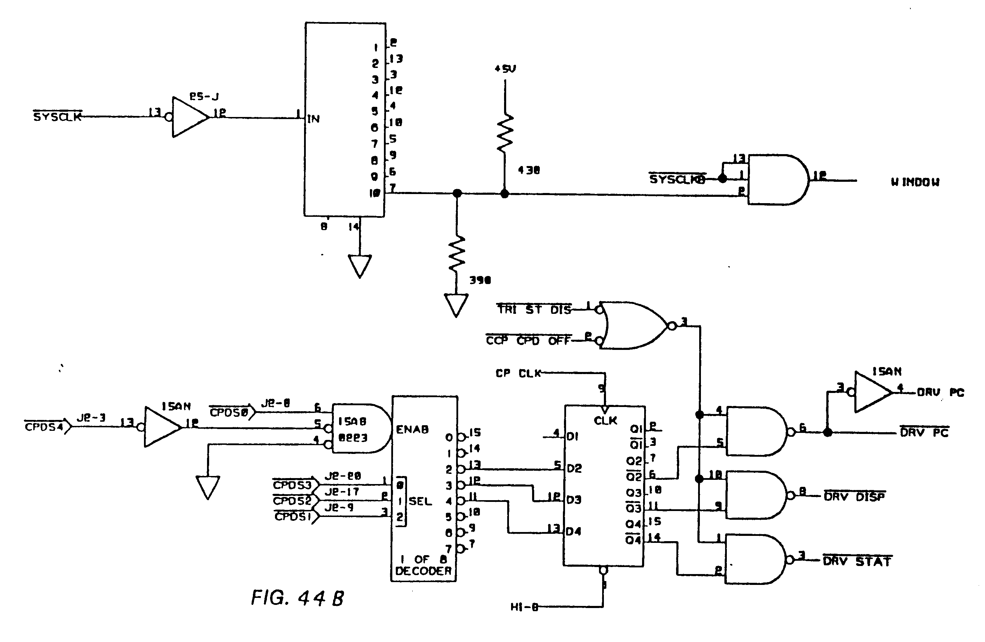

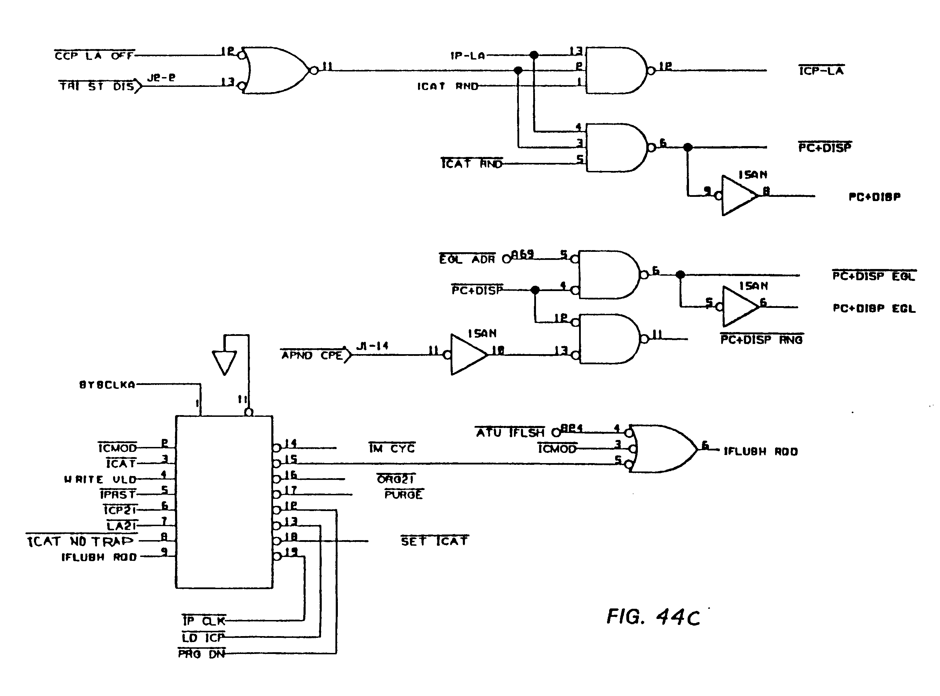

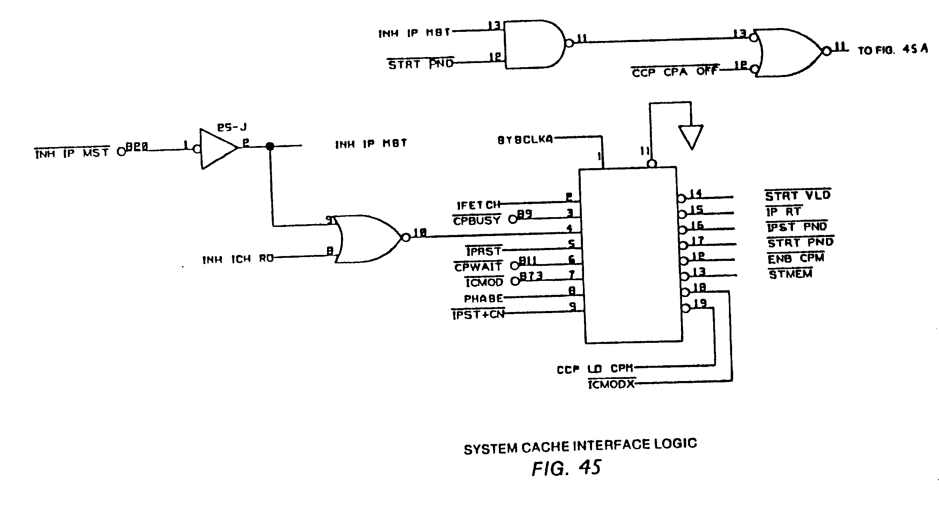

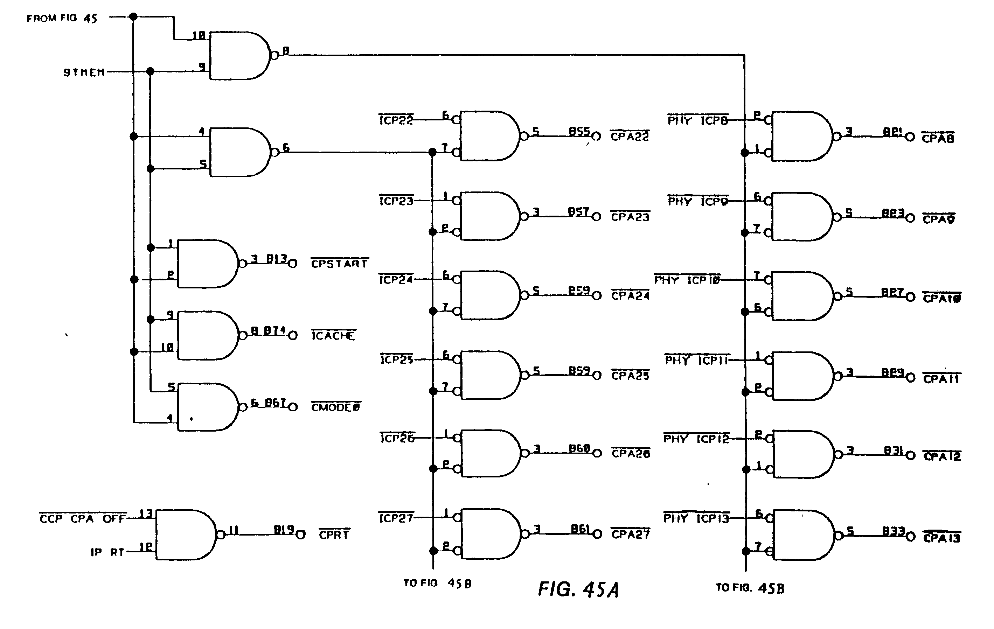

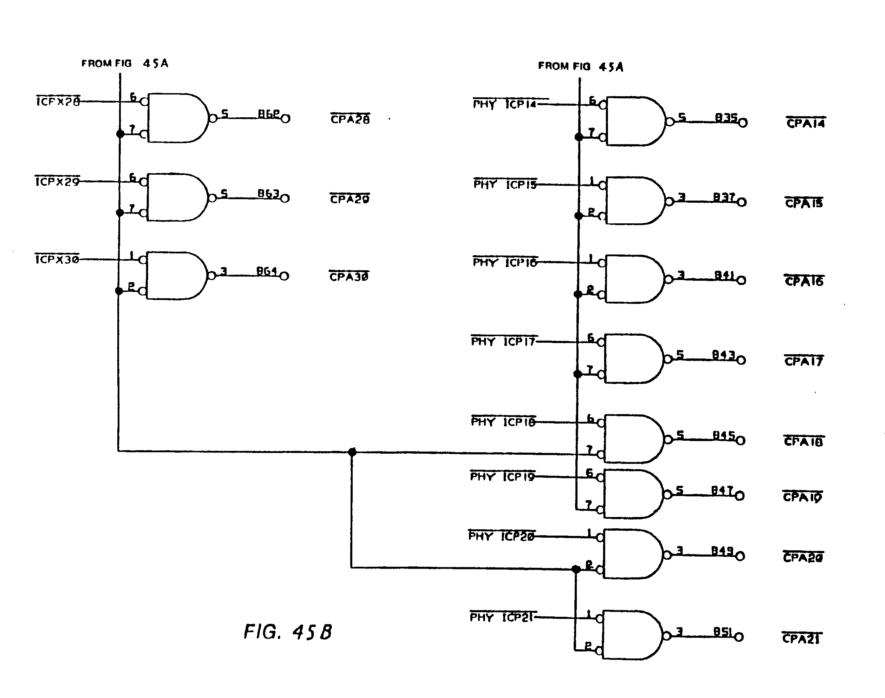

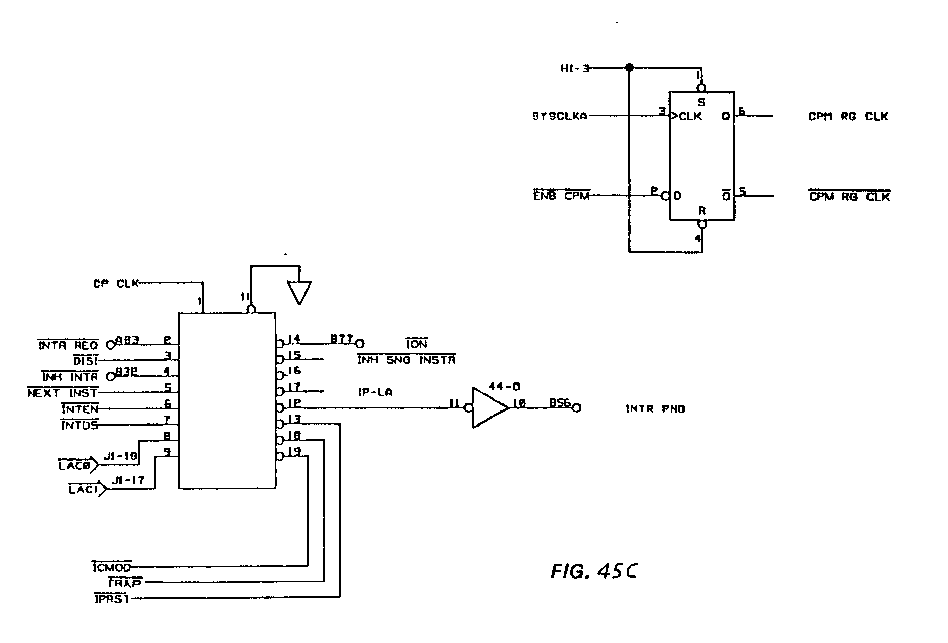

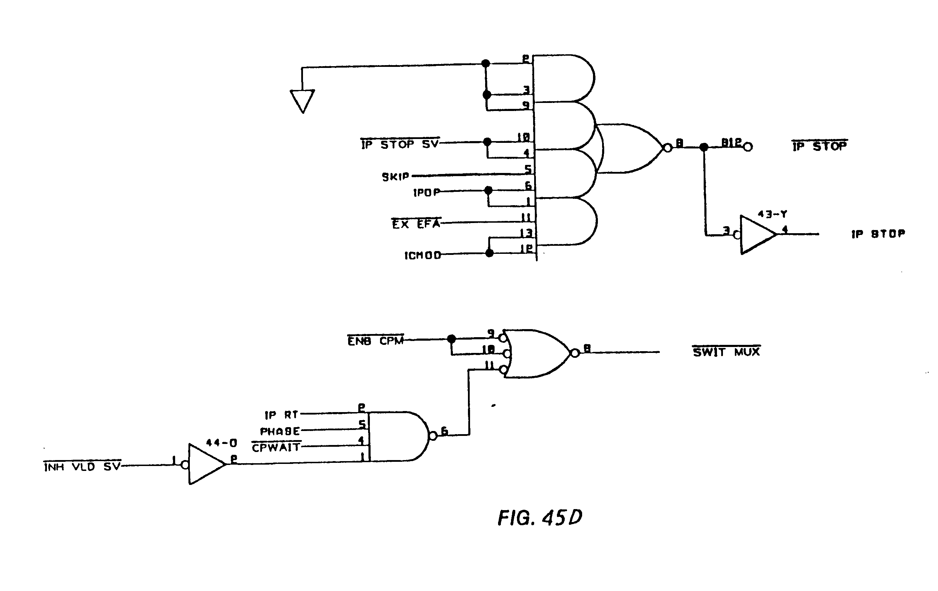

General instruction processor timing and control logic circuitry is shown in FIG 44 . while the system cache interface logic required for the instruction processor 12 to interface the system cache 17 is shown in FIG 45


## ARITHMETIC LOGIC UNIT

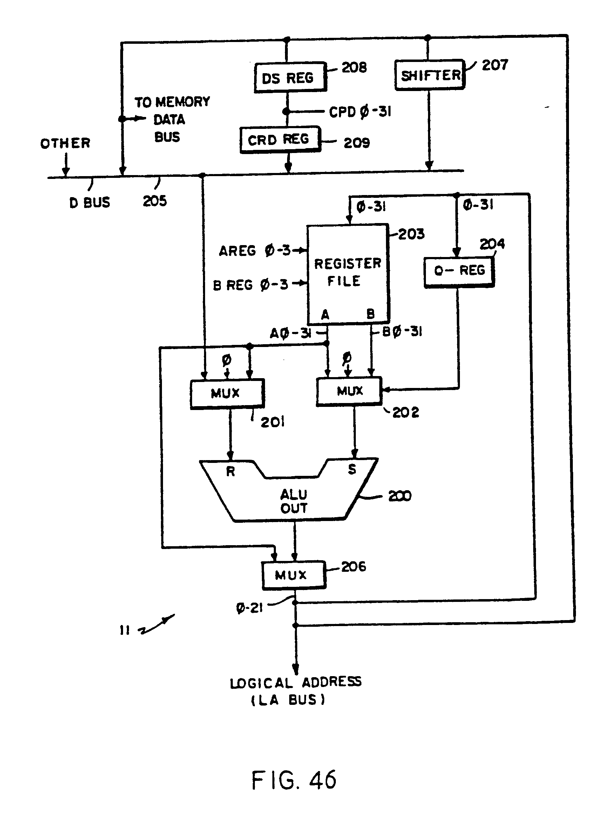

Before discussing in more detail the format of the micro-instruction word. it is helpful to discuss FIG 46 which shows a block diagram of a typical arithmetic logic unit generally having a configuration known to those in the art As can be seen therein. the ALU unit 200. which performs the arithmetic and logical

operations, has two inputs, identified as inputs R and S, which are supplied from a pair of multiplexers 201 and 202, respectively. The inputs to multiplexer 202 are obtained from the A and B outputs of a register file 203. A third input may be obtained from a source which supplies zeros to the multiplexer at all 31 bit positions (identified as the "0" input) and a fourth input may be obtained from Q register 204.

Register file 203 contains 16 and 32 bit registers and includes four fixed point registers (ACC0-3), four floating point registers (FPAC0-3) , and eight general registers (GR0-7). The selection of the appropriate registers for supplying the A and B inputs to ALU 200 is determined by the AREG0-3 and BREG0-3 bits of the micro-instruction field, as discussed in more detail below. The inputs to multiplexer 201 are obtained from the A output of the register file, from the D-bus 205 or from an all zeros input, as discussed with reference to multiplexer 202. The output of ALU 200 is supplied to a multiplexer 206 which selects either the output from ALU 200 or an output directly supplied from the A terminal of register file 203. The output of multiplexer 206 can be supplied to the logical address bus if the calculation is an address calculation, to the register file 203 for writing back into a selected register therein, to Q register 204 or to a plurality of other units on the arithmetic logic board, significant exemplary ones of which are identified as shifter units 207, a data store register 208 or directly to the D-bus 205 or to the memory data bus. The shifter outputs are supplied to the D-bus, while the data store register 208 supplies data to the CPD bus or to the D-bus via CPD register 209. Data supplied to the D-bus can then be used in subsequent arithmetic or logic operations via multiplexer 201. Other sources of the system may also supply data to D-bus 205, if desired. The general configuration of the arithmetic logic unit board 11, as shown in Fig. 46 is helpful in understanding the micro-instructions which are discussed below.

In another operation indigenous to the system described here the 31-bit value contained in the program counter (PC), as discussed with reference to the instruction processor unit (FIG. 10), is added to the value of the displacement contained in a particular instruction word and the result is placed in the program counter, as shown with reference to address 148 and PC register 147 of FIG.10. The displacement is contained in the instruction designated as WBR (Wide Branch) in the instruction set in Appendix B. Such operation is in effect a program counter "relative jump" and involves a 16-bit EAGLE address (PC) and an 8-bit offset, the latter contained as bits 1-8 of the WBR instruction.

In connection with EAGLE operation in the extended system of the invention, operations are performed to extend (i.e., to validate) 16-bit data to 32 bits. Such operations will involve either zero-extending (ZEX) or sign-extending (SEX) the 16-bit data, as shown in the ZEX or SEX instruction in Appendix B. Thus, for a zero extend operation the 16-bit integer which is contained in the source accumulator (ACS) identified by bits 1, 2 of the instruction, is zero-extended to 32 bits and the result is loaded into the destination accumulator (ACD), identified by bits 3, 4 of the instruction, with the contents of ACS remaining unchanged, unless such accumulators are the same accumulator. For a sign extend operation the 16-bit integer in the ACS is sign extended and placed in the ACD as above.

A further operation unique to the extended system of the invention involves an operation in which the signed 16-bit integer in bits 16-31 of the ACD is multiplied by the signed 16-bit integer in bits 16-31 of the ACS. Such operation is associated with the Narrow Multiply (NMUL) instruction in Appendix B. Since the system utilizes 32-bit accumulators, when multiplication of 16-bit words (i.e "narrow" words) is required it is necessary to use only 16 bits of the 32-bit accumulator contents. An overflow occurs if the answer is larger than 16 bits, so that if the overflow bit "OVK" is in a selected state (e.g. OVK is a 1) an overflow indication occurs and the machine operation is stopped (a "trap" occurs) and an overflow handling routine must be invoked.

The above discussed unique operations of the system of the invention are all indigenous to the design and operation thereof and represent operations not required or suggested by other previously known data processing systems

## APPENDIX A

| DATA GENERAL CORPORATION MANUAL NO | TITLE |
|---|---|
| O15-OOO OO9 | HOW TO USE THE NOVA COMPUTER |
| 014-OOO 092 | ECLIPSE M/6OO PRINCIPLES OF OPERATION |
| 014-OOO 629 | INTERFACE DESIGN'S REFERENCE NOVA AND ECLIPSE LINE COMPUTERS |
| 014-OOO 617 | PROGRAMMER's REFERENCE NOVA 4 |
| 014-OOO 648 | ECLIPSE MV/8OOO PRINCIPLES OF OPERATION |

## APPENDIX B

**Jump**

**JMP**

| O | O | O | O | O | @ | INDEX | DISPLACEMENT |
|---|---|---|---|---|---|---|---|
| 0 | 1 | 2 | 3 | 4 | 5 | 6  7 | 8                          15 |

Computers the effective address. E. and places it in the program counter. Sequential operation continues with the word addressed by the updated value of the program counter.

The 32-bit effective address generated by this instruction is constrained to be within the first 32 Kword of the current segment

Carry remains unchanged and overflow is O

**Jump to Subroutine**

**JSR (@) displacement (,index)**

| O | O | O | O | 1 | @ | INDEX | DISPLACEMENT |
|---|---|---|---|---|---|---|---|
| 0 | 1 | 2 | 3 | 4 | 5 | 6  7 | 8                          15 |

Increments and stores the value of the program counter in AC3. and then places a new address in the program counter

Computes the effective address. E. then places the address of the next sequential instruction in bits 16-31 of AC3 Places E in the program counter Sequential operation continues with the word addressed by the updated value of the program counter

The 32-bit effective address generated by this instruction is constrained to be within the first 32 Kword of the current segment

Carry remains unchanged and overflow is O

NOTE The instruction computes E before it places the incremented program counter in AC3

## Call Subroutine (Long Displacement)

**LCALL   opcode, argument count, displacement**

| 1 | 0 | 1 | INDEX | 1 | 1 | 0 | 1 | 1 | 0 | 0 | 1 | 0 | 0 | 1 | @ | DISPLACEMENT |
|---|---|---|-------|---|---|---|---|---|---|---|---|---|---|---|---|---|

0 1 2  3   4  5 6 7 8 9 10 11 12 13 14 15 16 17                    47

| S | ARGUMENT CODE |
|---|---------------|

48                                                          63

Evalates the address of a subtroutine call.

If the target address specifies an outward ring crossing, a protection fault (code = 7 in AC1) occurs. Note that the contents of the PC in the return block are undefined.

If the target address specifies an inward ring call, then the instruction assumes the target address has the following format:

| NEW RING | UNUSED | GATE |
|----------|--------|------|

0 1    3 4                    15 16                          31

The instruction checks the gate field of the above format for a legal gate. If the specified gate is illegal. a protection (code = 6 in AC1) occurs and no subroutine call is made. Note that the value of the PC in the return block is undefined.

If the specified gate is legal. or if the target address specifies an intra ring crossing. the instruction loads the contents of the PC. plus four. into AC3. The contents of AC3 always references the current ring. If bit O of the argument count is O. the instruction creates a word with the following format:

| OVK | OVR | 0 | 0 | 0 | 0 | 0 | 0 | 0 | 0 | 0 | 0 | 0 | 0 | 0 | 0 | 0 | 0 | ARGUMENT COUNT |
|-----|-----|---|---|---|---|---|---|---|---|---|---|---|---|---|---|---|---|---|

0   1   2 3 4 5 6 7 8 9 10 11 12 13 14 15 16 17                31

This instruction pushes this word onto the wide stack If a stack overflow occurs after this push. a stack fault occurs and no subroutine call is made Note that the value of the PC in the return block is undefined If bit O of the argument count is 1. then the instruction assumes the top word of the wide stack has the following format

| DON'T CARE | O | ARGUMENT COUNT |
|------------|---|----------------|

0                              15 16 17                    31

The instruction modifies this word to include the correct settings of OVK and OVR in bits O and 1

Regardless of the setting of bit O of the argument count. the instruction next unconditionally sets OVR to O and loads the PC with the target address Control then transfers to the word referenced by the PC

## Load All Segment Base Registers

LSBRA

| 1 | 1 | 0 | 0 | 0 | 1 | 1 | 1 | 1 | 0 | 1 | 1 | 1 | 0 | 0 | 1 |
|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 |

Loads the SBRs with new values.

ACO contains the starting address of an 8 double word block.

The instruction loads a copy of the contents of these words into SRBs as shown in the table below:

| Double Word in Block | Destination | Order Moved |
|---|---|---|
| 1 | SBR1 | First |
| 2 | SBR2 | Second |
| 3 | SBR3 | Third |
| 4 | SBR4 | Fourth |
| 5 | SBR5 | Fifth |
| 6 | SBR6 | Sixth |
| 7 | SBR7 | Seventh |
| 8 | SBR8 | Eighth |

After loading the SBRs. the instruction purges the ATU. If the ATU was disabled at the beginning of this instruction cycle. the processor enables it now.

If an invalid address is loaded in SBR10. the processor disables the ATU and a protection fault occurs (code = 3 in AC1) This means that logical address are identical to physical addresses. and the fault is processed in physical address space

The instruction leaves ACO and carry unchanged: overflow is O

NOTE This is a privileged instruction

## Narrow Multiply

NMUL acs, acd

| 1 | ACS | ACD | 0 | 0 | 0 | 0 | 1 | 1 | 0 | 1 | 0 | 0 | 1 |
|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 |

Multiplies the signed integer contained in bits 16-31 of ACD by the signed integer contained in bits 16-31 of ACS If the result is outside the range of -32 768 to + 32.767 inclusive. sets overflow to 1 otherwise overflow is O Sign extends the lower 16 bits of the result to 32 bits and places these 32 bits in ACD The contents of ACS and carry remain unchanged

26

## Sign Extend

**SEX acs, acd**

| 1 | ACS | ACD | 0 | 1 | 1 | 0 | 1 | 0 | 0 | 1 | 0 | 0 | 1 |
|---|---|---|---|---|---|---|---|---|---|---|---|---|---|
| 0 | 1 | 2 | 3 4 | 5 | 6 | 7 | 8 | 9 | 10 | 11 | 12 | 13 | 14 15 |

Sign extends the 16-bit Integer contained in ACS to 32 bits and loads the result into ACD. The contents of ACS remain unchanged, unless ACS and ACD are specified to be the same accumulator. Carry is unchanged and overflow is O.

## Load PC

**WBR displacement**

| 1 | DISP 0-3 | 0 | DISP 4-7 | 1 | 1 | 1 | 0 | 0 | 0 |
|---|---|---|---|---|---|---|---|---|---|
| 0 | 1 | 4 | 5 6 | 9 | 10 | 11 | 12 | 13 | 14 15 |

Adds the 31-bit value contained in the PC to the value of the displacement and places the results in the PC. Carry is unchanged and overflow is O.
NOTE: The processor always forces the value loaded into the PC to reference a location in the current segment of execution.

## Wide Pop Block

**WPOPB**

| 1 | 1 | 1 | 0 | 0 | 1 | 1 | 1 | 0 | 1 | 1 | 1 | 1 | 0 | 0 | 1 |
|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 |

Pops six double words off the wide stack and places them in the appropriate locations.
The popped words and their destinations are as follows:

| Double Word Popped | Destination |
|---|---|
| 1 | Bit 0 to carry; bits 1-31 to PC |
| 2 | AC3 |
| 3 | AC2 |
| 4 | AC1 |
| 5 | AC0 |
| 6 | Bit 0 to OVK; bit 1 to OVR; bit 2 to IRES; bits 17-31 are multiplied by 2 and incremented by 12. This number is subtracted from WSP. WSP is loaded with the result. |

If the instruction specifies an inward ring crossing, then a protection fault occurs and the current wide stack remains unchanged. Note that the return block pushed as a result of the protection fault will contain undefined information. After the fault return block is pushed, AC0 contains the contents of the PC (which point to the instruction that caused the fault) and AC1 contains the code 8.

If the instruction specifies an intra-ring address, it pops the six double word block, then checks for stack underflow. If underflow has occurred, a stack underflow fault occurs. Note that the return block pushed as a result of the stack underflow will contain undefined information. After the fault return block is pushed, AC0 contains the contents of the PC (which point to the instruction that caused the fault) and AC1 contains the code 3. If there is no underflow, execution continues with the location addressed by the program counter.

If the instruction specifies an outward crossing, it pops the six double word return block and checks for stack underflow. If underflow has occurred, a stack underflow fault occurs. Note that the return block pushed as a result of the stack underflow will contain undefined information. After the fault return block is pushed, AC0 contains the contents of the PC (which point to the instruction that caused the fault) and AC1 contains the code 3. If there is no underflow, the instruction stores WSP and WFP in the appropriate page zero locations of the current segment. It then performs the outward ring crossing and loads the wide stack registers with the contents of the appropriate page zero locations of the new ring, loads WSP with the value

(current contents of WSP) - (2 x (argument count))

Checks for stack underflow. If underflow has occurred, a stack underflow fault occurs. Note that the return block pushed as a results of the stack underflow will contain undefined information. After the fault return block is pushed, AC0 contains the contents of the PC (which point to the instruction that caused the fault) and AC1 contains the code 3. If there is no underflow, execution continues with the location addressed by the program counter

## Wide Return

WRTN

| 1 | 0 | 0 | 0 | 0 | 1 | 1 | 1 | 1 | 0 | 1 | 0 | 1 | 0 | 0 | 1 |
|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 |

Returns control from subroutines that issue a WSAVS or a WSAVR instruction at their entry point Places the contents of WFP in WSP and executes a WPOPB instruction Places the popped value of AC3 in WFP

EP 0 149 858 B1

## Call Subroutine (Extended Displacement)

XCALL   opcode, argument count, displacement

| 1 | 0 | 0 | INDEX | 1 | 1 | 0 | 0 | 0 | 0 | 0 | 1 | 0 | 0 | 1 | @ | DISPLACEMENT | S | ARGUMENT COUNT |
|---|---|---|---|---|---|---|---|---|---|---|---|---|---|---|---|---|---|---|

0 1 2   3   4   5 6 7   8 9 10 11 12 13 14 15 16 17          31 32 33          47

Evalues the address of a subroutine call.

If the target address specifies an outward ring crossing, a protection fault (code = 7 in AC1) occurs. Note that the contents of the PC in the return block are undefined.

If the target address specifies an inward ring call, then the instruction assumes the target address has the following format:

| NEW RING | UNUSED | GATE |
|---|---|---|

0 1    3  4              15 16              31

The instruction checks the gate field of the above format for a legal gate. If the specified gate is illegal, a protection fault (code = 6 in AC1) occurs and call is made. Note that the contents of the PC in the return block are undefined.

If the specified gate is legal, or if the target address specifies an intra-ring crossing, then the instruction loads the contents of the PC, + 3, into AC3. The contents of AC3 will always references the current segment. If bit O of the argument count is O, then the instruction creates a word with the following format:

| OVK | OVR | RES | O | O | O | O | O | O | O | O | O | O | O | O | O | O | ARGUMENT COUNT |
|---|---|---|---|---|---|---|---|---|---|---|---|---|---|---|---|---|---|

The instruction pushes this word onto the wide stack. If a stack overflow occurs after this push, a stack fault occurs and no call is made. Note that the value of the PC in the return block is undefined. If bit O of the argument count is 1, then the instruction assumes the top word of the wide stack has the following format:

| DON'T CARE | O | ARGUMENT COUNT |
|---|---|---|

O                15 16 17              31

The instruction modifies this word to include the correct settings of OVK and OVR in bits O and 1.

Regardless of the setting of the argument count's bit O. the instruction next unconditionally sets OVR to O and loads the PC with target address. Execution continues with the word references by the PC

## Zero Extend

ZEX   acs, acd

| 1 | ACS | ACD | O | 1 | 1 | O | 1 | O | 1 | 1 | O | O | 1 |
|---|---|---|---|---|---|---|---|---|---|---|---|---|---|

O 1 2   3   4   5   6   7   8  9   10   11   12   13   14   15

Zero extends the 16-bit integer contained in ACS to 32 bits and loads the result into the ACD The contents of ACS remain unchanged. unless ACS equals ACD. Carry is unchanged and overflow is O.

29

## Claims

1. A data processing system which utilizes first and second instruction sets comprising means (120) providing instruction words of the first instruction set Which contain logical addresses having a first number of bits in their displacement portion and of the second instruction set which contain logical addresses having a second number of bits in their displacement portion, the second number of bits being larger than the first, means (14) for translating the logical addresses having the second number of bits into physical addresses, and decode means (121) responsive to the instruction words, characterized in that the instruction words include operating code portions having one or more selected bits (bits 0, 5, 10-15) for identifying the instructions as being either of the first instruction set or of the second instruction set and in that the decode means produce descriptor bits (OPCD DSCR) indicating whether an instruction is of the first or the second instruction set, and by means (122) responsive to the descriptor bits indicating an instruction of the first instruction set for extending the logical addresses corresponding to the instructions of the first instruction set having the first number of bits into logical addresses having the second number of bits.

2. A system in accordance with claim 1, characterized in that the first logical addresses are logical word addresses which have fifteen bits and the second logical addresses are logical word addresses which have thirty-one bits.

3. A system in accordance with claim 1, characterized in that the first logical addresses are logical byte addresses which have sixteen bits and the second logical addresses are logical byte addresses which have thirty-two bits.

4. A system in accordance with any of claims 1 to 3, characterized in that the decode means (121) comprises programmable read-only-memory means (140, 141).

5. A system in accordance with claim 4, characterized in that the programmable read-only-memory means (140, 141) includes a first logic means (140) for decoding only the first instructions and a second logic means (141) for decoding only the second instructions, the first and second logic means being arranged to operate simultaneously in response to the instructions for decoding said first plurality of instructions and the second plurality of instructions on a non-mutually exclusive basis.

6. A system in accordance with claim 5, characterized in that the address translation means (14) includes translation storage means (100) (Fig.5) capable of storing memory allocation data.

7. A system in accordance with claim 6, characterised in that logical addresses to be used in 120 system are grouped in blocks (LA15-21, Fig 5), each logical address including a plurality of tag bits (LA15-20) for identifying in which block the logical address belongs and 120 translation storage means (100) storing selected memory allocation data for use in translating selected blocks of logical addresses into physical addresses 120 system further including tag storage means (102) for storing the tag bits of the selected blocks of logical addresses which correspond to the memory allocation data stored in said translation storage means and means (105) for comparing the tag bits of logical addresses stored in said tag storage means with the tag bits of an input logical address to be supplied to said translation storage means for translation thereof into a physical address for identifying whether said input logical address corresponds to a logical address of one of said selected blocks thereof

8. A system in accordance with claim 7, characterised by memory means (16 17) for storing a plurality of page tables each of which contain memory allocation data for use in translating one or more selected blocks of logical addresses, means (TRANS REG Fig 5, Figs 8 and 9) responsive to an indication (ATU HIT) from said comparing means (105) that the memory allocation data for translating said input logical address is not available in said translation storage means (100) for accessing new memory allocation data capable of translating said input logical address from said page tables in said memory means, and means (CPM BUS 20) for replacing memory allocation data currently stored in said translation storage means with said new accessed memory allocation data.

9. A system in accordance with claim 8 characterised by means (105) for indicating a page table fault if the page table required to be accessed from said memory means is not resident therein

**10.** A system in accordance with claim 8 characterised in that the memory allocation data to be accessed from a page table in said memory means can be accessed directly as a one-level page table access (Fig 8) or can be accessed indirectly via an intermediate page table as a two-level page table access; (Fig 9) and further including means (SBR BIT 1) for determining whether said accessing is a one-level page table access or a two-level page table access.

**11.** A system in accordance with claim 10 characterised by means for providing a one-level page table access in response to an input logical address, said means comprising means responsive to a selected field (SBR) of said input logical address for obtaining a first address identifying the starting address (PTEO) of a selected page table in said memory means; means responsive to another selected field (1 level page table) of said input logical address representing a selected offset (PTE OFFSET) from the starting address of said selected page table to provide a page table entry address (PTEn) at said offset; and means for extracting a selected field of said page table entry address requesting the memory allocation data for said input logical address and for placing said memory allocation data in said translation storage means (100) (Fig 9).

**12.** A system in accordance with claim 8, characterised by means for providing a two-level page table access in response to an input logical address, said means comprising means responsive to a selected field (SBR) of said input logical address for obtaining a first address (PTEO) identifying the starting address of a first selected page table in said memory means; means responsive to another selected field (2 level page table) of said input logical address representing a first selected offset (PTE) from the starting address of said first selected page table to provide a first page table entry address (PTEn) at said first offset; means responsive to a selected field (valid resilient physical address) of said first page table entry address for obtaining a second address identifying the starting address (PTEO) of a second selected page table in said memory means; means responsive to still another field (1 level page table) of said input logical address representing a second selected offset from the starting address of said second selected page table to provide a second page table entry address (PTEn) at said second offset; and means for extracting a selected field of said second page table entry address representing the memory allocation data for said input logical address and for placing said memory allocation data in said translation storage means (100) (Fig 9).

**13.** A system in accordance with claim 11 characterised in that the bits of a further selected field (BITS 4-12) of said input logical address are all zero when a one-level page table access is required for said input logical address: and means for indicating a further page table fault when said one-level or two-level page table determining means determines that said page table access is a one-level access and said further selected

**14.** A system according to any preceding claim, wherein field of said input logical address includes one or more non-zero bits each of the first and second instructions includes an operating code portion (IDRA Fig 12) and is capable of including at least one displacement portion (IDRB, IDRC), characterised by instruction processor means (12) comprising instruction decode register means (142) having at least two register regions, namely a first region designated to temporarily store said operating code portion (IDRA) of an instruction and at least one other region designated to temporarily store a displacement portion (IDRB IDRC), instruction decode shifter means (143) responsive to an incoming first or second instruction to shift the instruction into said instruction decode register means until its operating code portion is temporarily stored in said first designated region and its displacement portion, if included is temporarily stored in the other designated region(S)

**15.** A system in accordance with claim 14. -6 system in accordance with claim characterised in that the instruction processor means (12) further including instruction decoding means (140 141) for decoding the operating code portion (IDRA) of an instruction supplied thereto from the instruction decode register means (142) to produce a plurality of operating code descriptors (OPCD DECR) associated with the decoded instructions and for producing a starting address (STµ AD) of one or more microinstructions associated with the decoded instruction

**16.** A system in accordance with claim 15 characterised by displacement handling means (146 Fig 14) responsive to a displacement portion (IDRB, IDRC) of an instruction, if any, supplied thereto from said instruction decode register means (142) to provide displacement data (DISP0-31) to said data processing system.

17. A data processing system in accordance with claim 16, characterized in that the displacement handling means (146) includes extend logic means (SEX AND ZERO/ONES LOGIC) for extending the displacement portion of an instruction supplied thereto by extended bits, if necessary.

18. A data processing system in accordance with claims 16, characterized in that the displacement handling means (146) includes sign extend and zero extend logic means (SEX AND ZERO/ONES EXTEND LOGIC) for extending the displacement portion of an instruction supplied thereto by a selected number of zero bits.

19. A data processing system in accordance with claim 18, characterized in that the displacement handling means (146) includes sign extend and ones extend logic means (ZERO/ONES EXTEND AND SEX LOGIC) for extending the displacement portion of an instruction supplied thereto by a selected number of one bits.

20. A data processing system in accordance with claim 20, characterised in that the displacement handling means further includes means (148, 149) responsive to said displacement data for supplying said data in the form of a logical address to provide a memory reference for said system. 1

21. A data processing system in accordance with claim 14 or 15, characterised by instruction cache storage means (130 Fig 11) for storing a plurality of instructions: means (131, 133) for identifying when a requested instruction is stored in said instruction cache storage means; said instruction cache storage means being responsive to the address of a requested instruction stored therein when said identifying means indicates that said requested instruction is stored in said instruction cache storage means for supplying said requested instruction to said instruction decode shifter means (143).

22. A data processing system in accordance with claim 21, characterised by means (152, 136, 134) for accessing said requested instruction from a main memory storage means (16) when said identifying means (131, 133) indicates that said requested instruction is not stored in said instruction cache storage means.

23. A data processing system in accordance with claim 22, characterised by means (135) providing a direct transmission path to said instruction decode shifter means for a requested instruction which has been accessed from said main memory

24. A data processing system in accordance with claim 14 or 15, characterised in that the instruction decoding means (140 141) is an array of programmable read-only-memories

25. A data processing system in accordance with claim 24 characterised in that the instruction decoding means includes first programmable read-only-memory means (140) for decoding instructions of said basic instruction set and second programmable read-only-memory means (141) for decoding instructions of said extended instruction set

26. A data processing system in accordance with claim 25 characterised in that each of said instructions to be decoded have selected bit code combinations (BITS 0. 5. 10-15) for identifying whether said instruction is from said basic instruction set or from said extended instruction set and further including means (154) for examining the selected bit code combination of an instruction to be decoded to determine whether said instruction is from said basic instruction set or from said extended instruction set, and means (Figs 31-31D) responsive to said selected bit code combination for enabling a selected one of said first and second programmable read-only-memory means (140 or 141) to decode said instruction depending on whether the instruction to be decoded is from said basic instruction set or from said extended instruction set

27. A data processing system in accordance with claim 26 characterised in that the selected bit code combination comprises a 1 in bit 0 and 1001 in bits 12-15 of said instruction for selected instructions from said extended instruction set (Figs 31-31D)

28. A data processing system in accordance with claim 26, characterised in that the selected bit code combination comprises a 1 in bit 0 and 011000 in bits 10-15 of said instruction for other selected instructions from said extended instruction set (Figs 31-31D).

29. A data processing system in accordance with claim 26, characterised in that the selected bit code combination comprises a 1 in bit. 0, a 0 in bit 5 and 111000 in bits 10-15 of said instruction for still other selected instructions from said extended instruction set (Figs 31-31D).

30. A data processing system in accordance with claim 26, characterised in that the selected bit code combination comprises 0 in bit 0 and 1000 in bits 12-15 of said instruction for selected instructions from said basic instruction set (Figs 31-31D).

**Revendications**

1. Un système informatique qui utilise des premier et second jeux d'instructions, comprenant des moyens (120) fournissant des mots d'instruction du premier jeu d'instructions qui contiennent des adresses logiques ayant un premier nombre de bits dans leur partie de déplacement, et du second jeu d'instructions qui contiennent des adresses logiques ayant un second nombre de bits dans leur partie de déplacement, le second nombre de bits étant supérieur au premier, des moyens (14) pour traduire les adresses logiques ayant le second nombre de bits en adresses physiques, et des moyens de décodage (121) qui réagissent aux mots d'instruction, caractérisé en ce que les mots d'instruction comprennent des parties de code opération ayant un ou plusieurs bits sélectionnés (bits 0, 5, 10-15) pour identifier les instructions comme appartenant au premier jeu d'instructions ou au second jeu d'instructions, et en ce que les moyens de décodage produisent des bits de descripteur (OPCD DSCR) indiquant si une instruction appartient au premier jeu d'instructions ou au second, et en ce qu'il existe des moyens (122) qui réagissent aux bits de descripteur indiquant une instruction du premier jeu d'instructions, en étendant les adresses logiques qui correspondent aux instructions du premier jeu d'instructions ayant le premier nombre de bits, pour donner des adresses logiques ayant le second nombre de bits.

2. Un système selon la revendication 1, caractérisé en ce que les premières adresses logiques sont des adresses logiques de mot qui ont quinze bits et les secondes adresses logiques sont des adresses logiques de mot qui ont trente et un bits.

3. Un système selon la revendication 1, caractérisé en ce que les premières adresses logiques sont des adresses logiques d'octet qui ont seize bits, et les secondes adresses logiques sont des adresses logiques d'octet qui ont trente-deux bits.

4. Un système selon l'une quelconque des revendications 1 à 3, caractérisé en ce que les moyens de décodage (121) comprennent des moyens à mémoire morte programmable (140, 141).

5. Un système selon la revendication 4, caractérisé en ce que les moyens à mémoire morte programmable (140, 141) comprennent des premiers moyens logiques (140) pour décoder seulement les premières instructions et des seconds moyens logiques (141) pour décoder seulement les secondes instructions, les premiers et seconds moyens logiques étant conçus de façon à travailler simultanément sous la dépendance des instructions, pour décoder le premier ensemble d'instructions et le second ensemble d'instructions d'une manière non mutuellement exclusive.

6. Un système selon la revendication 5, caractérisé en ce que les moyens de traduction d'adresse (14) comprennent des moyens d'enregistrement de traduction (100) (figure 5) qui sont capables d'enregistrer des données d'allocation de mémoire.

7. Un système selon la revendication 6, caractérisé en ce que les adresses logiques à utiliser dans le système sont groupées en blocs (LA15-21, figure 5), chaque adresse logique comprenant un ensemble de bits d'étiquette (LA15-20) pour identifier le bloc auquel l'adresse logique appartient, et les moyens d'enregistrement de traduction (100) enregistrant des données d'allocation de mémoire sélectionnées, pour l'utilisation dans la traduction de blocs sélectionnés d'adresses logiques en adresses physiques.

le système comprenant en outre des moyens d'enregistrement d'étiquette (102) pour enregistrer les bits d'étiquette des blocs sélectionnés d'adresses logiques qui correspondent aux données d'allocation de mémoire qui sont enregistrées dans les moyens d'enregistrement de traduction; et des moyens (105) pour comparer les bits d'étiquette d'adresses logiques enregistrées dans les moyens d'enregistrement d'étiquette avec les bits d'étiquette d'une adresse logique d'entrée qui doit être appliquée aux moyens d,'enregistrement de traduction, pour être traduite en une adresse physique, afin d'identifier si cette adresse logique d'entrée correspond à une adresse logique de l'un des blocs sélectionnés d'adresses logiques.

8. Un système selon la revendication 7, caractérisé par des moyens de mémoire (16, 17) qui sont destinés à enregistrer un ensemble de tables de pages, chacune d'elles contenant des données d'allocation de mémoire prévues pour l'utilisation dans la traduction d'un ou de plusieurs blocs sélectionnés d'adresseslogiques; des moyens (TRANS REG., figure 5, figures 8 et 9) qui fonctionnent sous la dépendance d'une indication (ATU HIT) provenant des moyens de comparaison (105) et signalant que les données d'allocation de mémoire pour la traduction de l'adresse logique d'entrée ne sont pas disponibles dans les moyens d'enregistrement de traduction (100), en accédant à de nouvelles données d'allocation de mémoire permettant la traduction de l'adresse logique d'entrée, dans les tables de pages des moyens de mémoire; et des moyens (CPM BUS 20) pour remplacer par les données d'allocation de mémoire auxquelles on vient d'accéder des données d'allocation de mémoire qui sont enregistrées au moment présent dans les moyens d'enregistrement de traduction.

9. Un système selon la revendication 8, caractérisé par des moyens (105) qui indiquent une erreur de table de pages si la table de pages à laquelle on doit accéder dans les moyens de mémoire ne se trouve pas dans ces derniers.

10. Un système selon la revendication 8, caractérisé en ce que les données d'allocation de mémoire auxquelles on doit accéder dans une table de pages dans les moyens de mémoire, peuvent faire l'objet d'un accès direct sous la forme d'un accès à une table de pages à un seul niveau (figure 8), ou peuvent faire l'objet d'un accès indirect, par l'intermédiaire d'une table de pages intermédiaire, sous la forme d'un accès à une table de pages à deux niveaux (figure 9): et en ce qu'il existe en outre des moyens (SBR BIT 1) pour déterminer si l'accès considéré est un accès à une table de pages à un seul niveau ou un accès à une table de pages à deux niveaux.

11. Un système selon la revendication 10, caractérisé par des moyens destinés à effectuer un accès à une table de pages à un seul niveau sous la dépendance d'une adresse logique d'entrée, ces moyens comprenant des moyens qui réagissent à une zone sélectionnée (SBR) de l'adresse logique d'entrée en obtenant une première adresse qui identifie l'adresse de départ (PTEO) d'une table de pages sélectionnée dans les moyens de mémoire, des moyens qui réagissent à une autre zone sélectionnée (table de pages à 1 niveau) de l'adresse logique d'entrée représentant un décalage sélectionné (PTE OFFSET) à partir de l'adresse de départ de la table de pages sélectionnée, en fournissant une adresse d'article de table de pages (PTEn) au décalage précité, et des moyens pour extraire une zone sélectionnée de l'adresse d'article de table de pages demandant les données d'allocation de mémoire pour l'adresse logique d'entrée et pour placer ces données d'allocation de mémoire dans les moyens d'enregistrement de traduction (100) (figure 9)

12. Un système selon la revendication 8, caractérisé par des moyens destinés à effectuer un accès à une table de pages à deux niveaux sous la dépendance d'une adresse logique d'entrée, ces moyens comprenant des moyens qui réagissent à une zone sélectionnée (SBR) de l'adresse logique d'entrée en obtenant une première adresse (PTEO) qui identifie l'adresse de départ d'une première table de pages sélectionnée dans les moyens de mémoire des moyens qui réagissent à une autre zone sélectionnée (table de pages à 2 niveaux) de l'adresse logique d'entrée, représentant un premier décalage sélectionné (PTE) à partir de l'adresse de départ de la première table de pages sélectionnée pour fournir une première adresse d'article de table de pages (PTEn) au premier décalage, des moyens qui réagissent à une zone sélectionnée (adresse physique résidente valide) de la première adresse d'article de table de pages, en obtenant une seconde adresse qui identifie l'adresse de départ (PTEO) d'une seconde table de pages sélectionnée dans les moyens de mémoire, des moyens qui réagissent à encore une autre zone (table de pages à 1 niveau) de l'adresse logique d'entrée représentant un second décalage sélectionné à partir de l'adresse de départ de la seconde table de

EP 0 149 858 B1

pages sélectionnée, en fournissant une seconde adresse d'article de table de pages (PTEn) au second décalage; et des moyens pour extraire une zone sélectionnée de la seconde adresse d'article de table de pages, représentant les données d'allocation de mémoire pour l'adresse logique d'entrée, et pour placer ces données d'allocation de mémoire dans les moyens d'enregistrement de traduction (100) (figure 9).

13. Un système selon la revendication II, caractérisé en ce que les bits d'une zone sélectionnée supplémentaire (BITS 4-12) de l'adresse logique d'entrée sont tous à zéro lorsqu'un accès à une table de pages à un seul niveau est exigé pour l'adresse logique d'entrée; et en ce que des moyens sont incorporés pour indiquer une erreur de table de pages supplémentaire lorsque les moyens de détermination concernant une table de pages à un seul niveau ou à deux niveaux déterminent que l'accès à une table de pages est un accès à un seul niveau, et la zone sélectionnée supplémentaire de l'adresse logique d'entrée comprend un ou plusieurs bits différents de zéro.

14. Un système selon l'une quelconque des reven dications précédentes, dans lequel chacune des première et seconde instructions comprend une partie de code opération (IDRA, figure 12) et peut comprendre au moins une partie de déplacement (IDRB, IDRC), caractérisé par des moyens de traitement d'instructions (12) comprenant un registre de décodage d'instruction (142) ayant au moins deux régions de registre, à savoir une première région désignée qui est prévue pour enregistrer temporairement la partie de code opération (IDRA) d'une instruction, et au moins une autre région désignée qui est prévue pour enregistrer temporairement une partie de déplacement (IDRB, IDRC); des moyens de décalage de décodage d'instruction (143) qui réagissent à une première ou une seconde instruction entrante en décalant l'instruction vers le registre de décodage d'instruction, jusqu'à ce que sa partie de code opération soit temporairement enregistrée dans la première région désignée, et sa partie de déplacement, si elle est présente, soit temporairement enregistrée dans l'autre ou les autres régions désignées.

15. Un système selon la revendication 14, caractérisé en ce que les moyens de traitement d'instructions (12) comprennent en outre des moyens de décodage d'instruction (140, 141) qui sont destinés à décoder la partie de code opération (IDRA) d'une instruction qui leur est appliquée à partir du registre de décodage d'instruction (142), pour produire un ensemble de descripteurs de code opération (OPCD DECR) qui sont associés aux instructions décodées, et qui sont destinés à produire une adresse de départ (STμAD) d'une ou de plusieurs micro-instructions qui sont associées à l'instruction décodée

16. Un système selon la revendication 15, caractérisé par des moyens de manipulation de déplacement (146, figure 14) qui réagissent à une partie de déplacement éventuelle (IDRB, IDRC) d'une instruction qui leur est appliquée à partir du registre de décodage d'instruction (142), pour fournir des données de déplacement (DISP0-31) au système informatique.

17. Un système informatique selon la revendication 16, caractérisé en ce que les moyens de manipulation de déplacement (146) comprennent des moyens logiques d'extension (SEX AND ZERO ONES LOGIC) qui sont destinés à étendre, au moyen de bits étendus, si nécessaire, la partie de déplacement d'une instruction qui leur est appliquée

18. Un système informatique selon la revendication 16, caractérisé en ce que les moyens de manipulation de déplacement (146) comprennent des moyens logiques d'extension de signe et d'extension de "zéros" (SEX AND ZERO ONES EXTEND LOGIC) qui sont destinés à étendre d'un nombre de bits "zéro" sélectionné la partie de déplacement d'une instruction qui leur est appliquée.

19. Un système informatique selon la revendication 18, caractérisé en ce que les moyens de manipulation de déplacement (146) comprennent des moyens logiques d'extension de signe et d'extension de "uns" (ZERO ONES EXTEND AND SEX LOGIC), qui sont destinés à étendre d'un nombre de bits "un" sélectionné, la partie de déplacement d'une instruction qui leur est appliquée.

20. Un système informatique selon la revendication 19, caractérisé en ce que les moyens de manipulation de déplacement comprennent en outre des moyens (148, 149) qui réagissent aux données de déplacement en fournissant ces données, sous la forme d'une adresse logique, pour procurer une référence de mémoire pour le système.

35

EP 0 149 858 B1

21. Un système informatique selon la revendication 14 ou 15, caractérisé par une antémémoire d'instructions (130, figure 11) qui est destinée à enregistrer un ensemble d'instructions; des moyens (131, 133) pour identifier la condition dans laquelle une instruction demandée est enregistrée dans l'antémémoire d'instructions; cette antémémoire d'instructions réagissant à l'adresse d'une instruction demandée qu'elle contient, lorsque les moyens d'identification indiquent que l'instruction demandée est enregistrée dans l'antémémoire d'instructions, en fournissant cette instruction demandée aux moyens de décalage de décodage d'instruction (143).

22. Un système informatique selon la revendication 21, caractérisé par des moyens (152, 136, 134) prévus pour accéder à l'instruction demandée dans une mémoire centrale (16) lorsque les moyens d'identification (131, 133) indiquent que l'instruction demandée n'est pas enregistrée dans l'antémémoire d'instructions.

23. Un système informatique selon la revendication 22, caractérisé par des moyens (135) qui établissent un chemin de transmission direct vers les moyens de décalage de décodage d'instruction, pour une instruction demandée qui a fait l'objet d'un accès dans la mémoire centrale (16).

24. Un système informatique selon la revendication 14 ou 15, caractérisé en ce que les moyens de décodage d'instruction (140, 141) consistent en un réseau de mémoires mortes programmables.

25. Un système informatique selon la revendication 24, caractérisé en ce que les moyens de décodage d'instruction comprennent une première mémoire morte programmable (140) pour décoder des instructions du jeu d'instructions de base, et une seconde mémoire morte programmable (141) pour décoder des instructions du jeu d'instructions étendu.

26. Un système informatique selon la revendication 25, caractérisé en ce que chacune des instructions à décoder comporte des combinaisons de code de bits sélectionnées (BITS 0, 5, 10-15) pour identifier si l'instruction provient du jeu d'instructions de base ou du jeu d'instructions étendu, et en ce qu'il comprend en outre des moyens (154) pour examiner la combinaison de code de bits sélectionnée d'une instruction à décoder, pour déterminer si cette instruction fait partie du jeu d'instructions de base ou du jeu d'instructions étendu: et des moyens (figures 31-31D) qui réagissent à la combinaison de code de bits sélectionnée en validant l'une sélectionnée des première et seconde mémoires mortes programmables (140 ou 141), pour décoder l'instruction, selon que l'instruction à décoder fait partie du jeu d'instructions de base ou du jeu d'instructions étendu.

27. Un système informatique selon la revendication 26, caractérisé en ce que la combinaison de code de bits sélectionnée comprend un 1 pour le bit 0 et 1001 pour les bits 12-15 de l'instruction, pour des instructions qui sont sélectionnées dans le jeu d'instructions étendu (figures 31-31D)

28. Un système informatique selon la revendication 26, caractérisé en ce que la combinaison de code de bits sélectionnée comprend un 1 pour le bit 0 et 011000 pour les bits 10-15 de l'instruction pour d'autres instructions sélectionnées dans le jeu d'instructions étendu (figures 31-31D)

29. Un système informatique selon la revendication 26, caractérisé en ce que la combinaison de code de bits sélectionnée comprend un 1 pour le bit 0 un 0 pour le bit 5 et 111000 pour les bits 10-15 de l'instruction pour encore d'autres instructions sélectionnées de l'ensemble d'instructions étendu (figures 31-31D)

30. Un système informatique selon la revendication 26, caractérisé en ce que la combinaison de code de bits sélectionnée comprend un 0 pour le bit 0 et 1000 pour les bits 12-15 de l'instruction, pour des instructions sélectionnées du jeu d'instructions de base (figures 31-31D)

**Ansprüche**

1. Datenverarbeitungssystem, das erste und zweite Befehlssätze verwendet, enthaltend eine Einrichtung (120), die Befehlsworte des ersten Befehlssatzes, die logische Adressen mit einer ersten Anzahl von Bits in ihrem Adreßabstandsteil enthalten, und des zweiten Befehlssatzes, die logische Adressen mit

36

einer zweiten Anzahl von Bits in ihrem Adreßabstandteil enthalten, liefert, wobei die zweite Anzahl von Bits größer ist als die erste, eine Einrichtung (14) zum Übersetzen der logischen Adressen mit der zweiten Anzahl von Bits in physische Adressen, und eine auf die Befehlsworte ansprechende Decodiereinrichtung (121), **dadurch gekennzeichnet**, daß die Befehlsworte Operationscodeteile mit einem oder mehreren ausgewählten Bits (Bits 0, 5, 10-15) zum Identifizieren der Befehle als entweder dem ersten Befehlssatz oder dem zweiten Befehlssatz zugehörig enthalten, und daß die Decodiereinrichtung Descriptor-Bits (OPCD DSCR) erzeugt, die anzeigen, ob ein Befehl dem ersten oder dem zweiten Befehlssatz zugehört, und durch eine Einrichtung (122), die auf die einen Befehl des ersten Befehlssatzes anzeigenden Descriptor-Bits anspricht, zum Erweitern der den Befehlen des ersten Befehlssatzes entsprechenden logischen Adressen mit der ersten Anzahl von Bits in logische Adressen mit der zweiten Anzahl von Bits.

2. System nach Anspruch 1, **dadurch gekennzeichnet**, daß die ersten logischen Adressen logische Wortadressen sind, die fünfzehn Bits haben, und die zweiten logischen Adressen logische Wortadressen sind, die einunddreißig Bits haben.

3. System nach Anspruch 1, **dadurch gekennzeichnet**, daß die ersten logischen Adressen logische Byte-Adressen sind, die sechzehn Bits haben, und die zweiten logischen Adressen logische Byte-Adressen sind, die zweiunddreißig Bits haben.

4. System nach einem der Ansprüche 1-3, **dadurch gekennzeichnet**, daß die Decodiereinrichtung (121) eine programmierbare Nur-Lese-Speichereinrichtung (140, 141) enthält.

5. System nach Anspruch 4, **dadurch gekennzeichnet**, daß die programmierbare Nur-Lese-Speichereinrichtung (140, 141) eine erste logische Einrichtung (140) zum Decodieren nur der ersten Befehle und eine zweite logische Einrichtung (141) zum Decodieren nur der zweiten Befehle enthält, wobei die erste und zweite logische Einrichtung so angeordnet sind, daß sie gleichzeitig in Ansprache auf die Befehle zum Decodieren der ersten Anzahl von Befehlen und der zweiten Anzahl von Befehlen auf einer nicht gegenseitig ausschließlichen Basis arbeiten.

6. System nach Anspruch 5. **dadurch gekennzeichnet**, daß die Adreßübersetzungseinrichtung (14) eine Übersetzungsspeichereinrichtung (100) (Fig.5) enthält, die zum Speichern von Speicherzuordnungsdaten geeignet ist.

7. System nach Anspruch 6. **dadurch gekennzeichnet**. daß die in dem System zu verwendenden logischen Adressen in Blöcke (LA15-21 Fig. 5) gruppiert sind, wobei jede logische Adresse eine Anzahl von Markierungsbits (LA15-20) zum Identifizieren, in welchen Block die logische Adresse gehört, enthält, und die Übersetzungsspeichereinrichtung (100) ausgewählte Speicherzuordnungsdaten zur Verwendung bei der Übersetzung ausgewählter Blöcke logischer Adressen in physische Adressen speichert, wobei das System weiter eine Markierungsspeichereinrichtung (102) zum Speichern der Markierungsbits der ausgewählten Blöcke logischer Adressen, die den in der Übersetzungsspeichereinrichtung gespeicherten Speicherzuordnungsdaten entsprechen, enthält, und eine Einrichtung (105) zum Vergleichen der Markierungsbits von in der Markierungsspeichereinrichtung gespeicherten logischen Adressen mit den Markierungsbits einer der Übersetzungsspeichereinrichtung zur Übersetzung derselben zuzuführenden eingelesenen logischen Adresse in eine physische Adresse zum Identifizieren, ob die eingelesene logische Adresse einer logischen Adresse von einem der daraus ausgewählten Blöcke entspricht

8. System nach Anspruch 7. **gekennzeichnet durch** eine Speichereinrichtung (16.17) zum Speichern einer Anzahl von Seitentabellen. von denen jede Speicherzuordnungsdaten zur Verwendung bei der Übersetzung eines oder mehrerer ausgewählter Blöcke logischer Adressen enthält. eine Einrichtung (TRANS REG Fig 5. Figs 8 und 9). die auf eine Anzeige (ATU HIT) von der Vergleichereinrichtung (105). daß die Speicherzuordnungsdaten zum Übersetzen der eingelesenen logischen Adresse in der Übersetzungsspeichereinrichtung (100) nicht verfügbar sind. um auf zum Übersetzen der eingelesenen logischen Adresse geeignete neue Speicherzuordnungsdaten von den Seitentabellen in der Speichereinrichtung zuzugreifen. und eine Einrichtung (CPM BUS 20) zum Ersetzen von gegenwärtig in der Übersetzungsspeichereinrichtung gespeicherten Speicherzuordnungsdaten durch die neu zugegriffenen Speicherzuordnungsdaten.

9. System nach Anspruch 8, **gekennzeichnet durch** eine Einrichtung (105) zum Anzeigen eines Seitentabellenfehlers, wenn die Seitentabelle, die für den Zugriff aus der Speichereinrichtung benötigt wird, darin nicht resident ist.

10. System nach Anspruch 8, **dadurch gekennzeichnet**, daß auf die Speicherzuordnungsdaten, auf die von einer Seitentabelle in der Speichereinrichtung zuzugreifen ist, direkt als ein einstufiger Seitentabellenzugriff zugegriffen werden kann (Fig. 8) oder indirekt über eine Zwischenseitentabelle als zweistufiger Seitentabellenzugriff (Fig. 9), und weiterhin enthaltend eine Einrichtung (SBR BIT 1) zum Bestimmen, ob der Zugriff ein einstufiger Seitentabellenzugriff oder ein zweistufiger Seitentabellenzugriff ist.

11. System nach Anspruch 10, **gekennzeichnet durch** eine Einrichtung, die für einen einstufigen Seitentabellenzugriff in Ansprache auf eine eingelesene logische Adresse sorgt, wobei die Einrichtung eine auf ein ausgewähltes Feld (SBR) der eingelesenen logischen Adresse ansprechende Einrichtung zum Erhalten einer ersten Adresse, die die Anfangsadresse (PTEO) einer ausgewählten Seitentabelle in der Speichereinrichtung identifiziert, enthält; eine Einrichtung, die auf ein anderes ausgewähltes Feld (einstufige Seitentabelle) der eingelesenen logischen Adresse anspricht, das eine gewählte Verschiebung (PTE OFFSET) von der Anfangsadresse der ausgewählten Seitentabelle repräsentiert, um eine Seitentabelleneintrittsadresse (PTEn) bei der Verschiebung zu schaffen; und eine Einrichtung zum Extrahieren eines ausgewählten Feldes der Seitentabelleneintrittsadresse, das die Speicherzuordnungsdaten für die eingelesene logische Adresse anfordert, und zum Plazieren der Speicherzuordnungsdaten in die Übersetzungsspeichereinrichtung (100) (Fig.9).

12. System nach Anspruch 8, **gekennzeichnet durch** eine Einrichtung, die für einen zweistufigen Seitentabellenzugriff in Ansprache auf eine eingelesene logische Adresse sorgt, wobei die Einrichtung eine auf ein ausgewähltes Feld (SBR) der eingelesenen logischen Adresse ansprechende Einrichtung zum Erhalten einer ersten Adresse (PTEO), die die Anfangsadresse einer ersten ausgewählten Seitentabelle in der Speichereinrichtung identifiziert, enthält; eine Einrichtung, die auf ein anderes ausgewähltes Feld (zweistufige Seitentabelle) der eingelesenen logischen Adresse anspricht, die eine erste gewählte Verschiebung (PTE) von der Anfangsadresse der ersten ausgewählten Seitentabelle repräsentiert, um eine erste Seitentabelleneintrittsadresse (PTE) bei der ersten Verschiebung zu schaffen; eine Einrichtung, die auf ein ausgewähltes Feld (gültige elastische physikalische Adresse) der ersten Seitentabelleneintrittsadresse anspricht zum Erhalten einer zweiten Adresse, die die Anfangsadresse (PTEO) einer zweiten ausgewählten Seitentabelle in der Speichereinrichtung identifiziert, eine Einrichtung, die auf noch ein weiteres Feld (einstufige Seitentabelle) der eingelesenen logischen Adresse anspricht, das eine zweite gewählte Verschiebung von der Anfangsadresse der zweiten ausgewählten Seitentabelle repräsentiert, um eine zweite Seitentabelleneintrittsadresse (PTEn) bei der zweiten Verschiebung zu schaffen und eine Einrichtung zum Extrahieren eines ausgewählten Feldes der zweiten Seitentabelleneintrittsadresse, das die Speicherzuordnungsdaten für die eingelesene logische Adresse repräsentiert und zum Plazieren der Speicherzuordnungsdaten in die Übersetzungsspeichereinrichtung (100) (Fig 9)

13. System nach Anspruch 11 **dadurch gekennzeichnet**, daß die Bits eines weiteren ausgewählten Feldes (BITS 4-12) der eingelesenen logischen Adresse alle null sind wenn ein einstufiger Seitentabellenzugriff für die eingelesene logische Adresse gefordert ist und eine Einrichtung zum Anzeigen eines weiteren Seitentabellenfehlers, wenn die Einstufen- oder Zweistufenseitentabellenbestimmungseinrichtung bestimmt, daß der Seitentabellenzugriff ein einstufiger Zugriff ist und das weitere ausgewählte Feld der eingelesenen logischen Adresse ein oder mehrere von Null verschiedene Bits enthält

14. System nach einem der vorhergehenden Ansprüche bei dem jeder der ersten und zweiten Befehle einen Operationscodeteil (IDRA Fig 12) enthält und in der Lage ist mindestens einen Adreßabstandsteil (IDRB, IDRC) zu enthalten, **gekennzeichnet durch** eine Befehlsprozessoreinrichtung (12), die eine Befehlsdecodierregistereinrichtung (142) enthält mit mindestens zwei Registerbereichen, nämlich einem zum vorübergehenden Speichern des Operationscodeteils (IDRA) eines befehlsbestimmten ersten Bereich und mindestens einen zum vorübergehenden Speichern eines Abstandsteils (IDRB IDRC) bestimmten anderen Bereich, eine Befehlsdecodierschiebeeinrichtung (143), die auf einen einlaufenden ersten oder zweiten Befehl anspricht, um den Befehl in die Befehlsdecodierregistereinrichtung zu schieben bis dessen Operationscodeteil vorübergehend in dem ersten bestimmten Bereich gespeichert

38

ist und dessen Abstandsteil, falls enthalten, vorübergehend in dem (den) anderen bestimmten Bereich(en) gespeichert ist.

15. System nach Anspruch 14, **dadurch gekennzeichnet**, daß die Befehlsprozessoreinrichtung (12) weiter eine Befehlsdecodiereinrichtung (140, 141) zum Decodieren des Operationscodeteils (IDRA) eines dieser von der Befehlsdecodierregistereinrichtung (142) zugeführten Befehls enthält, um eine Anzahl von den decodierten Befehlen zugeordneten Operationscodedescriptoren (OPCD DECR) zu erzeugen, und zum Erzeugen einer Anfangsadresse (STµ AD) eines oder mehrerer dem decodierten Befehl zugeordneter Microbefehle.

16. System nach Anspruch 15, **gekennzeichnet durch** eine Adreßabstandshandhabungseinrichtung (146 Fig. 14), die auf einen Adreßabstandteil (IDRB, IDRC) eines, falls vorhanden, dieser von der Befehlsdecodierregistereinrichtung (142) zugeführten Befehls anspricht, um dem Datenverarbeitungssystem Verschiebungsdaten (DISPO-31) zuzuführen.

17. Datenverarbeitungsystem nach Anspruch 16, **dadurch gekennzeichnet**, daß die Adreßabstandshandhabungseinrichtung (146) eine Erweiterungslogikeinrichtung (SEX AND ZERO/ONES LOGIC) zum Erweitern des Adreßabstandsteils eines dieser zugeführten Befehls um erweiterte Bits, falls notwendig.

18. Datenverarbeitungssystem nach Anspruch 16, **dadurch gekennzeichnet**, daß die Adreßabstandshandhabungseinrichtung (146) eine Vorzeichenerweiterungs- und Nullerweiterungslogikeinrichtung (SEX AND ZERO/ONES EXTEND LOGIC) zum Erweitern des Adreßabstandsteils eines dieser zugeführten Befehls um eine ausgewählte Anzahl von Null-Bits enthält.

19. Datenverarbeitungssystem nach Anspruch 18, **dadurch gekennzeichnet**, daß die Adreßabstandshandhabungseinrichtung (146) eine Vorzeichenerweiterungs- und einer Erweiterungslogikeinrichtung (ZERO/ONES EXTEND AND SEX LOGIC) zum Erweitern des Adreßabstandsteils eines dieser zugeführten Befehls um eine ausgewählte Anzahl von Einer-Bits enthält.

20. Datenverarbeitungssystem nach Anspruch 19, **dadurch gekennzeichnet**, daß die Adreßabstandshandhabungseinrichtung weiter eine Einrichtung (148, 149) enthält, die auf die Adreßabstandsdaten anspricht, zum Zuführen der Daten in Form einer logischen Adresse, um eine Speicherreferenz für das System zu schaffen.

21. Datenverarbeitungssystem nach Anspruch 14 oder 15, **gekennzeichnet durch** eine Befehls-Cache-Speichereinrichtung (130, Fig. 11) zum Speichern einer Anzahl von Befehlen; eine Einrichtung (131, 133) zum Identifizieren, wenn ein angeforderter Befehl in der Befehls-Cache-Speichereinrichtung gespeichert ist, wobei die Befehls-Cache-Speichereinrichtung auf die Adresse eines darin gespeicherten angeforderten Befehls anspricht, wenn die Identifizierungseinrichtung anzeigt, daß der angeforderte Befehl in der Befehls-Cache-Speichereinrichtung abgespeichert ist, um den angeforderten Befehl der Befehlsdecodierschiebeeinrichtung (143) zuzuführen.

22. Datenverarbeitungssystem nach Anspruch 21, **gekenn zeichnet durch** eine Einrichtung (152, 136 134) zum Zugreifen auf den angeforderten Befehl aus einer Hauptspeichereinrichtung (16), wenn die Identifizierungseinrichtung (131, 133) anzeigt, daß der angeforderte Befehl nicht in der Befehls-Cache-Speichereinrichtung gespeichert ist.

23. Datenverarbeitungssystem nach Anspruch 22 **gekennzeichnet durch** eine Einrichtung (135), durch die für einen angeforderten Befehl, auf den aus der Hauptspeichereinrichtung (16) zugegriffen worden ist, ein direkter Übertragungsweg zu Befehlsdecodierschiebeeinrichtung geschaffen wird

24. Datenverarbeitungssystem nach Anspruch 14 oder 15, **dadurch gekennzeichnet**, daß die Befehlsdecodiereinrichtung (140, 141) eine Anordnung von programmierbaren Nur-Lese-Speichern ist.

25. Datenverarbeitungssystem nach Anspruch 24, **dadurch gekennzeichnet**, daß die Befehlsdecodiereinrichtung eine erste programmierbare Nur-Lese-Speichereinrichtung (140) zum Decodieren von Befehlen des Basisbefehlssatzes und eine zweite programmierbare Nur-Lese-Speichereinrichtung (141) zum Decodieren von Befehlen des erweiterten Befehlssatzes enthält.

26. Datenverarbeitungssystem nach Anspruch 25, **dadurch gekennzeichnet**, daß jeder der zu decodierenden Befehle ausgewählte Bitcodekombinationen (BITS 0, 5, 10-15) aufweist zum Identifizieren, ob der Befehl aus dem Basisbefehlssatz oder aus dem erweiterten Befehlssatz stammt, und weiterhin eine Einrichtung (154) enthält zum Überprüfen der ausgewählten Bitcodekombination eines zu decodierenden Befehls, um zu bestimmen, ob der Befehl aus dem Basisbefehlssatz oder dem erweiterten Befehlssatz stammt; und eine Einrichtung (Figs 31-31D), die auf die ausgewählte Bitcodekombination anspricht, zum Freigeben einer ausgewählten von der ersten und der zweiten programmierbaren Nur-Lese-Speichereinrichtung (140 oder 141), um den Befehl zu decodieren, je nachdem ob der zu decodierende Befehl aus dem Basisbefehlssatz oder aus dem erweiterten Befehlssatz stammt.

27. Datenverarbeitungssystem nach Anspruch 26, **dadurch gekennzeichnet**, daß die ausgewählte Bitcodekombination eine 1 im Bit 0 und 1001 in den Bits 12-15 des Befehls für ausgewählte Befehle aus dem erweiterten Befehlssatz enthält (Figs 31-31D).

28. Datenverarbeitungssystem nach Anspruch 26, **dadurch gekennzeichnet**, daß die ausgewählte Bitcodekombination eine 1 im Bit 0 und 011000 in den Bits 10-15 des Befehls für andere ausgewählte Befehle aus dem erweiterten Befehlssatz enthält (Figs 31-31D)

29. Datenverarbeitungssystem nach Anspruch 26, **dadurch gekennzeichnet**, daß die ausgewählte Bitcodekombination eine 1 im Bit 0, eine 0 im Bit 5 und 111000 in den Bits 10-15 des Befehls für noch andere ausgewählte Befehle aus dem erweiterten Befehlssatz enthält (Figs 31-31D).

30. Datenverarbeitungssystem nach Anspruch 26, **dadurch gekennzeichnet**, daß die ausgewählte Bitcodekombination 0 im Bit 0 und 1000 in den Bits 12-15 der Befehle für ausgewählte Befehle aus dem Basisbefehlssatz enthält (Figs 31-31D).

FIG. 1

EP 0 149 858 B1

FIG.2

SYSTEM CACHE 17

EP 0 149 858 B1

FIG. 3

FIG. 4

A MODULE OF MAIN MEMORY 16

ATU
FIG. 5

FIG.6

ATU 3

FIG. 7

LOGICAL WORD ADDRESS

FIG. 8

FIG. 9

FIG.10

EP 0 149 858 B1

FIG.11

FIG.12

FIG.13

PHY ICP CLK ─

CPA 8-21 ─── PICP TRANSLATION REGISTER `152` ──● PHY ICP 8-21

ICP 22-28 ──┐
ICPX 28,29,30 ──┐
DRV CPA ──┘
CPA 8-30 (TO SYSTEM CACHE)

`151`

ICP 28,29,30 ───
IFETCH ───
M DATA RDY ───
JM CLK ───
TEST ICN ───
IPRST ───

FETCH REQUEST CONTROL

VLD STORE CONTROL

BY PASS VLD

INH VLD SV

SET ONE

## FIG.14

(FROM ICACHE POINTER) ── ICP 27-30 ──▶ ICACHE DATA STORE ADDRESS INPUT ──▶ ADR 27-30 (TO ICACHE DATA STORE)

(FROM PRE-FETCH CONTROL) ── ICPX 28-30 ──▶

INC ICP

(FROM PC + DISP LATCH & DRIVERS)
LA 24-30

ENB INC

ICP-LA

ICP 4-23 ─── ICP LA DRIVER LOGIC ──● LA 4-23

ICACHE POINTER LOGIC `150` ──● ICP 4-30

LA 4-30

SYS CLK ───

LD

LD ICP ───

## FIG.15.

ICACHE DATA STORE 130

FIG. 16

FIG. 16 A

FIG. 16 B

EP 0 149 858 B1

FIG. 16 C

EP 0 149 858 B1

ICACHE DATA STORE ADDRESS INPUT

FIG. 17

CPM REGISTER 134

FIG. 18

FIG. 18 A

FIG. 18B

TO FIG 18C

FIG. 18C

EP 0 149 858 B1

ICACHE VALIDITY STORE 132

FIG. 19

FIG. 20

COMPARATOR 133 AND SET IDR VALID

FIG. 21

INSTRUCTION DECODE
REGISTER (IDR)
SHIFTER 143

FIG. 22

EP 0 149 858 B1

FIG. 22A

FIG. 22B

FIG. 22C

EP 0 149 858 B1

FIG. 23

71

FIG. 23A

EP 0 149 858 B1

FIG. 23 B

EP 0 149 858 B1

IDR CLK A

| | | |
|---|---|---|
| FA9A0—13 | CLK | 12—ICRA0 |
| FA9A1—18 | | 19—IORA1 |
| FA8A2—14 | | 15—IORA2 |
| FA8A3—17 | | 16—IORA3 |
| FA8A4—3 | | 2—IORA4 |
| FA8A5—7 | | 6—IORA5 |
| FA8A6—4 | | 5—IORA6 |
| FA8A7—8 | | 9—IORA7 |

| | | |
|---|---|---|
| FA8A8—13 | CLK | 12—IDRA8 |
| FA8A9—14 | | 15—IDRA9 |
| FA8A10—17 | | 16—IDRA10 |
| FA8A11—18 | | 19—IORA11 |
| FA9A12—3 | | 2—IORA12 |
| FA8A13—4 | | 5—IORA13 |
| FA8A14—7 | | 6—IORA14 |
| FA8A15—8 | | 9—IORA15 |

IDR CLK B

| | | |
|---|---|---|
| FA8B0—3 | CLK | 2—IORB0 |
| FA8B1—18 | | 19—IORB1 |
| FA8B2—4 | | 5—IORB2 |
| FA8B3—17 | | 16—IORB3 |
| FA8B4—8 | | 9—IORB4 |
| FA8B5—14 | | 15—IORB5 |
| FA8B6—7 | | 6—IORB6 |
| FA8B7—13 | | 12—IORB7 |

| | | |
|---|---|---|
| FA8B8—3 | CLK | 2—IORB8 |
| FA8B9—18 | | 19—IORB9 |
| FA8B10—4 | | 5—IORB10 |
| FA8B11—17 | | 16—IORB11 |
| FA8B12—8 | | 9—IORB12 |
| FA8B13—14 | | 15—IORB13 |
| FA8B14—7 | | 6—IORB14 |
| FA8B15—13 | | 12—IORB15 |

IDR CLK C

| | | |
|---|---|---|
| FA8C0—3 | CLK | 2—IORC0 |
| FA8C1—18 | | 19—IORC1 |
| FA8C2—4 | | 5—IORC2 |
| FA8C3—17 | | 16—IORC3 |
| FA8C4—7 | | 6—IORC4 |
| FA9C9—13 | | 12—IORC5 |
| FA9C6—8 | | 9—IORC6 |
| FA8C7—14 | | 15—IORC7 |

| | | |
|---|---|---|
| FA8C8—3 | CLK | 2—IORD0 |
| FA8C9—18 | | 19—ICRD9 |
| FA8C10—4 | | 5—IORD10 |
| FA8C11—17 | | 16—IORD11 |
| FA8C12—7 | | 6—IORD12 |
| FA8C13—13 | | 12—IORD13 |
| FA8C14—8 | | 9—IORD14 |
| FA8C15—14 | | 15—IORD15 |

INSTRUCTION
DECODE
REGISTER 142

FIG. 24

EP 0 149 858 B1

ICACHE POINTER LOGIC

FIG. 25

FIG. 25A

ICP LA DRIVER LOGIC

FIG. 26

77

I. P. PREFETCH REQUEST CONTROL LOGIC

*FIG. 27*

EP 0 149 858 B1

I. P. PHYS. TRANSLATION REGISTER 152

*FIG. 28*

ICACHE CONTROL LOGIC

FIG. 29

EP 0 149 858 B1

FIG. 29A

EP 0 149 858 B1

DRIVER
(FROM CPD BUS)

## FIG. 30

82

INSTRUCTION
PRE-DECODE LOGIC
*FIG. 31*

FIG. 3/A

FIG. 3/B

FIG. 31C

FIG. 31D

DECODE PROMS 140 AND 141

FIG. 32

FIG. 32A

FIG. 32B

FIG. 32C

FIG. 32D

FIG. 32E

STμAD LOAD CONTROL 145

FIG. 33

EP 0 149 858 B1

94

FIG. 33A

EP 0 149 858 B1

IP CLK —

ADD1 —

13

IP NOSTP —

BKP TRM

IPARBE —

IPRBT —

FLUSH

44-0

9

8

18T BKP

BKIP —

IP STOP SV —

11

1ST SKP

SKIP — 1

WINDOW — 2

SYSCLKB — 13

12

ALC WNDO

BKIP — 4

FRC HLT — 5

46-T
8780

6

EX XCT — 4

CCP HALT — 5

6

EX EFA — 1

IPARBE — 2

3

INH IPST

IPRBT —

EX EFA — 1

IPOP — 2

DRIVE EFA — 3

DRIVE ALT — 4

PROM J1 — 5

PROM J2 — 6

PROM J3 — 7

8TµA013 — 8

8TµA014 — 9

8TµA015 — 11

16

17
EFA TAKEN

18
8T WAIT

19
S1

12
S2

15
S3

14 BPP
INTRPT

13
NEXT INST

DRIVE ALT —

IP CLK —

1

11

INH IPST — 2

DRIVE ALT — 3

4

IPBT + IPRB — 5

6

INTR PND — 7

IFLUSH ROD — 8

ICAT ROD — 9

14

15
8TµA013

16
8TµA014

17
8TµA015

12
SET ALT

13

18

19

LNOTH NEI —

IPOP —

SKP SV —

FIG. 33B

FIG. 33C

EP 0 149 858 B1

FIG. 33D

EP 0 149 858 B1

FIG. 33E

DISPLACEMENT LOGIC
FIG. 34

FIG. 34A

FROM FIG 34

EP 0 149 858 B1

101

DISPLACEMENT MUX

FIG. 35

EP 0 149 858 B1

FIG. 35A

FIG. 35 B

FIG. 35C

SEX LOGIC

FIG. 36

ZERO/ONES EXTEND LOGIC

FIG. 37

DISPLACEMENT/INCREMENT BUFFER

FIG. 38

FIG. 38A

EP 0 149 858 B1

DRV DISP

J1-20
J1-21
J1-24
J1-23
J1-26
J1-27
J1-30
J1-29

DISP0
DISP1
DISP2
DISP3
DISP4
DISP5
DISP6
DISP7

$\overline{CPD0}$
$\overline{CPD1}$
$\overline{CPD2}$
$\overline{CPD3}$
$\overline{CPD4}$
$\overline{CPD5}$
$\overline{CPD6}$
$\overline{CPD7}$

J1-32
J1-33
J1-36
J1-35
J1-38
J1-39
J2-6
J2-5

DISP8
DISP9
DISP10
DISP11
DISP12
DISP13
DISP14
DISP15

$\overline{CPD8}$
$\overline{CPD9}$
$\overline{CPD10}$
$\overline{CPD11}$
$\overline{CPD12}$
$\overline{CPD13}$
$\overline{CPD14}$
$\overline{CPD15}$

TO FIG 39A

DISPLACEMENT LATCH AND
DRIVERS 153

FIG. 39

FIG. 39A

111

EP 0 149 858 B1

PC REGISTER 147 AND
CPD BUS DRIVERS

FIG. 40

EP 0 149 858 B1

FIG. 40A

113

FIG. 40 B

ADDER 148
FIG. 41

FIG. 41A

FIG. 41B

TO FIG. 41C

TO FIG. 41C

EP 0 149 858 B1

FIG. 41C

PC AND DISP LATCHES AND DRIVERS 149

FIG. 42

FIG. 42A

PC CLOCK LOGIC

*FIG. 43*

EP 0 149 858 B1

INSTRUCTION PROCESSOR TIMING AND CONTROL LOGIC

FIG. 44

FIG. 44 A

123

FIG. 44 B

FIG. 44C

EP 0 149 858 B1

INH IP MBT ———13

STRT PND ———12

——11 CCP CPA OFF ——12

13

——11 TO FIG. 45 A

25-J

INH IP MST O———B28 —1 P INH IP MBT

BYBCLKA———1

IFETCH———2

CPBUSY O—B9 3

4

IPRST———5

CPWAIT O—B11 6

ICMOD O—B13 7

PHABE———8

IPST+CN———9

INH ICH RO———B 10

——14 STRT VLD

——15 IP RT

——16 IPST PND

——17 STRT PND

——12 ENB CPM

——13 STMEM

——18

——19

CCP LD CPM———

ICMODX———

SYSTEM CACHE INTERFACE LOGIC

FIG. 45

EP 0 149 858 B1

126

FIG. 45A

FROM FIG 45

STMEM

ICP22
ICP23
ICP24
ICP25
ICP26
ICP27

PHY ICP8
PHY ICP9
PHY ICP10
PHY ICP11
PHY ICP12
PHY ICP13

CCP CPA OFF
IP RT

B13 CPSTART
B74 ICACHE
B67 CMODE0
B19 CPRT

B55 CPA22
B57 CPA23
B59 CPA24
B59 CPA25
B60 CPA26
B61 CPA27

B21 CPA8
B23 CPA9
B27 CPA10
B29 CPA11
B31 CPA12
B33 CPA13

TO FIG 45B

TO FIG. 45B

EP 0 149 858 B1

127

ICPX28 — 6
5 B62 CPA28

ICPX29 — 6
5 B63 CPA29

ICPX30 — 1
3 B64 CPA30

PHY ICP14 — 6
5 B35 CPA14

PHY ICP15 — 1
3 B37 CPA15

PHY ICP16 — 1
3 B41 CPA16

PHY ICP17 — 6
5 B43 CPA17

PHY ICP18 — 6
5 B45 CPA18

PHY ICP19 — 6
5 B47 CPA19

PHY ICP20 — 1
3 B49 CPA20

PHY ICP21 — 1
3 B51 CPA21

FIG. 45B

EP 0 149 858 B1

128

FIG. 45C

FIG. 45D

FIG. 46